(19) Europäisches Patentamt / European Patent Office / Office européen des brevets

(11) **EP 4 629 543 A1**

(12) **EUROPEAN PATENT APPLICATION**
published in accordance with Art. 153(4) EPC

(43) Date of publication:
08.10.2025 Bulletin 2025/41

(21) Application number: 23909902.1

(22) Date of filing: 29.11.2023

(51) International Patent Classification (IPC):
*H04L 5/00* (2006.01)

(52) Cooperative Patent Classification (CPC):
H04L 5/00; H04W 72/044; H04W 72/0453;
H04W 72/20

(86) International application number:
PCT/CN2023/135132

(87) International publication number:
WO 2024/139972 (04.07.2024 Gazette 2024/27)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 30.12.2022 CN 202211729877

(71) Applicant: Huawei Technologies Co., Ltd.
Shenzhen, Guangdong 518129 (CN)

(72) Inventors:
• CAI, Shijie
Shenzhen, Guangdong 518129 (CN)
• LIAN, Jin
Shenzhen, Guangdong 518129 (CN)
• LIU, Xianda
Shenzhen, Guangdong 518129 (CN)
• LIU, Kunpeng
Shenzhen, Guangdong 518129 (CN)

(74) Representative: Maiwald GmbH
Engineering
Elisenhof
Elisenstrasse 3
80335 München (DE)

(54) **REFERENCE SIGNAL TRANSMISSION METHOD AND COMMUNICATION APPARATUS**

(57) Embodiments of this application provide a reference signal transmission method and a communication apparatus. The method includes: A terminal device determines a first reference signal resource set, where the first reference signal resource set includes $N^s$ reference signal ports, the first reference signal resource set is used to determine a first channel, the first channel is used to determine a second channel, the first channel is a channel corresponding to $N^s$ antennas of the terminal device, and the second channel is a channel corresponding to $N^{s'}$ antennas of the terminal device other than the $N^s$ antennas. According to this application, channels corresponding to all antennas of the terminal device may be determined based on a transmitted reference signal when resources used to transmit the reference signal are reduced.

FIG. 2

## Description

This application claims priority to Chinese Patent Application No. 202211729877.5, filed on December 30, 2022 and entitled "REFERENCE SIGNAL TRANSMISSION METHOD AND COMMUNICATION APPARATUS", which is incorporated herein by reference in its entirety.

## TECHNICAL FIELD

Embodiments of this application relate to the communication field, and more specifically, to a reference signal transmission method and an apparatus.

## BACKGROUND

In a time division duplexing (time division duplexing, TDD) mode, uplink and downlink of a radio channel have reciprocity. A network device receives a sounding reference signal (sounding reference signal, SRS) sent by a terminal device to perform channel estimation, obtains uplink channel state information (channel state information, CSI), and then obtains downlink CSI based on the uplink and downlink reciprocity.

However, because a time-frequency resource allocated to the SRS is fixed, as a quantity of terminal devices and a quantity of antennas of the terminal devices in a network increase, a problem of insufficient SRS resources occurs. Consequently, channel estimation performance is affected, a downlink precoding capability is deteriorated, and finally a network throughput is reduced.

## SUMMARY

Embodiments of this application provide a reference signal transmission method, to reduce resources used to transmit a reference signal without affecting determining of channels corresponding to all antennas of a terminal device.

According to a first aspect, a reference signal transmission method is provided. The method may be performed by a terminal device, or may be performed by a chip, a chip system, or a circuit in the terminal device. This is not limited in this application.

The method includes: A terminal device determines a first reference signal resource set, where the first reference signal resource set includes $N^s$ reference signal ports, the first reference signal resource set is used to determine a first channel, the first channel is used to determine a second channel, the first channel is a channel corresponding to $N^s$ antennas of the terminal device, the second channel is a channel corresponding to $N^{s'}$ antennas of the terminal device other than the $N^s$ antennas, and both $N^s$ and $N^{s'}$ are positive integers.

Based on the foregoing technical solution, the first reference signal resource set determined by the terminal device includes the $N^s$ reference signal ports. Compared with a reference signal resource set that includes $N^r$ reference signal ports, the first reference signal resource set includes fewer reference signal resources. Therefore, resources used to transmit a reference signal can be reduced.

In addition, the first reference signal resource set is used to determine the first channel corresponding to the $N^s$ antennas of the terminal device, and the second channel corresponding to the $N^{s'}$ antennas of the terminal device may be further determined based on the first channel. When the second channel is determined, it is equivalent to describing that a channel corresponding to $N^r$ antennas of the terminal device may be determined. In other words, according to the solution provided in this application, even if the reference signal is transmitted by using fewer reference signal resources, the channel corresponding to the $N^r$ antennas of the terminal device may be determined.

With reference to the first aspect, in some implementations of the first aspect, the method further includes: The terminal device sends first indication information to a network device, where the first indication information is used to determine first information, the first information and the first channel are used to determine the second channel, and the first information includes one or more of the following: auto-correlation information of the first channel, auto-correlation information of the second channel, or cross-correlation information of the first channel and the second channel.

Based on the foregoing technical solution, the terminal device indicates the first information to the network device, and the network device may determine the second channel with reference to the first information and the first channel.

With reference to the first aspect, in some implementations of the first aspect, the auto-correlation information is at least one auto-correlation matrix, where one of the at least one auto-correlation matrix corresponds to one or more of $N^t$ antennas of the network device, and corresponds to all or a part of $N^f$ frequency domain units or $N^f$ delays, the $N^f$ frequency domain units or the $N^f$ delays correspond to a reporting bandwidth, and the reporting bandwidth is a reference signal bandwidth; one of the at least one auto-correlation matrix corresponds to one or more of $N^t$ beams, and corresponds to all or a part of the $N^f$ frequency domain units or the $N^f$ delays, and the $N^t$ beams correspond to the $N^t$ antennas; one of the at least one auto-correlation matrix corresponds to one or more of the $N^f$ frequency domain units, and corresponds to all or a part of the $N^t$ antennas or the $N^t$ beams; or one of the at least one auto-correlation matrix corresponds to one or more of the $N^f$ delays, and corresponds to all or a part of the $N^t$ antennas or the $N^t$ beams.

With reference to the first aspect, in some implementations of the first aspect, the auto-correlation information of the first channel is at least one auto-correlation matrix whose size is $N^s*N^s$, and the auto-correlation information of the second channel is at least one auto-correlation matrix whose size is $N^{s'}*N^{s'}$.

For example, if one of the at least one auto-correlation matrix corresponds to one of the $N^t$ antennas of the network device, and corresponds to all or a part of the $N^f$ frequency domain units or the $N^f$ delays, the auto-correlation information of the first channel is at least one auto-correlation matrix whose size is $N^s*N^s$, and the auto-correlation information of the second channel is at least one auto-correlation matrix whose size is $N^{s'}*N^{s'}$.

For example, if one of the at least one auto-correlation matrix corresponds to one of the $N^t$ beams, and corresponds to all or a part of the $N^f$ frequency domain units or the $N^f$ delays, the auto-correlation information of the first channel is at least one auto-correlation matrix whose size is $N^s*N^s$, and the auto-correlation information of the second channel is at least one auto-correlation matrix whose size is $N^{s'}*N^{s'}$.

For example, if one of the at least one auto-correlation matrix corresponds to one of the $N^f$ frequency domain units, and corresponds to all or a part of the $N^t$ antennas or the $N^t$ beams, the auto-correlation information of the first channel is at least one auto-correlation matrix whose size is $N^s*N^s$, and the auto-correlation information of the second channel is at least one auto-correlation matrix whose size is $N^{s'}*N^{s'}$.

For example, if one of the at least one auto-correlation matrix corresponds to one of the $N^f$ delays, and corresponds to all or a part of the $N^t$ antennas or the $N^t$ beams, the auto-correlation information of the first channel is at least one auto-correlation matrix whose size is $N^s*N^s$, and the auto-correlation information of the second channel is at least one auto-correlation matrix whose size is $N^{s'}*N^{s'}$.

With reference to the first aspect, in some implementations of the first aspect, the first indication information includes one or more of the following: all elements of one or more of the at least one auto-correlation matrix, elements of an upper triangular part of one or more of the at least one auto-correlation matrix, or elements of a lower triangular part of one or more of the at least one auto-correlation matrix.

Based on the foregoing technical solution, because the auto-correlation matrix has conjugate symmetry, when the first indication information includes elements of an upper triangular part or elements of a lower triangular part of the auto-correlation matrix, the network device may determine the auto-correlation matrix based on the first indication information. In addition, the first indication information includes some elements of the auto-correlation matrix, so that signaling overheads can be reduced.

With reference to the first aspect, in some implementations of the first aspect, the cross-correlation information is at least one cross-correlation matrix, where one of the at least one cross-correlation matrix corresponds to one or more of $N^t$ antennas of the network device, and corresponds to all or a part of $N^f$ frequency domain units or $N^f$ delays, the $N^f$ frequency domain units or the $N^f$ delays correspond to a reporting bandwidth, and the reporting bandwidth is a reference signal bandwidth; one of the at least one cross-correlation matrix corresponds to one or more of $N^t$ beams, and corresponds to all or a part of the $N^f$ frequency domain units or the $N^f$ delays, and the $N^t$ beams correspond to the $N^t$ antennas; one of the at least one cross-correlation matrix corresponds to one or more of the $N^f$ frequency domain units, and corresponds to all or a part of the $N^t$ antennas or the $N^t$ beams; or one of the at least one cross-correlation matrix corresponds to one or more of the $N^f$ delays, and corresponds to all or a part of the $N^t$ antennas or the $N^t$ beams.

With reference to the first aspect, in some implementations of the first aspect, the cross-correlation information of the first channel and the second channel is at least one cross-correlation matrix whose size is $N^s*N^{s'}$; or the cross-correlation information of the first channel and the second channel is at least one cross-correlation matrix whose size is $N^{s'}*N^s$,

For example, if one of the at least one cross-correlation matrix corresponds to one of the $N^t$ antennas of the network device, and corresponds to all or a part of the $N^f$ frequency domain units or the $N^f$ delays, the cross-correlation information is at least one cross-correlation matrix whose size is $N^s*N^{s'}$ or $N^{s'}*N^s$,

For example, if one of the at least one cross-correlation matrix corresponds to one of the $N^t$ beams, and corresponds to all or a part of the $N^f$ frequency domain units or the $N^f$ delays, the cross-correlation information is at least one cross-correlation matrix whose size is $N^s*N^{s'}$ or $N^{s'}*N^s$.

For example, if one of the at least one cross-correlation matrix corresponds to one of the $N^f$ frequency domain units, and corresponds to all or a part of the $N^t$ antennas or the $N^t$ beams, the cross-correlation information is at least one cross-correlation matrix whose size is $N^s*N^{s'}$ or $N^{s'}*N^s$.

For example, if one of the at least one cross-correlation matrix corresponds to one of the $N^f$ delays, and corresponds to all or a part of the $N^t$ antennas or the $N^t$ beams, the cross-correlation information is at least one cross-correlation matrix whose size is $N^s*N^{s'}$ or $N^{s'}*N^s$,

With reference to the first aspect, in some implementations of the first aspect, the first indication information includes all elements of the at least one cross-correlation matrix.

With reference to the first aspect, in some implementations of the first aspect, the method further includes: The terminal device determines a second reference signal resource set, where the second reference signal resource set is used to determine a third channel, the third channel is a channel corresponding to $N^r$ antennas of the terminal device, the $N^r$ antennas include the $N^s$ antennas, the second reference signal resource set includes $N^r$ reference signal ports, the $N^r$ reference signal ports include the $N^s$ reference signal ports, $N^r$ is a positive integer, and $N^r > N^s$. The terminal device sends second indication information to a network device, where the second indication information indicates a correspondence between the $N^s$ reference signal ports and the $N^r$ reference signal ports.

It should be noted that before determining the first reference signal resource set, the terminal device determines a third reference signal resource set. Correspondingly, before determining the first reference signal resource set, the network device determines the third reference signal resource set. Further, after determining the first channel based on the first reference signal resource set and determining the third channel based on the third reference signal resource set, the network device may remove, from a channel matrix of the third channel based on the correspondence between the $N^s$ reference signal ports and the $N^r$ reference signal ports, rows corresponding to the $N^s$ reference signal ports, to obtain a channel matrix of the second channel estimated for the first time. Further, the network device may determine the auto-correlation information of the first channel based on a channel matrix of the first channel, and determine the cross-correlation information of the first channel and the second channel based on the channel matrix of the first channel and the channel matrix of the second channel. Further, the network device may determine, based on the auto-correlation information of the first channel, the cross-correlation information of the first channel and the second channel, and the first channel, the second channel estimated for the second time.

With reference to the first aspect, in some implementations of the first aspect, the method further includes: The terminal device determines a second reference signal resource set, where the second reference signal resource set is used to determine a third channel, the third channel is a channel corresponding to $N^r$ antennas of the terminal device, the $N^r$ antennas include the $N^s$ antennas, the second reference signal resource set includes $N^r$ reference signal ports, the $N^r$ reference signal ports include the $N^s$ reference signal ports, $N^r$ is a positive integer, and $N^r > N^s$. The terminal device determines a correspondence between the $N^s$ reference signal ports and the $N^r$ reference signal ports in a predefined manner, where the predefined manner includes one or more of the following: determining the correspondence based on cyclic shifts of reference signals of the $N^s$ reference signal ports and cyclic shifts of reference signals of the $N^r$ reference signal ports; or determining the correspondence based on a frequency domain resource used to carry reference signals of the $N^s$ reference signal ports and a frequency domain resource used to carry reference signals of the $N^r$ reference signal ports.

With reference to the first aspect, in some implementations of the first aspect, the first channel and the correspondence between the $N^s$ reference signal ports and the $N^r$ reference signal ports are used to determine the second channel.

With reference to the first aspect, in some implementations of the first aspect, the method further includes: The terminal device sends third indication information to the network device, where the third indication information indicates one or more of the following information: a quantity of reference signal resources included in the first reference signal resource set; or a quantity of reference signal ports included in each reference signal resource in the first reference signal resource set.

With reference to the first aspect, in some implementations of the first aspect, $N^s=4$, the terminal device is a 4T8R device, and the third indication information indicates one or more of the following information: a quantity M of reference signal resources included in the first reference signal resource set is equal to 1; a reference signal resource in the first reference signal resource set includes four reference signal ports; a quantity M of reference signal resources included in the first reference signal resource set is equal to 2; two reference signal resources in the first reference signal resource set respectively include three reference signal ports and one reference signal port; two reference signal resources in the first reference signal resource set respectively include two reference signal ports and two reference signal ports; or two reference signal resources in the first reference signal resource set respectively include one reference signal port and three reference signal ports.

With reference to the first aspect, in some implementations of the first aspect, the method further includes: The terminal device determines a third reference signal resource set, where the third reference signal resource set is used to determine the channel corresponding to the $N^r$ antennas of the terminal device, the $N^r$ antennas include the $N^s$ antennas, $N^r$ is a positive integer, and $N^r > N^s$. The terminal device receives fourth indication information from the network device, where the fourth indication information indicates the reference signal ports corresponding to the $N^s$ antennas, and the fourth indication information is determined based on the third reference signal resource set. The terminal device determines the $N^s$ antennas based on the fourth indication information.

With reference to the first aspect, in some implementations of the first aspect, the method further includes: The terminal device sends fifth indication information to the network device, where the fifth indication information indicates one or more of the following information: virtual terminal devices respectively corresponding to the $N^s$ reference signal ports included in the first reference signal resource set; virtual terminal devices respectively corresponding to $N^{s'}$ reference signal ports other than the $N^s$ reference signal ports included in the first reference signal resource set; or virtual terminal devices respectively corresponding to the $N^r$ reference signal ports included in the second reference signal resource set, where the second reference signal resource set is used to determine the third channel, and the third channel is the channel corresponding to the $N^r$ antennas of the terminal device.

According to a second aspect, a reference signal transmission method is provided. The method may be performed by a network device, or may be performed by a chip, a chip system, or a circuit in the network device. This is not limited in this application.

The method includes: A network device determines a first reference signal resource set, where the first reference signal resource set includes $N^s$ reference signal ports. The network device determines a first channel based on the first reference signal resource set, where the first channel is a channel corresponding to $N^s$ antennas of a terminal device. The network device determines a second channel based on the first channel, where the second channel is a channel corresponding to $N^{s'}$ antennas of the terminal device other than the $N^s$ antennas, and both $N^s$ and $N^{s'}$ are positive integers.

For beneficial effects of the second aspect and the implementations of the second aspect, refer to the descriptions of the first aspect.

With reference to the second aspect, in some implementations of the second aspect, the method further includes: The network device receives first indication information from the terminal device, where the first indication information is used to determine first information, and the first information includes one or more of the following: auto-correlation information of the first channel, an auto-correlation channel of the second channel, or cross-correlation information of the first channel and the second channel. That the network device determines the second channel based on the first channel includes: The network device determines the second channel based on the first information and the first channel.

With reference to the second aspect, in some implementations of the second aspect, the auto-correlation information is at least one auto-correlation matrix, where one of the at least one auto-correlation matrix corresponds to one or more of $N^t$ antennas of the network device, and corresponds to all or a part of $N^f$ frequency domain units or $N^f$ delays, the $N^f$ frequency domain units or the $N^f$ delays correspond to a reporting bandwidth, and the reporting bandwidth is a reference signal bandwidth; one of the at least one auto-correlation matrix corresponds to one or more of $N^t$ beams, and corresponds to all or a part of the $N^f$ frequency domain units or the $N^f$ delays, and the $N^t$ beams correspond to the $N^t$ antennas; one of the at least one auto-correlation matrix corresponds to one or more of the $N^f$ frequency domain units, and corresponds to all or a part of the $N^t$ antennas or the $N^t$ beams; or one of the at least one auto-correlation matrix corresponds to one or more of the $N^f$ delays, and corresponds to all or a part of the $N^t$ antennas or the $N^t$ beams.

With reference to the second aspect, in some implementations of the second aspect, the auto-correlation information of the first channel is at least one auto-correlation matrix whose size is $N^s*N^s$, and the auto-correlation information of the second channel is at least one auto-correlation matrix whose size is $N^{s'}*N^{s'}$.

With reference to the second aspect, in some implementations of the second aspect, the first indication information includes one or more of the following: all elements of one or more of the at least one auto-correlation matrix, elements of an upper triangular part of one or more of the at least one auto-correlation matrix, or elements of a lower triangular part of one or more of the at least one auto-correlation matrix.

With reference to the second aspect, in some implementations of the second aspect, the cross-correlation information is at least one cross-correlation matrix, where one of the at least one cross-correlation matrix corresponds to one or more of $N^t$ antennas of the network device, and corresponds to all or a part of $N^f$ frequency domain units or $N^f$ delays, the $N^f$ frequency domain units or the $N^f$ delays correspond to a reporting bandwidth, and the reporting bandwidth is a reference signal bandwidth; one of the at least one cross-correlation matrix corresponds to one or more of $N^t$ beams, and corresponds to all or a part of the $N^f$ frequency domain units or the $N^f$ delays, and the $N^t$ beams correspond to the $N^t$ antennas; one of the at least one cross-correlation matrix corresponds to one or more of the $N^f$ frequency domain units, and corresponds to all or a part of the $N^t$ antennas or the $N^t$ beams; or one of the at least one cross-correlation matrix corresponds to one or more of the $N^f$ delays, and corresponds to all or a part of the $N^t$ antennas or the $N^t$ beams.

With reference to the second aspect, in some implementations of the second aspect, the cross-correlation information of the first channel and the second channel is at least one cross-correlation matrix whose size is $N^s*N^{s'}$; or the cross-correlation information of the first channel and the second channel is at least one cross-correlation matrix whose size is $N^{s'}*N^s$,

With reference to the second aspect, in some implementations of the second aspect, the first indication information includes all elements of the at least one cross-correlation matrix.

With reference to the second aspect, in some implementations of the second aspect, the method further includes: The network device determines a second reference signal resource set. The network device determines a third channel based on the second reference signal resource set, where the third channel is a channel corresponding to $N^r$ antennas of the terminal device, the $N^r$ antennas include the $N^s$ antennas, the second reference signal resource set includes $N^r$ reference signal ports, the $N^r$ reference signal ports include the $N^s$ reference signal ports, $N^r$ is a positive integer, and $N^r>N^s$. The network device determines a correspondence between the $N^r$ reference signal ports and the $N^s$ reference signal ports. That the network device determines the second channel based on the first channel includes: The network device determines the second channel based on first information and the correspondence.

With reference to the second aspect, in some implementations of the second aspect, that the network device determines the correspondence between the $N^r$ reference signal ports and the $N^s$ reference signal ports includes: The network device receives second indication information from the terminal device, where the second indication information indicates the correspondence between the $N^s$ reference signal ports and the $N^r$ reference signal ports.

With reference to the second aspect, in some implementations of the second aspect, that the network device determines the correspondence between the $N^r$ reference signal ports and the $N^s$ reference signal ports includes: The network device determines the correspondence in a protocol-predefined manner, where the protocol-predefined manner includes one or more of the following: determining the correspondence based on indexes of the $N^s$ reference signal ports and indexes of the $N^r$ reference signal ports; determining the correspondence based on cyclic shifts of reference signals of the $N^s$ reference signal ports and cyclic shifts of reference signals of the $N^r$ reference signal ports; or determining the correspondence based on a frequency domain resource used to carry reference signals of the $N^s$ reference signal ports and a frequency domain resource used to carry reference signals of the $N^r$ reference signal ports.

With reference to the second aspect, in some implementations of the second aspect, the method further includes: The network device receives third indication information from the terminal device, where the third indication information indicates one or more of the following information: a quantity of reference signal resources included in the first reference signal resource set; or a quantity of reference signal ports included in each reference signal resource in the first reference signal resource set.

With reference to the second aspect, in some implementations of the second aspect, $N^s$=4, the terminal device is a 4T8R device, and the third indication information indicates one or more of the following information: a quantity M of reference signal resources included in the first reference signal resource set is equal to 1; a reference signal resource in the first reference signal resource set includes four reference signal ports; a quantity M of reference signal resources included in the first reference signal resource set is equal to 2; two reference signal resources in the first reference signal resource set respectively include three reference signal ports and one reference signal port; two reference signal resources in the first reference signal resource set respectively include two reference signal ports and two reference signal ports; or two reference signal resources in the first reference signal resource set respectively include one reference signal port and three reference signal ports.

With reference to the second aspect, in some implementations of the second aspect, the method further includes: The network device determines a third reference signal resource set, where the third reference signal resource set is used to determine the channel corresponding to the $N^r$ antennas of the terminal device, the $N^r$ antennas include the $N^s$ antennas, $N^r$ is a positive integer, and $N^r$>$N^s$. The network device determines, based on the third reference signal resource set, the reference signal ports corresponding to the $N^s$ antennas. The network device sends fourth indication information to the terminal device, where the fourth indication information indicates the reference signal ports corresponding to the $N^s$ antennas.

With reference to the second aspect, in some implementations of the second aspect, the method further includes: The network device receives fifth indication information from the terminal device, where the fifth indication information indicates one or more of the following information: virtual terminal devices respectively corresponding to the $N^s$ reference signal ports included in the first reference signal resource set; virtual terminal devices respectively corresponding to $N^{s'}$ reference signal ports other than the $N^s$ reference signal ports included in the first reference signal resource set; or virtual terminal devices respectively corresponding to the $N^r$ reference signal ports included in the second reference signal resource set, where the second reference signal resource set is used to determine the third channel, and the third channel is the channel corresponding to the $N^r$ antennas of the terminal device.

According to a third aspect, a reference signal transmission method is provided. The method may be performed by a terminal device, or may be performed by a chip, a chip system, or a circuit in the terminal device. This is not limited in this application.

The method includes: A terminal device determines $N^s$ antennas used to send a first reference signal in $N^r$ antennas, where the first reference signal is used to determine a first channel, the first channel is used to determine a third channel, the first channel is a channel corresponding to the $N^s$ antennas and a network device, the third channel is a channel corresponding to the $N^r$ antennas and the network device, both $N^r$ and $N^s$ are positive integers, and $N^s$<$N^r$. The terminal device sends the first reference signal through the $N^s$ antennas.

Based on the foregoing technical solution, the terminal device may send an uplink reference signal through the $N^s$ antennas in the $N^r$ antennas. Compared with sending an uplink reference signal through the $N^r$ antennas, sending the uplink reference signal through the $N^s$ antennas may use fewer reference signal resources, so that resources used for the reference signal can be reduced.

In addition, the first reference signal is used to determine the first channel corresponding to the $N^s$ antennas of the terminal device, and the third channel corresponding to the $N^r$ antennas of the terminal device may be further determined based on the first channel. In other words, according to the solution provided in this application, even if the reference signal is transmitted by using fewer reference signal resources, the channel corresponding to the $N^r$ antennas of the terminal device may be determined.

With reference to the third aspect, in some implementations of the third aspect, the third channel is determined based on the first channel and a space-domain discrete Fourier transform (discrete Fourier transform, DFT) basis.

With reference to the third aspect, in some implementations of the third aspect, the third channel is determined based on the first channel and an adaptive feature basis set, the adaptive feature basis set includes $N^t$ groups of adaptive feature bases that are in one-to-one correspondence with $N^t$ antennas of the network device, or the adaptive feature basis set includes $N^f$ groups of adaptive feature bases that are in one-to-one correspondence with $N^f$ frequency domain units, the $N^f$ frequency domain units correspond to a reporting bandwidth, a group of adaptive feature bases corresponding to an $(n^t)^{th}$ antenna in the $N^t$ antennas is obtained by the terminal device based on a channel that corresponds to the $(n^t)^{th}$ antenna and the terminal device and that is on the $N^f$ frequency domain units, a group of adaptive feature bases corresponding to an $(n^f)^{th}$ frequency domain unit in the $N^f$ frequency domain units is obtained by the terminal device based on a channel that corresponds to the network device and the terminal device and that is on the $(n^f)^{th}$ frequency domain unit, $N^t$, $N^f$, $n^t$, and $n^f$ are all positive integers, $1 \leq n^t \leq N^t$, and $1 \leq n^f \leq N^f$. The method further includes: The terminal device sends sixth indication information to the network device, where the sixth indication information indicates the adaptive feature basis set.

With reference to the third aspect, in some implementations of the third aspect, the method further includes: The terminal device sends seventh indication information to the network device, where the seventh indication information indicates $N^s$ rows corresponding to $N^s$ reference signal ports in each adaptive feature basis included in the adaptive feature basis set.

With reference to the third aspect, in some implementations of the third aspect, the $N^s$ rows corresponding to the $N^s$ reference signal ports in each adaptive feature basis included in the adaptive feature basis set are first $N^s$ rows of each adaptive feature basis.

With reference to the third aspect, in some implementations of the third aspect, the seventh indication information further indicates polarization directions of antennas corresponding to reference signal ports corresponding to different rows in the $N^s$ rows corresponding to the $N^s$ reference signal ports in each adaptive feature basis.

With reference to the third aspect, in some implementations of the third aspect, that the terminal device determines the $N^s$ antennas used to send the first reference signal in the $N^r$ antennas includes: The terminal device determines a horizontal direction index of an antenna in an $i^{th}$ polarization direction in the $N^s$ antennas based on a first preset set

$$\{c_{i,r_{i,1},n,1} = \log_{\alpha_{i,1}}(d_{i,r_{i,1},n,1} - 1) : d_{i,r_{i,1},n,1} \in C_{i,r_{i,1},1}^{S_{i,1},p_{i,1}-1}, d_{i,r_{i,1},n,1} \neq 1\}, \text{ where}$$

$$C_{i,r_{i,1},1}^{S_{i,1},p_{i,1}-1} = \{d_{i,r_{i,1},n,1} = \alpha_{i,1}^{r_{i,1}}\alpha_{i,1}^{S_{i,1}\cdot n} \bmod p_{i,1} : n = 1,2,...,K_{i,1} - 1\}, \quad K_{i,1} = \lfloor (p_{i,1} - 1)/S_{i,1} \rfloor, \lfloor \ \rfloor \text{ represents a floor}$$

operation, $p_{i,1}$ is a minimum prime number greater than $N_{i,1}^r$, $N_{i,1}^r$ is a quantity of antennas in a horizontal direction in the $i^{th}$ polarization direction in the $N^r$ antennas, $\alpha_{i,1}$ is an original root of $p_{i,1}$, $S_{i,1}$ is a ratio of $N_{i,1}^s$ to $N_{i,1}^r$, $N_{i,1}^s$ is a quantity of antennas in the horizontal direction in the $i^{th}$ polarization direction in the $N^s$ antennas, $r_{i,1}$ is a positive integer, and $0 \leq r_{i,1} < S_{i,1}$. The terminal device determines a vertical direction index of the antenna in the $i^{th}$ polarization direction in the $N^s$ antennas based on a second preset set

$$\{c_{i,r_{i,2},n,2} = \log_{\alpha_{i,2}}(d_{i,r_{i,2},n,2} - 1) : d_{i,r_{i,2},n,2} \in C_{i,r_{i,2},2}^{S_{i,2},p_{i,2}-1}, d_{i,r_{i,2},n,2} \neq 1\}, \text{ where}$$

$$C_{i,r_{i,2},2}^{S_{i,2},p_{i,1}2-1} = \{d_{i,r_{i,2},n,2} = \alpha_{i,2}^{r_{i,2}}\alpha_{i,2}^{S_{i,2}\cdot n} \bmod p_{i,2} : n = 1,2,...,K_{i,2} - 1\}, \quad K_{i,2} = \lfloor (p_{i,2} - 1)/S_{i,2} \rfloor, p_{i,2} \text{ is a mini-}$$

mum prime number greater than $N_{i,2}^r$, $N_{i,2}^r$ is a quantity of antennas in a vertical direction in the $i^{th}$ polarization direction in the $N^r$ antennas, $\alpha_{i,2}$ is an original root of $p_{i,2}$, $S_{i,2}$ is a ratio of $N_{i,2}^s$ to $N_{i,2}^r$, $N_{i,2}^s$ is a quantity of antennas in the vertical direction in the $i^{th}$ polarization direction in the $N^s$ antennas, $r_{i,2}$ is a positive integer, and $0 \leq r_{i,2} < S_{i,2}$.

With reference to the third aspect, in some implementations of the third aspect, the method further includes: The terminal device sends eighth indication information to the network device, where the eighth indication information indicates at least one of the following: a value of $r_{i,1}$, a value of $r_{i,2}$, or indexes of $N^s$ reference signal ports.

Based on the foregoing technical solution, the terminal device sends the eighth indication information to the network device, and the network device may determine the indexes of the $N^s$ reference signal ports based on the eighth indication information. For example, if the eighth indication information indicates the value of $r_{i,1}$ and the value of $r_{i,2}$, the network device may determine the $N^s$ antennas based on the eighth indication information and a preset set, and determine the $N^s$ reference signal ports based on the $N^s$ antennas. For another example, if the eighth indication information indicates the indexes of the $N^s$ reference signal ports, the network device may directly determine the $N^s$ reference signal ports based on the eighth indication information.

With reference to the third aspect, in some implementations of the third aspect, the method further includes: The terminal device receives ninth indication information from the network device, where the ninth indication information indicates at least one of the following: a value of $r_{i,1}$ or a value of $r_{i,2}$.

Based on the foregoing technical solution, the network device sends the ninth indication information to the terminal device, and the terminal device may determine indexes of the $N^s$ antennas based on the ninth indication information and a preset set.

With reference to the third aspect, in some implementations of the third aspect, the method further includes: The terminal device receives tenth indication information from the network device, where the tenth indication information indicates the $N^s$ reference signal ports. That the terminal device determines the $N^s$ antennas used to send the first reference signal in the $N^r$ antennas includes: The terminal device determines the $N^s$ antennas based on the tenth indication information.

With reference to the third aspect, in some implementations of the third aspect, that the terminal device determines the $N^s$ antennas used to send the first reference signal in the $N^r$ antennas includes: The terminal device receives a downlink reference signal from the network device. The terminal device determines, based on the downlink reference signal, the $N^s$ antennas used to send the first reference signal in the $N^r$ antennas.

With reference to the third aspect, in some implementations of the third aspect, the method further includes: The terminal device sends eleventh indication information to the network device, where the eleventh indication information indicates at least one of the following: indexes of the $N^s$ reference signal ports or a direction of arrival.

With reference to the third aspect, in some implementations of the third aspect, that the terminal device determines the $N^s$ antennas used to send the first reference signal in the $N^r$ antennas includes: The terminal device determines that the $N^s$ antennas are antennas corresponding to the $N^s$ reference signal ports corresponding to the first $N^s$ rows of each adaptive feature basis in the adaptive feature basis set.

With reference to the third aspect, in some implementations of the third aspect, the method further includes: The terminal device sends twelfth indication information to the network device, where the twelfth indication information indicates received energy ratios of downlink reference signals received by the terminal device through receive antennas in different polarization directions.

According to a fourth aspect, a reference signal transmission method is provided. The method may be performed by a terminal device, or may be performed by a chip, a chip system, or a circuit in the terminal device. This is not limited in this application.

The method includes: A network device receives a first reference signal from a terminal device, where the first reference signal is sent by the terminal device through $N^s$ antennas in $N^r$ antennas. The network device determines a first channel based on the first reference signal, where the first channel is a channel corresponding to the $N^s$ antennas and the network device. The network device determines a third channel based on the first channel, where the third channel is a channel corresponding to the $N^r$ antennas and the network device, both $N^r$ and $N^s$ are positive integers, and $N^s < N^r$.

For beneficial effects of the fourth aspect and the implementations of the fourth aspect, refer to the descriptions of the third aspect.

With reference to the fourth aspect, in some implementations of the fourth aspect, that the network device determines the third channel based on the first channel includes: The network device determines the third channel based on the first channel and a space-domain DFT basis.

With reference to the fourth aspect, in some implementations of the fourth aspect, the method further includes: The network device receives sixth indication information from the terminal device, where the sixth indication information indicates an adaptive feature basis set, the adaptive feature basis set includes $N^t$ groups of adaptive feature bases that are in one-to-one correspondence with $N^t$ antennas of the network device, or the adaptive feature basis set includes $N^f$ groups of adaptive feature bases that are in one-to-one correspondence with $N^f$ frequency domain units, the $N^f$ frequency domain units correspond to a reporting bandwidth, a group of adaptive feature bases corresponding to an $(n^t)^{th}$ antenna in the $N^t$ antennas is obtained by the terminal device based on a channel that corresponds to the $(n^t)^{th}$ antenna and the terminal device and that is on the $N^f$ frequency domain units, a group of adaptive feature bases corresponding to an $(n^f)^{th}$ frequency domain unit in the $N^f$ frequency domain units is obtained by the terminal device based on a channel that corresponds to the network device and the terminal device and that is on the $(n^f)^{th}$ frequency domain unit, $N^t$, $N^f$, $n^t$, and $n^f$ are all positive integers, $1 \leq n^t \leq N^t$, and $1 \leq n^f \leq N^f$. That the network device determines the third channel based on the first channel includes: The network device determines the third channel based on the first channel and the adaptive basis set.

With reference to the fourth aspect, in some implementations of the fourth aspect, the method further includes: The network device receives seventh indication information from the terminal device, where the seventh indication information indicates $N^s$ rows corresponding to $N^s$ reference signal ports in each adaptive feature basis included in the adaptive feature basis set.

With reference to the fourth aspect, in some implementations of the fourth aspect, the $N^s$ rows corresponding to the $N^s$ reference signal ports in each adaptive feature basis included in the adaptive feature basis set are first $N^s$ rows of each adaptive feature basis.

With reference to the fourth aspect, in some implementations of the fourth aspect, the seventh indication information further indicates polarization directions of antennas corresponding to reference signal ports corresponding to different rows in the $N^s$ rows corresponding to the $N^s$ reference signal ports in each adaptive feature basis.

With reference to the fourth aspect, in some implementations of the fourth aspect, the method further includes: The network device determines a horizontal direction index of an antenna in an $i^{th}$ polarization direction in the $N^s$ antennas based on a first preset set $\{c_{i,r_{i,1},n,1} = \log_{\alpha_{i,1}}(d_{i,r_{i,1},n,1} - 1) : d_{i,r_{i,1},n,1} \in C_{i,r_{i,1},1}^{S_{i,1},p_{i,1}-1}, d_{i,r_{i,1},n,1} \neq 1\}$, where

$$C_{i,r_{i,1},1}^{S_{i,1},p_{i,1}-1} = \{d_{i,r_{i,1},n,1} = \alpha_{i,1}^{r_{i,1}} \alpha_{i,1}^{S_{i,1} \cdot n} \bmod p_{i,1} : n = 1,2,...,K_{i,1} - 1\}$$, $K_{i,1} = \lfloor (p_{i,1} - 1)/S_{i,1} \rfloor$, $\lfloor \rfloor$ represents a floor

operation, $p_{i,1}$ is a minimum prime number greater than $N_{i,1}^r$, $N_{i,1}^r$ is a quantity of antennas in a horizontal direction in the $i^{th}$ polarization direction in the $N^r$ antennas, $\alpha_{i,1}$ is an original root of $p_{i,1}$, $S_{i,1}$ is a ratio of $N_{i,1}^s$ to $N_{i,1}^r$, $N_{i,1}^s$ is a quantity of antennas in the horizontal direction in the $i^{th}$ polarization direction in the $N^s$ antennas, $r_{i,1}$ is a positive integer, and $0 < r_{i,1} < S_{i,1}$. The network device determines a vertical direction index of the antenna in the $i^{th}$ polarization direction in the $N^s$ antennas based on a second preset set

$$\{c_{i,r_{i,2},n,2} = \log_{\alpha_{i,2}}(d_{i,r_{i,2},n,2} - 1) : d_{i,r_{i,2},n,2} \in C_{i,r_{i,2},2}^{S_{i,2},p_{i,2}-1}, d_{i,r_{i,2},n,2} \neq 1\}$$, where

$$C_{i,r_{i,2},2}^{S_{i,2},p_{i,1}2-1} = \{d_{i,r_{i,2},n,2} = \alpha_{i,2}^{r_{i,2}} \alpha_{i,2}^{S_{i,2} \cdot n} \bmod p_{i,2} : n = 1,2,...,K_{i,2} - 1\}$$, $K_{i,2} = \lfloor (p_{i,2} - 1)/S_{i,2} \rfloor$, $p_{i,2}$ is a minimum prime number greater than $N_{i,2}^r$, $N_{i,2}^r$ is a quantity of antennas in a vertical direction in the $i^{th}$ polarization direction in the $N^r$ antennas, $\alpha_{i,2}$ is an original root of $p_{i,2}$, $S_{i,2}$ is a ratio of $N_{i,2}^s$ to $N_{i,2}^r$, $N_{i,2}^s$ is a quantity of antennas in the vertical direction in the $i^{th}$ polarization direction in the $N^s$ antennas, $r_{i,2}$ is a positive integer, and $0 \leq r_{i,2} < S_{i,2}$. That the network device determines the third channel based on the first channel and the space-domain discrete Fourier transform DFT basis includes: The network device determines the third channel based on indexes of the $N^s$ antennas, the first channel, and the space-domain DFT basis.

With reference to the fourth aspect, in some implementations of the fourth aspect, the method further includes: The network device receives eighth indication information sent by the terminal device, where the eighth indication information indicates at least one of the following: a value of $r_{i,1}$, a value of $r_{i,2}$, or $N^s$ reference signal ports.

With reference to the fourth aspect, in some implementations of the fourth aspect, the method further includes: The network device sends ninth indication information to the terminal device, where the ninth indication information indicates at least one of the following: a value of $r_{i,1}$ or a value of $r_{i,2}$.

With reference to the fourth aspect, in some implementations of the fourth aspect, the method further includes: The network device sends tenth indication information to the terminal device, where the tenth indication information indicates $N^s$ reference signal ports.

With reference to the fourth aspect, in some implementations of the fourth aspect, the method further includes: The network device sends a downlink reference signal to the terminal device, where the downlink reference signal is used to determine the $N^s$ antennas used to send an uplink reference signal in the $N^r$ antennas. The network device receives eleventh indication information from the terminal device, where the eleventh indication information indicates at least one of the following: indexes of $N^s$ reference signal ports or a direction of arrival. The network device determines the indexes of the $N^s$ reference signal ports based on the eleventh indication information. That the network device determines the third channel based on the first channel and the space-domain DFT basis includes: The network device determines the third channel based on the indexes of the $N^s$ reference signal ports, the first channel, and the space-domain DFT basis.

With reference to the fourth aspect, in some implementations of the fourth aspect, the method further includes: The network device sends a downlink reference signal to the terminal device, where the downlink reference signal is used to determine the $N^s$ antennas used to send an uplink reference signal in the $N^r$ antennas.

With reference to the fourth aspect, in some implementations of the fourth aspect, the method further includes: The network device receives twelfth indication information sent by the terminal device, where the twelfth indication information indicates received energy ratios of downlink reference signals received by the terminal device through receive antennas in different polarization directions. That the network device determines the third channel based on the first channel includes: The network device determines the third channel based on the first channel and the received energy ratio.

According to a fifth aspect, a communication apparatus is provided. The communication apparatus has a function of implementing the method in any one of the first aspect or the possible implementations of the first aspect. The function may be implemented by hardware, or may be implemented by hardware executing corresponding software. The hardware or the software includes one or more units corresponding to the function.

According to a sixth aspect, a communication apparatus is provided. The communication apparatus has a function of implementing the method in any one of the second aspect or the possible implementations of the second aspect. The function may be implemented by hardware, or may be implemented by hardware executing corresponding software. The hardware or the software includes one or more units corresponding to the function.

According to a seventh aspect, a communication apparatus is provided. The communication apparatus has a function of implementing the method in any one of the third aspect or the possible implementations of the third aspect. The function may be implemented by hardware, or may be implemented by hardware executing corresponding software. The hardware or the software includes one or more units corresponding to the function.

According to an eighth aspect, a communication apparatus is provided. The communication apparatus has a function of implementing the method in any one of the fourth aspect or the possible implementations of the fourth aspect. The function may be implemented by hardware, or may be implemented by hardware executing corresponding software. The hardware or the software includes one or more units corresponding to the function.

According to a ninth aspect, an apparatus is provided, and includes a processor. The processor is coupled to a memory, and may be configured to execute instructions in the memory, to implement the method in any one of the first aspect or the possible implementations of the first aspect, or implement the method in any one of the third aspect or the possible implementations of the third aspect. Optionally, the apparatus further includes the memory. Optionally, the apparatus further includes a communication interface, and the processor is coupled to the communication interface.

In an implementation, the apparatus is a terminal device. When the apparatus is the terminal device, the communication interface may be a transceiver or an input/output interface.

In another implementation, the apparatus is a chip or a chip system configured in a terminal device. When the apparatus is the chip configured in the terminal device, the communication interface may be an input/output interface. The chip system includes at least one chip, and may further include another circuit structure and/or a discrete device.

Optionally, the transceiver may be a transceiver circuit. Optionally, the input/output interface may be an input/output circuit.

According to a tenth aspect, a communication apparatus is provided, and includes a processor. The processor is coupled to a memory, and may be configured to execute instructions in the memory, to implement the method in any one of the second aspect or the possible implementations of the second aspect, or implement the method in any one of the fourth aspect or the possible implementations of the fourth aspect. Optionally, the apparatus further includes the memory. Optionally, the apparatus further includes a communication interface, and the processor is coupled to the communication interface.

In an implementation, the apparatus is a network device. When the apparatus is the network device, the communication interface may be a transceiver or an input/output interface.

In another implementation, the apparatus is a chip or a chip system configured in a network device. When the apparatus is the chip configured in the network device, the communication interface may be an input/output interface. The chip system includes at least one chip, and may further include another circuit structure and/or a discrete device.

Optionally, the transceiver may be a transceiver circuit. Optionally, the input/output interface may be an input/output circuit.

According to an eleventh aspect, this application provides a processor, including an input circuit, an output circuit, and a processing circuit. The processing circuit is configured to receive a signal through the input circuit and transmit a signal through the output circuit, so that the processor performs the methods in the foregoing aspects.

In a specific implementation process, the processor may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and various circuits are not limited in this embodiment of this application.

According to a twelfth aspect, this application provides a processing apparatus, including a communication interface and a processor. The communication interface is coupled to the processor. The communication interface is configured to input and/or output information. The information includes at least one of instructions or data. The processor is configured to execute a computer program, so that the processing apparatus performs the methods in the foregoing aspects.

According to a thirteenth aspect, this application provides a processing apparatus, including a processor and a memory. The processor is configured to read instructions stored in the memory, receive a signal through a receiver, and transmit a signal through a transmitter, so that the processing apparatus performs the methods in the foregoing aspects.

Optionally, there are one or more processors. If there is a memory, there may be one or more memories.

Optionally, the memory may be integrated with the processor, or the memory and the processor are separately disposed.

In a specific implementation process, the memory may be a non-transitory (non-transitory) memory, such as a read-only memory (read-only memory, ROM). The memory and the processor may be integrated into one chip, or may be separately disposed in different chips. A type of the memory and a manner in which the memory and the processor are disposed are not limited in this embodiment of this application.

It should be understood that a related information exchange process, for example, sending first indication information, may be a process of outputting the first indication information from the processor, and receiving the first indication information may be a process of inputting the received first indication information to the processor. Specifically, information output by the processor may be output to a transmitter, and input information received by the processor may be from a receiver. The transmitter and the receiver may be collectively referred to as a transceiver.

The apparatus in the twelfth aspect and the thirteenth aspect may be a chip or a chip system. The processor may be implemented by using hardware or software. When the processor is implemented by using hardware, the processor may be a logic circuit, an integrated circuit, or the like; or when the processor is implemented by using software, the processor may be a general-purpose processor, and is implemented by reading software code stored in the memory. The memory may be integrated into the processor, or may exist independently outside the processor.

According to a fourteenth aspect, this application provides a computer program product. The computer program product includes a computer program (which may also be referred to as code or instructions). When the computer program is run, a computer is enabled to perform the methods in the foregoing aspects.

According to a fifteenth aspect, this application provides a computer-readable storage medium. The computer-readable storage medium stores a computer program (which may also be referred to as code or instructions). When the computer program is run on a computer, the computer is enabled to perform the methods in the foregoing aspects.

According to a sixteenth aspect, this application provides a system, including the terminal device and the network device described above.

**BRIEF DESCRIPTION OF DRAWINGS**

FIG. 1 is a diagram of a system applicable to a method according to an embodiment of this application;
FIG. 2 is a schematic flowchart of a method according to an embodiment of this application;
FIG. 3 is a diagram of a method according to an embodiment of this application;
FIG. 4 is a schematic flowchart of a method according to an embodiment of this application;
FIG. 5 is a diagram of a method according to an embodiment of this application;
FIG. 6 shows a method according to an embodiment of this application;
FIG. 7 is a block diagram of an apparatus according to an embodiment of this application;
FIG. 8 is a diagram of a structure of an apparatus according to an embodiment of this application; and
FIG. 9 is a diagram of a chip system according to an embodiment of this application.

**DESCRIPTION OF EMBODIMENTS**

The following describes technical solutions of this application with reference to the accompanying drawings.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a 5th generation (5th generation, 5G) system, a new radio (new radio, NR) system, or a 6th generation (6th generation, 6G) system. The 5G mobile communication system in this application includes a non-standalone (non-standalone, NSA) 5G mobile communication system or a standalone (standalone, SA) 5G mobile communication system. The technical solutions provided in this application may be further applied to a future communication system. Alternatively, the communication system may be a public land mobile network (public land mobile network, PLMN) network, a sidelink (sidelink, SL) communication system, a machine to machine (machine to machine, M2M) communication system, an internet of things (internet of Things, IoT) communication system, or another communication system.

The terminal device (terminal equipment) in embodiments of this application may be an access terminal, a subscriber unit, a subscriber station, a mobile station, a relay station, a remote station, a remote terminal, a mobile device, a user terminal (user terminal), a user equipment (user equipment, UE), a terminal (terminal), a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a future evolved public land mobile network (public land mobile network, PLMN), a terminal device in a future internet of vehicles, or the like. This is not limited in embodiments of this application.

By way of example, and not limitation, in embodiments of this application, the wearable device may also be referred to as a wearable intelligent device, and is a general term of wearable devices that are intelligently designed and developed for daily wear by using a wearable technology, for example, glasses, gloves, watches, clothes, and shoes. The wearable device is a portable device that can be directly worn on the body or integrated into clothes or an accessory of a user. The wearable device is not only a hardware device, but also implements a powerful function through software support, data interaction, and cloud interaction. In a broad sense, wearable intelligent devices include a full-featured and large-size device that can implement complete and partial functions without depending on a smartphone, for example, a smart watch or smart glasses, and a device that focuses on only one type of application function and needs to work with another device such as a smartphone, for example, various smart bands or smart jewelry for physical sign monitoring.

In addition, in embodiments of this application, the terminal device may alternatively be a terminal device in an IoT system. IoT is an important component in development of future information technologies. A main technical feature of the IoT is to connect an object to a network by using a communication technology, to implement an intelligent network of human-machine interconnection and thing-thing interconnection. In embodiments of this application, the IoT technology can implement massive connections, deep coverage, and terminal power saving by using, for example, a narrowband (narrowband, NB) technology.

In addition, in embodiments of this application, the terminal device may further include a sensor such as an intelligent printer, a train detector, and a gas station. Main functions of the terminal device include collecting data (some terminal devices), receiving control information and downlink data of a network device, sending an electromagnetic wave, and transmitting uplink data to the network device.

The network device in embodiments of this application may be any communication device that has a wireless transceiver function and that is configured to communicate with the terminal device. The device includes but is not limited to an evolved NodeB (evolved NodeB, eNB), a radio network controller (radio network controller, RNC), a NodeB (NodeB, NB), a home base station (home evolved NodeB, HeNB, or home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission reception point (transmission and reception point, TRP), a gNB in a 5G system such as an NR system, or a transmission point (TRP or TP), one or a group of antenna panels (including a plurality of antenna panels) of a base station, or a network node that constitutes a gNB or a transmission point, for example, a baseband unit (BBU) or a distributed unit (distributed unit, DU).

In some deployments, the network device in embodiments of this application may be a central unit (central unit, CU) or a distributed unit (distributed unit, DU), or the network device includes a CU or a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

Further, the CU may be divided into a control plane central unit (CU-CP) and a user plane central unit (CU-UP). The CU-CP and the CU-UP may also be deployed on different physical devices. The CU-CP is responsible for a control plane function, and mainly includes the RRC layer and a PDCP-C layer. The PDCP-C layer is mainly responsible for data encryption and decryption, integrity protection, data transmission, and the like on a control plane. The CU-UP is responsible for a user plane function, and mainly includes an SDAP layer and a PDCP-U layer. The SDAP layer is mainly responsible for processing data of a core network and mapping a flow (flow) to a bearer. The PDCP-U layer is mainly responsible for at least one function of encryption and decryption, integrity protection, header compression, serial number maintenance, data transmission, and the like on a data plane. Specifically, the CU-CP and the CU-UP are connected through a communication interface (for example, an E1 interface). The CU-CP represents the network device and is connected to a core network device through a communication interface (for example, an Ng interface), and is connected to the DU through a communication interface (for example, an F1-C (control plane) interface). The CU-UP is connected to the DU through a communication interface (for example, an F1-U (user plane) interface).

In another possible implementation, the PDCP-C layer is also included in the CU-UP.

It may be understood that the foregoing protocol layer division between the CU and the DU, and protocol layer division between the CU-CP and the CU-UP are merely examples, and there may be another division manner. This is not limited in embodiments of this application.

The network device mentioned in embodiments of this application may be a device including the CU or the DU, or a device including the CU and the DU, or a device including a control plane CU node (a CU-CP node), a user plane CU node (a CU-UP node), and the DU node.

The network device and the terminal device may be deployed on land, including an indoor or outdoor device, a hand-held device, or a vehicle-mounted device; may be deployed on water; or may be deployed on an airplane, a balloon, and a satellite in the air. Scenarios in which the network device and the terminal device are located are not limited in embodiment of this application.

In embodiments of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). An operating system may be any one or more computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software.

In addition, aspects or features of this application may be implemented as a method, an apparatus, or a product that uses standard programming and/or engineering technologies. The term "product" used in this application covers a computer program that can be accessed from any computer-readable component, carrier or medium. For example, the computer-readable medium may include but is not limited to: a magnetic storage component (for example, a hard disk, a floppy disk, or a magnetic tape), an optical disc (for example, a compact disc (compact disc, CD) or a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable storage media" may include but is not limited to a radio channel, and various other media that can store, include, and/or carry instructions and/or data.

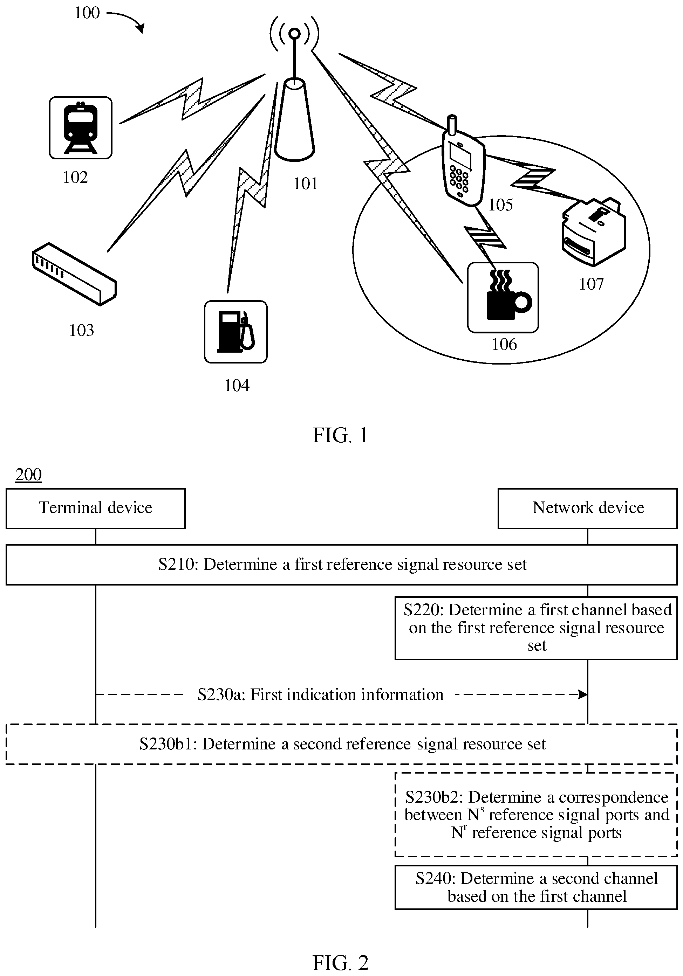

For ease of understanding embodiments of this application, a communication system shown in FIG. 1 is first used as an example to describe in detail a communication system applicable to embodiments of this application. As shown in FIG. 1, the communication system 100 may include at least one network device, for example, a network device 101 shown in FIG. 1. The communication system 100 may further include at least one terminal device, for example, terminal devices 102 to 107 shown in FIG. 1. The terminal devices 102 to 107 may be mobile or fixed. The network device 101 may communicate with one or more of the terminal devices 102 to 107 through a wireless link. Each network device may provide communication coverage for a particular geographical area, and may communicate with a terminal device located in the coverage area.

Optionally, the terminal devices may directly communicate with each other. For example, direct communication between the terminal devices may be implemented by using an SL technology or the like. As shown in FIG. 1, the terminal devices 105 and 106, and the terminal devices 105 and 107 may directly communicate with each other by using the SL technology. The terminal device 106 and the terminal device 107 may separately or simultaneously communicate with the terminal device 105.

Alternatively, the terminal devices 105 to 107 may separately communicate with the network device 101. For example, direct communication with the network device 101 may be implemented. For example, the terminal devices 105 and 106 in the figure may directly communicate with the network device 101. Alternatively, indirect communication with the network device 101 may be implemented. For example, the terminal device 107 in the figure communicates with the network device 101 through the terminal device 105.

A plurality of antennas may be configured for each communication device. For each communication device in the communication system 100, the plurality of configured antennas may include at least one transmit antenna configured to send a signal and at least one receive antenna configured to receive a signal. Therefore, the communication devices in the communication system 100 may communicate with each other by using a multi-antenna technology.

It should be understood that FIG. 1 is only a simplified diagram of an example for ease of understanding. The communication system 100 may further include another network device or another terminal device, which is not shown in FIG. 1.

For ease of understanding of embodiments of this application, several basic concepts in embodiments of this application are briefly described. It should be understood that basic concepts described below are briefly described by using a basic concept specified in an NR protocol as an example, but embodiments of this application are not limited to being applied only to an NR system. Therefore, standard names appearing when the NR system is used as an example for description are all functional descriptions, and specific names are not limited, indicate only functions of a device, and may be correspondingly extended to another system, for example, a 2G, 3G, 4G, or future communication system.

1. Precoding technology

When a channel state is known, a terminal device may process a to-be-sent signal by using a precoding matrix that matches the channel state, so that a precoded to-be-sent signal adapts to a channel, to improve a received signal strength of a receiving device, and reduce interference to another receiving device. Therefore, quality (for example, a signal to interference plus noise ratio (signal to interference plus noise ratio, SINR)) of a received signal is improved through precoding processing on the to-be-sent signal.

It should be understood that related descriptions of the precoding technology in this application are merely an example for ease of understanding, and are not intended to limit the protection scope of embodiments of this application. In a specific implementation process, a sending device may alternatively perform precoding in another manner. For example, when channel information (for example, but not limited to a channel matrix) cannot be obtained, precoding is performed by using a preset precoding matrix or by using weighted processing. For brevity, specific content of the manner is not described in this application.

2. Precoding matrix

The precoding matrix may be, for example, a precoding matrix determined by a terminal device based on a channel matrix of each frequency domain unit. The precoding matrix may be determined by the terminal device through channel estimation or the like or based on channel reciprocity. However, it should be understood that a specific method used by the terminal device to determine the precoding matrix is not limited to the foregoing descriptions. For a specific implementation, refer to a conventional technology. For brevity, details are not described herein.

For example, the precoding matrix may be obtained by performing singular value decomposition (singular value decomposition, SVD) on the channel matrix or a covariance matrix of the channel matrix, or may be obtained by performing eigenvalue decomposition (eigenvalue decomposition, EVD) on the covariance matrix of the channel matrix. It should be understood that the foregoing listed manners of determining the precoding matrix are merely examples, and should not constitute any limitation on this application. For the manner of determining the precoding matrix, refer to the conventional technology. For brevity, details are not described herein.

3. Reference signal (reference signal, RS)

The RS may also be referred to as a pilot (pilot), a reference sequence, or the like. In embodiments of this application, the reference signal may be a reference signal for channel measurement. For example, the reference signal may be a channel state information reference signal (channel state information reference signal, CSI-RS) for downlink channel measurement, or may be a sounding reference signal (sounding reference signal, SRS) for uplink channel measurement.

It should be understood that the foregoing listed reference signals are merely examples, and should not constitute any limitation on this application. This application does not exclude a possibility that another reference signal is defined in a future protocol to implement a same or similar function, and does not exclude a possibility that another reference signal is defined in a future protocol to implement different functions.

For ease of description, the following uses an example in which the reference signal is the SRS for description. In a 5G NR communication system, the SRS is used to estimate channel quality of different frequency bands.

For example, the SRS in embodiments of this application includes any one of the following:

a periodic sounding reference signal SRS, a semi-periodic SRS, or an aperiodic SRS, where details are as follows:

Periodic SRS: The SRS is sent periodically.

Semi-periodic SRS: A network device sends a start instruction (for example, a start instruction sent by using a MAC CE) that indicates an SRS sending start moment, and the network device sends an end instruction (for example, an end instruction sent by using a MAC CE) that indicates an SRS sending end moment. The SRS is periodically sent between the SRS sending start moment and the SRS sending end moment.

4. Reference signal port (resource port)

The reference signal port is a resource granularity occupied by a terminal device to send a reference signal.

In a possible implementation, one reference signal port may correspond to one transmit antenna of the terminal device. In this implementation, a quantity of reference signal ports of the terminal device may be a quantity of transmit antennas of the terminal device.

In another possible implementation, one reference signal port may correspond to one precoding vector of a transmit antenna, that is, may correspond to one spatial beamforming direction. In this implementation, a quantity of reference signal ports of the terminal device may be less than a quantity of transmit antennas of the terminal device.

Generally, a plurality of reference signals corresponding to a plurality of reference signal ports on one reference signal resource occupy one or more time-frequency resources, and a plurality of reference signals that occupy a same time-frequency resource are code division multiplexed. For example, reference signals of different reference signal ports use different cyclic shifts (cyclic shift, CS) to occupy a same time-frequency resource.

Specifically, on the same time-frequency resource, the different reference signals of the different reference signal ports can avoid mutual interference in an orthogonal manner of code division multiplexing, and the orthogonal manner may be implemented by using cyclic shifts. When a delay spread of a channel is small, code division orthogonality can be essentially implemented by using CSs. A receiver may perform a specific operation, to cancel a signal using another CS and retain only a signal using a specific CS, to implement code division multiplexing.

In embodiments of this application, the reference signal port may be an SRS port. The SRS port may be indicated by an SRS port index pi.

5. Reference signal resource

The reference signal resource may be used to configure a transmission attribute of a reference signal, for example, a reference signal bandwidth, a time-frequency resource position, a port mapping relationship, a power factor, and a scrambling code. For details, refer to the conventional technology. A transmitter device may send the reference signal based on the reference signal resource, and a receiver device may receive the reference signal based on the reference signal resource. One reference signal resource may include one or more RBs.

In embodiments of this application, the reference signal resource may be, for example, an SRS resource.

The SRS resource (SRS resource) may include a quantity of SRS ports (number of SRS ports), a quantity of orthogonal frequency division multiplexing (orthogonal frequency division multiplexing, OFDM) symbols (number of OFDM symbols in the SRS resource), an SRS bandwidth (SRS bandwidth), an SRS frequency domain position and shift (frequency domain position and configurable shift), a frequency hopping bandwidth (frequency hopping bandwidth), a cyclic shift (cyclic shift), a transmission comb value (transmission comb value), a transmission comb offset (transmission comb offset), an SRS sequence ID (SRS sequence ID), and the like.

6. Reference signal resource set (resource Set)

One reference signal resource set may include K (K≥1) reference signal resources. That one reference signal resource set includes K reference signal resources indicates that the K reference signal resources are configured based on the reference signal resource set.

In embodiments of this application, the reference signal resource set may be, for example, an SRS resource set (SRS resource set).

7. Antenna switching (antenna switching)

Embodiments of this application relate to an antenna switching scenario and a non-antenna switching scenario. The antenna switching scenario indicates that a quantity of transmit antennas of a terminal device is less than a quantity of receive antennas, and the non-antenna switching scenario indicates that a quantity of transmit antennas of a terminal device is equal to a quantity of receive antennas.

For example, a quantity of antennas of the terminal device is represented as NTMR, where N represents a quantity of transmit antennas, T represents transmit (transmit, T), M represents a quantity of receive antennas, and R represents receive (receive, R).

If N is less than M, the terminal device is understood as a terminal device in the antenna switching scenario, and this means that antenna switching needs to be performed in a procedure in which the terminal device sends an SRS.

If N is equal to M, the terminal device is understood as a terminal device in the non-antenna switching scenario, and this means that antenna switching does not need to be performed in a procedure in which the terminal device sends an SRS.

The foregoing antenna switching may also be referred to as antenna selection. This is not limited in this application.

In a time division duplexing (time division duplexing, TDD) mode, on uplink and downlink channels, signals are transmitted on a same frequency domain resource and different time domain resources. Within a short period of time (for example, coherence time of channel propagation), it may be considered that channels through which signals on the uplink and downlink channels pass are the same, and the uplink and downlink channels may be obtained equivalently. This is reciprocity between the uplink and downlink channels. Based on the reciprocity between the uplink and downlink channels, the network device may measure the uplink channel based on an uplink reference signal such as a sounding reference signal (sounding reference signal, SRS), and may estimate the downlink channel based on the uplink channel, to determine a precoding matrix for downlink transmission.

Because a time-frequency resource allocated to the SRS is fixed, as a quantity of UEs and a quantity of antennas of the UEs in a network increase, a problem of insufficient SRS resources occurs. Consequently, channel estimation performance is affected, a downlink precoding capability is deteriorated, and finally a network throughput is reduced.

In view of this, embodiments of this application provide a reference signal transmission method, to reduce time-frequency resource overheads of a reference signal.

Without loss of generality, interaction between the network device and the terminal device is used as an example below to describe in detail the reference signal transmission method provided in embodiments of this application.

FIG. 2 is a schematic flowchart of a reference signal transmission method according to an embodiment of this application. As shown in FIG. 2, the method 200 includes the following steps.

S210: A terminal device and a network device determine a first reference signal resource set.

The first reference signal resource set includes $N^s$ reference signal ports. That the first reference signal resource set includes the $N^s$ reference signal ports may also be understood as that reference signal resources included in the first reference signal resource set are used to transmit reference signals of the $N^s$ reference signal ports. For example, the first reference signal resource set is a first SRS resource set (SRS resource set), and the reference signal port is an SRS port.

It should be noted that the first reference signal resource set does not include a reference signal port other than the $N^s$ reference signal ports.

The first reference signal resource set is used to determine a first channel, and the first channel is used to determine a second channel. The first channel is a channel corresponding to $N^s$ antennas of the terminal device. In other words, the first channel is a channel corresponding to the $N^s$ antennas of the terminal device and $N^t$ antennas of the network device. The second channel is a channel corresponding to $N^{s'}$ antennas of the terminal device. In other words, the first channel is a channel corresponding to the $N^{s'}$ antennas of the terminal device and the $N^t$ antennas of the network device. The $N^{s'}$ antennas are antennas other than the $N^s$ antennas in $N^r$ antennas of the terminal device, that is, $N^s+N^{s'}=N^r$, and $N^s$, $N^{s'}$, and $N^r$ are all positive integers. That the first reference signal resource set is used to determine the first channel may also be understood as that a first reference signal transmitted on the first reference signal resource set is used to determine the first channel. For example, the first reference signal is a first SRS.

The following describes a manner in which the terminal device determines the first reference signal resource set.

It can be learned from the foregoing that the reference signal resources included in the first reference signal resource set are used to transmit the reference signals of the $N^s$ reference signal ports of the terminal device. Therefore, that the terminal device determines the first reference signal resource set is equivalent to determining the $N^s$ reference signal ports. In a process in which the terminal device determines the $N^s$ reference signal ports, the terminal device first determines the $N^s$ antennas corresponding to the $N^s$ reference signal ports.

A manner in which the terminal device determines the $N^s$ antennas is not limited in this embodiment of this application.

In a possible implementation, the terminal device determines the $N^s$ antennas based on a downlink reference signal from the network device.

Specifically, the terminal device receives the downlink reference signal from the network device, where the downlink reference signal may be a precoded downlink reference signal, or may be a non-precoded downlink reference signal. Further, the terminal device determines, based on a direction of arrival of the downlink reference signal, the $N^s$ antennas, in the $N^r$ antennas of the terminal device, whose antenna beam directions are closest to the direction of arrival of the downlink reference signal. The downlink reference signal may be a CSI-RS.

For a manner in which the terminal device determines the direction of arrival of the downlink reference signal, refer to the conventional technology. For brevity, details are not described in this embodiment of this application.

A value of $N^s$ may be predefined in a protocol or preconfigured, or may be indicated by the network device to the terminal device. If the value of $N^s$ is indicated by the network device to the terminal device, the method 200 further includes: The terminal device receives indication information #1 from the network device, where the indication information #1 indicates the value of $N^s$.

In another possible implementation, the terminal device determines the $N^s$ antennas based on fourth indication information from the network device.

Specifically, the terminal device determines a third reference signal resource set. When determining the third reference signal resource set, the terminal device may send a third reference signal to the network device by using the third reference signal resource set. Correspondingly, when receiving the third reference signal, the network device may determine the third reference signal resource set used to receive the third reference signal. Further, the network device may send the fourth indication information to the terminal device based on the $N^s$ reference signal ports in the third reference signal resource set (or based on the third reference signal), where the fourth indication information indicates the $N^s$ reference signal ports. Correspondingly, after receiving the fourth indication information, the terminal device may determine the $N^s$ antennas based on the fourth indication information.

The third reference signal resource set includes $N^r$ reference signal ports. That the third reference signal resource set includes the $N^r$ reference signal ports may also be understood as that reference signal resources included in the third reference signal resource set include the $N^r$ reference signal ports, and are used to transmit reference signals of the $N^r$ reference signal ports. For example, the third reference signal resource set is a third SRS resource set, and the reference signal port is an SRS port.

The third reference signal resource set is used to determine a third channel, and the third channel is a channel corresponding to the $N^r$ antennas of the terminal device. In other words, the third channel is a channel corresponding to the $N^r$ antennas of the terminal device and the $N^t$ antennas of the network device. That the third reference signal resource set is used to determine the third channel may also be understood as that the third reference signal transmitted on the third reference signal resource set is used to determine the third channel. For example, the third reference signal is a third SRS.

A manner in which the network device determines the $N^s$ reference signal ports is not limited in this embodiment of this application.

For example, the network device determines the $N^s$ reference signal ports based on reference signal quality.

Specifically, after determining the third reference signal resource set, the network device selects $N^s$ reference signal ports with strongest reference signal quality from the $N^r$ reference signal ports included in the third reference signal resource set.

For example, the network device determines the $N^s$ reference signal ports based on a channel matrix #1 of the third channel.

For example, after determining the third reference signal resource set, the network device determines the channel matrix of the third channel based on the third reference signal resource set, where a dimension of the channel matrix of the third channel is $N^t \times N^r$. Further, the network device performs SVD on the channel matrix of the third channel, to obtain $\mathbf{H_1} = \mathbf{U_1} \Sigma_1 \mathbf{V_1^T}$, where $\mathbf{H_1}$ represents the channel matrix of the third channel, $\mathbf{U_1}$ is a left singular matrix whose dimension is $N^t * N^t$, $\Sigma_1$ is a diagonal matrix whose dimension is $N^t * N^r$, and $\mathbf{V_1}$ is a right singular matrix whose dimension is $N^r * N^r$. Further, the network device projects $\mathbf{V_1}$ to a discrete Fourier transform (discrete Fourier transform, DFT) basis to obtain a projection coefficient matrix #1, and a dimension of the projection coefficient matrix #1 is $N^r * N^r$. Further, the network device determines that the $N^s$ reference signal ports correspond to $N^s$ rows or $N^s$ columns with a maximum modulus in the projection coefficient matrix #1. After determining the $N^s$ reference signal ports, the network device sends the fourth indication information to the terminal device based on the $N^s$ reference signal ports.

For another example, the network device determines $N^s$ columns based on a value of column correlation in the channel matrix of the third channel, and determines that the $N^s$ reference signal ports correspond to the $N^s$ columns.

A value of $N^s$ may be predefined in a protocol or preconfigured, or may be indicated by the terminal device to the network device. If the value of $N^s$ is indicated by the terminal device to the network device, the method 200 further includes: The network device receives indication information #2 from the terminal device, where the indication information #2 indicates the value of $N^s$.

After determining the $N^s$ antennas in the foregoing manner, the terminal device may determine the first reference signal resource set based on the $N^s$ antennas. Further, the terminal device may send the first reference signal by using the first reference signal resource set. It may be understood that the first reference signal sent by the terminal device is sent by the terminal device through the $N^s$ antennas.

The following describes a manner in which the network device determines the first reference signal resource set.

As described above, after determining the first reference signal resource set, the terminal device may send the first reference signal by using the first reference signal resource set. Correspondingly, the network device may receive the first reference signal from the terminal device. After receiving the first reference signal, the network device determines a resource set for receiving the first reference signal as the first reference signal resource set.

Optionally, the method 200 further includes: The terminal device sends third indication information to the network device. Correspondingly, the network device receives the third indication information from the terminal device.

The third indication information indicates one or more of the following information: a quantity of reference signal resources included in the first reference signal resource set, or a quantity of reference signal ports included in each reference signal resource in the first reference signal resource set.

For example, the terminal device is a 4T8R device. If $N^s=4$, the third indication information indicates one or more of the following information: a quantity M of reference signal resources included in the first reference signal resource set is equal to 1; a reference signal resource in the first reference signal resource set includes four reference signal ports; a quantity M of reference signal resources included in the first reference signal resource set is equal to 2; two reference signal resources in the first reference signal resource set respectively include three reference signal ports and one reference signal port; two reference signal resources in the first reference signal resource set respectively include two reference signal ports and two reference signal ports; or two reference signal resources in the first reference signal resource set respectively include one reference signal port and three reference signal ports.

It should be understood that after receiving the third indication information from the terminal device, the network device may determine the first reference signal resource set based on information indicated by the third indication information. For example, when the third indication information indicates the quantity of reference signal resources included in the first reference signal resource set, the network device may determine reference signals received on the two reference signal resources as the first reference signals, and further determine a reference signal resource set for receiving the first reference signals as the first reference signal resource set.

Optionally, the method 200 further includes: The terminal device sends fifth indication information to the network device. Correspondingly, the network device receives the fifth indication information from the terminal device.

The fifth indication information indicates one or more of the following information: virtual terminal devices respectively corresponding to the $N^s$ reference signal ports included in the first reference signal resource set; virtual terminal devices respectively corresponding to the $N^{s'}$ reference signal ports; or virtual terminal devices respectively corresponding to $N^r$ reference signal ports included in a second reference signal resource set.

The second reference signal resource set is used to determine the third channel, and the third channel is a channel corresponding to the $N^r$ antennas of the terminal device. The second reference signal resource set is the same as the third reference signal resource set, or the second reference signal resource set is different from the third reference signal resource set. This is not limited in this embodiment of this application. For more descriptions of the second reference signal resource set, refer to the foregoing descriptions of the third reference signal resource set. For brevity, details are not described herein again.

S220: The network device determines the first channel based on the first reference signal resource set.

That the network device determines the first channel based on the first reference signal resource set is equivalent to describing that the network device determines the first channel based on the first reference signal. In other words, the network device determines the first channel by measuring the first reference signal. The first channel determined by the network device may be represented as a channel matrix of the first channel, the channel matrix of the first channel is denoted as $\mathbf{H}_2$, a dimension of $\mathbf{H}_2$ is $N^t*N^s*N^f$, $N^f$ represents a quantity of frequency domain units or delays corresponding to a reporting bandwidth, and the reporting bandwidth may be an SRS bandwidth.

For example, when the terminal device includes antennas in I polarization directions, the first channel determined by the network device may include channels corresponding to antennas in different polarization directions in the $N^s$ antennas of the terminal device. A channel corresponding to an antenna in an $i^{th}$ polarization direction in the $N^s$ antennas of the terminal device is denoted as $\mathbf{H}_{2,i}$, a dimension of $\mathbf{H}_{2,i}$ is $N^t*N^{s,i}*N^f$, and $N^{s,i}$ is a quantity of antennas in the $i^{th}$ polarization direction in the $N^s$ antennas. i is an integer greater than 1, and i=1, 2, ..., I.

When determining the first channel, the network device may determine the second channel based on the first channel. Specifically, the network device determines the second channel based on first information and the first channel. The first information includes one or more of the following: auto-correlation information of the first channel, auto-correlation information of the second channel, or cross-correlation information of the first channel and the second channel.

Optionally, if the network device fails to obtain the first information before determining the second channel based on the first channel, the method 200 further includes S230a, or includes S230b1 and S230b2.

S230a: The terminal device sends first indication information to the network device. Correspondingly, the network device receives the first indication information from the terminal device.

The first indication information is used to determine the first information. For example, the first indication information is used to determine the auto-correlation information of the first channel, and the cross-correlation information of the first channel and the second channel. For another example, the first indication information is used to determine the cross-correlation information of the first channel and the second channel. For another example, the first indication information is used to determine the auto-correlation information of the first channel, the auto-correlation information of the second channel, and the cross-correlation information of the first channel and the second channel.

The following describes the auto-correlation information of the first channel. The auto-correlation information of the first channel includes at least one auto-correlation matrix #1.

Example 1: One of the at least one auto-correlation matrix #1 corresponds to one or more of the $N^t$ antennas of the network device, and corresponds to all or a part of $N^f$ frequency domain units or $N^f$ delays, and the $N^f$ frequency domain units or the $N^f$ delays correspond to the reporting bandwidth. It may be understood that each of the at least one auto-correlation matrix #1 corresponds to a different antenna in the $N^t$ antennas. Each of the at least one auto-correlation matrix #1 corresponds to a same frequency domain unit or a same delay. For example, each of the at least one auto-correlation matrix #1 corresponds to the $N^f$ frequency domain units, or each of the at least one auto-correlation matrix #1 corresponds to the $N^f$ delays, and each of the at least one auto-correlation matrix #1 corresponds to $N^f/2$ frequency domain units in the $N^f$

frequency domain units.

An auto-correlation matrix #1 corresponding to $N^{t'}$ antennas in the $N^t$ antennas of the network device and $N^{f'}$ frequency domain units in the $N^f$ frequency domain units is an auto-correlation matrix of a channel matrix that corresponds to the $N^s$ antennas of the terminal device and the $N^{t'}$ antennas and that is on the $N^{f'}$ frequency domain units. Similarly, an auto-correlation matrix #1 corresponding to $N^{t'}$ antennas in the $N^t$ antennas of the network device and $N^{f'}$ frequency domain units in the $N^f$ delays is an auto-correlation matrix of a channel matrix that corresponds to the $N^s$ antennas of the terminal device and the $N^{t'}$ antennas and that is on the $N^{f'}$ frequency domain units. $N^{t'}$ is a positive integer, and $N^{t'} \leq N^t$. $N^{f'}$ is a positive integer, and $N^{f'} \leq N^f$.

For example, a quantity of the at least one auto-correlation matrix #1 is $N^t$, and each of the $N^t$ auto-correlation matrices #1 corresponds to one of the $N^t$ antennas, and corresponds to the $N^f$ frequency domain units. In this case, a dimension of each of the at least one auto-correlation matrix #1 is $N^s * N^s$.

For another example, a quantity of the at least one auto-correlation matrix #1 is $N^t/2$, and each of the $N^t/2$ auto-correlation matrices #1 corresponds to two of the $N^t$ antennas, and corresponds to the $N^f$ delays.

For another example, a quantity of the at least one auto-correlation matrix #1 is $N^t/2$, the $N^t/2$ auto-correlation matrices #1 correspond to $N^t/2$ antennas in the $N^t$ antennas, and each of the $N^t/2$ auto-correlation matrices #1 corresponds to one of the $N^t/2$ antennas, and corresponds to the $N^f$ delays.

Example 2: One of the at least one auto-correlation matrix #1 corresponds to one or more of $N^t$ beams, and corresponds to all or a part of the $N^f$ frequency domain units or the $N^f$ delays, and the $N^t$ beams correspond to the $N^t$ antennas. It may be understood that each of the at least one auto-correlation matrix #1 corresponds to a different beam in the $N^t$ beams. Each of the at least one auto-correlation matrix #1 corresponds to a same frequency domain unit or a same delay. For example, each of the at least one auto-correlation matrix #1 corresponds to the $N^f$ frequency domain units, or each of the at least one auto-correlation matrix #1 corresponds to the $N^f$ delays, and each of the at least one auto-correlation matrix #1 corresponds to $N^f/2$ frequency domain units in the $N^f$ frequency domain units.

An auto-correlation matrix #1 corresponding to $N^{t'}$ beams in the $N^t$ beams and $N^{f'}$ frequency domain units in the $N^f$ frequency domain units is an auto-correlation matrix of a channel matrix that corresponds to the $N^s$ antennas of the terminal device and the $N^{t'}$ beams and that is on the $N^{f'}$ frequency domain units. Similarly, an auto-correlation matrix #1 corresponding to $N^{t'}$ beams in the $N^t$ beams and $N^{f'}$ frequency domain units in the $N^f$ delays is an auto-correlation matrix of a channel matrix that corresponds to the $N^s$ antennas of the terminal device and the $N^{t'}$ beams and that is on the $N^{f'}$ frequency domain units.

For example, a quantity of the at least one auto-correlation matrix #1 is $N^t$, and each of the $N^t$ auto-correlation matrices #1 corresponds to one of the $N^t$ beams, and corresponds to the $N^f$ frequency domain units. In this case, a dimension of each of the at least one auto-correlation matrix #1 is $N^s * N^s$.

For another example, a quantity of the at least one auto-correlation matrix #1 is $N^t/2$, and each of the $N^t/2$ auto-correlation matrices #1 corresponds to two of the $N^t$ beams, and corresponds to the $N^f$ delays.

For another example, a quantity of the at least one auto-correlation matrix #1 is $N^t/2$, the $N^t/2$ auto-correlation matrices #1 correspond to $N^t/2$ beams in the $N^t$ beams, and each of the $N^t/2$ auto-correlation matrices #1 corresponds to one of the $N^t/2$ beams, and corresponds to the $N^f$ delays.

Example 3: One of the at least one auto-correlation matrix #1 corresponds to one or more of the $N^f$ frequency domain units, and corresponds to all or a part of the $N^t$ antennas or the $N^t$ beams. It may be understood that each of the at least one auto-correlation matrix #1 corresponds to a different frequency domain unit. Each of the at least one auto-correlation matrix #1 corresponds to a same beam or a same antenna. For example, each of the at least one auto-correlation matrix #1 corresponds to the $N^t$ antennas, or each of the at least one auto-correlation matrix #1 corresponds to the $N^t$ beams, and each of the at least one auto-correlation matrix #1 corresponds to $N^t/2$ antennas in the $N^t$ antennas.

For example, a quantity of the at least one auto-correlation matrix #1 is $N^f$, and each of the $N^f$ auto-correlation matrices #1 corresponds to one of the $N^f$ frequency domain units, and corresponds to the $N^t$ antennas. In this case, a dimension of each of the at least one auto-correlation matrix #1 is $N^s * N^s$.

For another example, a quantity of the at least one auto-correlation matrix #1 is $N^f/2$, and each of the $N^f/2$ auto-correlation matrices #1 corresponds to two of the $N^f$ frequency domain units, and corresponds to the $N^t$ beams.

For another example, a quantity of the at least one auto-correlation matrix #1 is $N^f/2$, the $N^f/2$ auto-correlation matrices #1 correspond to $N^f/2$ frequency domain units in the $N^f$ frequency domain units, and each of the $N^f/2$ auto-correlation matrices #1 corresponds to one of the $N^f/2$ frequency domain units, and corresponds to the $N^t$ beams.

Example 4: One of the at least one auto-correlation matrix #1 corresponds to one or more of the $N^f$ delays, and corresponds to all or a part of the $N^t$ antennas or the $N^t$ beams. It may be understood that each of the at least one auto-correlation matrix #1 corresponds to a different delay. Each of the at least one auto-correlation matrix #1 corresponds to a same antenna or a same beam. For example, each of the at least one auto-correlation matrix #1 corresponds to the $N^t$ antennas, or each of the at least one auto-correlation matrix #1 corresponds to the $N^t$ beams, and each of the at least one auto-correlation matrix #1 corresponds to $N^t/2$ antennas in the $N^t$ antennas.

For example, a quantity of the at least one auto-correlation matrix #1 is $N^f$, and each of the $N^f$ auto-correlation matrices #1 corresponds to one of the $N^f$ delays, and corresponds to the $N^t$ antennas. In this case, a dimension of each of the at least one auto-correlation matrix #1 is $N^s*N^s$.

For another example, a quantity of the at least one auto-correlation matrix # 1 is $N^f/2$, and each of the $N^f/2$ auto-correlation matrices # 1 corresponds to two of the $N^f$ delays, and corresponds to the $N^t$ beams.

For another example, a quantity of the at least one auto-correlation matrix # 1 is $N^f/2$, the $N^f/2$ auto-correlation matrices # 1 correspond to $N^f/2$ delays in the $N^f$ delays, and each of the $N^f/2$ auto-correlation matrices # 1 corresponds to one of the $N^f/2$ delays, and corresponds to the $N^t$ beams.

Optionally, when the first channel includes channels corresponding to antennas in different polarization directions in the $N^s$ antennas of the terminal device, the auto-correlation information of the first channel includes auto-correlation information of the channels corresponding to the antennas in the different polarization directions in the $N^s$ antennas. Auto-correlation information of the channel corresponding to the antenna in the $i^{th}$ polarization direction in the $N^s$ antennas is used as an example. The auto-correlation information of the channel corresponding to the antenna in the $i^{th}$ polarization direction in the $N^s$ antennas includes at least one auto-correlation matrix #1i, where one of the at least one auto-correlation matrix #1i corresponds to $N^{s,i}$ antennas and one or more of the $N^t$ antennas, and corresponds to all or a part of the $N^f$ frequency domain units or the $N^f$ delays; one of the at least one auto-correlation matrix #1i corresponds to $N^{s,i}$ antennas and one or more of the $N^t$ beams, and corresponds to all or a part of the $N^f$ frequency domain units or the $N^f$ delays; one of the at least one auto-correlation matrix #1i corresponds to $N^{s,i}$ antennas and one or more of the $N^f$ frequency domain units, and corresponds to all or a part of the $N^t$ antennas or the $N^t$ beams; or one of the at least one auto-correlation matrix #1i corresponds to $N^{s,i}$ antennas and one or more of the $N^f$ delays, and corresponds to all or a part of the $N^t$ antennas or the $N^t$ beams.

When the first indication information is used to determine the auto-correlation information of the first channel, the first indication information includes one or more of the following: all elements of one or more of the at least one auto-correlation matrix #1, elements of an upper triangular part of one or more of the at least one auto-correlation matrix #1, or elements of a lower triangular part of one or more of the at least one auto-correlation matrix #1. The elements of the upper triangular part of the auto-correlation matrix #1 include elements on a diagonal of the auto-correlation matrix #1 and an element above the diagonal. The elements of the lower triangular part of the auto-correlation matrix #1 include elements on a diagonal of the auto-correlation matrix #1 and an element below the diagonal.

For example, when $N^s=2$, one auto-correlation matrix #1 $\mathbf{A}_{SS}$ in the at least one auto-correlation matrix #1 is a 2*2 matrix:

$$\mathbf{A}_{SS} = \begin{bmatrix} a_{11} & a_{12} \\ a_{21} & a_{22} \end{bmatrix}.$$

The first indication information may include all elements in $\mathbf{A}_{SS}$, that is, include $a_{11}$, $a_{12}$, $a_{21}$, and $a_{22}$.

The first indication information may include elements of an upper triangular part in $\mathbf{A}_{SS}$, that is, include $a_{11}$, $a_{12}$, and $a_{22}$. Correspondingly, the network device may obtain a remaining element, that is, $a_{21}=a_{12}^{H}$, by using a conjugate symmetry feature of the auto-correlation matrix, that is, $\mathbf{A}_{SS}=\mathbf{A}_{SS}^{H}$.

The first indication information may include elements of a lower triangular part in $\mathbf{A}_{SS}$, that is, include $a_{11}$, $a_{21}$, and $a_{22}$. Correspondingly, the network device may obtain a remaining element, that is, $a_{12}=a_{21}^{H}$, by using a conjugate symmetry feature of the auto-correlation matrix, that is, $\mathbf{A}_{SS}=\mathbf{A}_{SS}^{H}$.

The following describes the auto-correlation information of the second channel. The auto-correlation information of the second channel includes at least one auto-correlation matrix #2.

Example a: One of the at least one auto-correlation matrix #2 corresponds to one or more of the $N^t$ antennas of the network device, and corresponds to all or a part of $N^f$ frequency domain units or $N^f$ delays. It may be understood that each of the at least one cross-correlation matrix corresponds to a different antenna in the $N^t$ antennas. Each of the at least one auto-correlation matrix #2 corresponds to a same frequency domain unit or a same delay. For example, each of the at least one auto-correlation matrix #2 corresponds to the $N^f$ frequency domain units, or each of the at least one auto-correlation matrix #2 corresponds to the $N^f$ delays, and each of the at least one auto-correlation matrix #2 corresponds to $N^f/2$ frequency domain units in the $N^f$ frequency domain units.

An auto-correlation matrix #2 corresponding to $N^{t'}$ antennas in the $N^t$ antennas of the network device and $N^{f'}$ frequency domain units in the $N^f$ frequency domain units is an auto-correlation matrix of a channel matrix that corresponds to the $N^{s'}$ antennas of the terminal device and the $N^{t'}$ antennas and that is on the $N^{f'}$ frequency domain units. Similarly, an auto-correlation matrix #2 corresponding to $N^{t'}$ antennas in the $N^t$ antennas of the network device and $N^{f'}$ frequency domain units in the $N^f$ delays is an auto-correlation matrix of a channel matrix that corresponds to the $N^{s'}$ antennas of the terminal device and the $N^{t'}$ antennas and that is on the $N^{f'}$ frequency domain units.

For example, a quantity of the at least one auto-correlation matrix #2 is $N^t$, and each of the $N^t$ auto-correlation matrices #2 corresponds to one of the $N^t$ antennas, and corresponds to the $N^f$ frequency domain units. In this case, a dimension of each of the at least one auto-correlation matrix #2 is $N^{s'}*N^{s'}$.

For another example, a quantity of the at least one auto-correlation matrix #2 is $N^t/2$, and each of the $N^t/2$ auto-correlation matrices #2 corresponds to two of the $N^t$ antennas, and corresponds to the $N^f$ delays.

For another example, a quantity of the at least one auto-correlation matrix #2 is $N^t/2$, the $N^t/2$ auto-correlation matrices #2 correspond to $N^t/2$ antennas in the $N^t$ antennas, and each of the $N^t/2$ auto-correlation matrices #2 corresponds to one of the $N^t/2$ antennas, and corresponds to the $N^f$ delays.

Example b: One of the at least one auto-correlation matrix #2 corresponds to one or more of $N^t$ beams, and corresponds to all or a part of the $N^f$ frequency domain units or the $N^f$ delays. It may be understood that each of the at least one auto-correlation matrix #2 corresponds to a different beam in the $N^t$ beams. Each of the at least one auto-correlation matrix #2 corresponds to a same frequency domain unit or a same delay. For example, each of the at least one auto-correlation matrix #2 corresponds to the $N^f$ frequency domain units, or each of the at least one auto-correlation matrix #2 corresponds to the $N^f$ delays, and each of the at least one auto-correlation matrix #2 corresponds to $N^f/2$ frequency domain units in the $N^f$ frequency domain units.

An auto-correlation matrix #2 corresponding to $N^{t'}$ beams in the $N^t$ beams and $N^{f'}$ frequency domain units in the $N^f$ frequency domain units is an auto-correlation matrix of a channel matrix that corresponds to the $N^{s'}$ antennas of the terminal device and the $N^{t'}$ beams and that is on the $N^{f'}$ frequency domain units. Similarly, an auto-correlation matrix #2 corresponding to $N^{t'}$ beams in the $N^t$ beams and $N^{f'}$ frequency domain units in the $N^f$ delays is an auto-correlation matrix of a channel matrix that corresponds to the $N^{s'}$ antennas of the terminal device and the $N^{t'}$ beams and that is on the $N^{f'}$ frequency domain units.

For example, a quantity of the at least one auto-correlation matrix #2 is $N^t$, and each of the $N^t$ auto-correlation matrices #2 corresponds to one of the $N^t$ beams, and corresponds to the $N^f$ frequency domain units. In this case, a dimension of each of the at least one auto-correlation matrix #2 is $N^{s'}*N^{s'}$.

For another example, a quantity of the at least one auto-correlation matrix #2 is $N^t/2$, and each of the $N^t/2$ auto-correlation matrices #2 corresponds to two of the $N^t$ beams, and corresponds to the $N^f$ delays.

For another example, a quantity of the at least one auto-correlation matrix #2 is $N^t/2$, the $N^t/2$ auto-correlation matrices #2 correspond to $N^t/2$ beams in the $N^t$ beams, and each of the $N^t/2$ auto-correlation matrices #2 corresponds to one of the $N^t/2$ beams, and corresponds to the $N^f$ delays.

Example c: One of the at least one auto-correlation matrix #2 corresponds to one or more of the $N^f$ frequency domain units, and corresponds to all or a part of the $N^t$ antennas or the $N^t$ beams. It may be understood that each of the at least one auto-correlation matrix #2 corresponds to a different frequency domain unit. Each of the at least one auto-correlation matrix #2 corresponds to a same beam or a same antenna. For example, each of the at least one auto-correlation matrix #2 corresponds to the $N^t$ antennas, or each of the at least one auto-correlation matrix #2 corresponds to the $N^t$ beams, and each of the at least one auto-correlation matrix #2 corresponds to $N^t/2$ antennas in the $N^t$ antennas.

For example, a quantity of the at least one auto-correlation matrix #2 is $N^f$, and each of the $N^f$ auto-correlation matrices #2 corresponds to one of the $N^f$ frequency domain units, and corresponds to the $N^t$ antennas. In this case, a dimension of each of the at least one auto-correlation matrix #2 is $N^{s'}*N^{s'}$.

For another example, a quantity of the at least one auto-correlation matrix #2 is $N^f/2$, and each of the $N^f/2$ auto-correlation matrices #2 corresponds to two of the $N^f$ frequency domain units, and corresponds to the $N^t$ beams.

For another example, a quantity of the at least one auto-correlation matrix #2 is $N^f/2$, the $N^f/2$ auto-correlation matrices #2 correspond to $N^f/2$ frequency domain units in the $N^f$ frequency domain units, and each of the $N^f/2$ auto-correlation matrices #2 corresponds to one of the $N^f/2$ frequency domain units, and corresponds to the $N^t$ beams.

Example d: One of the at least one auto-correlation matrix #2 corresponds to one or more of the $N^f$ delays, and corresponds to all or a part of the $N^t$ antennas or the $N^t$ beams. It may be understood that each of the at least one auto-correlation matrix #2 corresponds to a different delay. Each of the at least one auto-correlation matrix #2 corresponds to a same antenna or a same beam. For example, each of the at least one auto-correlation matrix #2 corresponds to the $N^t$ antennas, or each of the at least one auto-correlation matrix #2 corresponds to the $N^t$ beams, and each of the at least one auto-correlation matrix #2 corresponds to $N^t/2$ antennas in the $N^t$ antennas.

For example, a quantity of the at least one auto-correlation matrix #2 is $N^f$, and each of the $N^f$ auto-correlation matrices #2 corresponds to one of the $N^f$ delays, and corresponds to the $N^t$ antennas. In this case, a dimension of each of the at least one auto-correlation matrix #2 is $N^{s'}*N^{s'}$.

For another example, a quantity of the at least one auto-correlation matrix #2 is $N^f/2$, and each of the $N^f/2$ auto-correlation matrices #2 corresponds to two of the $N^f$ delays, and corresponds to the $N^t$ beams.

For another example, a quantity of the at least one auto-correlation matrix #2 is $N^f/2$, the $N^f/2$ auto-correlation matrices #2 correspond to $N^f/2$ delays in the $N^f$ delays, and each of the $N^f/2$ auto-correlation matrices #2 corresponds to one of the $N^f/2$ delays, and corresponds to the $N^t$ beams.

Optionally, when the second channel includes channels corresponding to antennas in different polarization directions in the $N^{s'}$ antennas of the terminal device, the auto-correlation information of the second channel includes auto-correlation information of the channels corresponding to the antennas in the different polarization directions in the $N^{s'}$ antennas. Auto-correlation information of a channel corresponding to an antenna in an $i^{th}$ polarization direction in the $N^{s'}$ antennas is used as an example. The auto-correlation information of the channel corresponding to the antenna in the $i^{th}$ polarization direction in the $N^{s'}$ antennas includes at least one auto-correlation matrix #2i, where one of the at least one auto-correlation matrix #2i corresponds to $N^{s'i}$ antennas and one or more of the $N^t$ antennas, and corresponds to all or a part of the $N^f$ frequency domain units or the $N^f$ delays; one of the at least one auto-correlation matrix #2i corresponds to $N^{s'i}$ antennas and one or more of the $N^t$ beams, and corresponds to all or a part of the $N^f$ frequency domain units or the $N^f$ delays; one of the at least one auto-correlation matrix #2i corresponds to $N^{s'i}$ antennas and one or more of the $N^f$ frequency domain units, and corresponds to all or a part of the $N^t$ antennas or the $N^t$ beams; or one of the at least one auto-correlation matrix #2i corresponds to $N^{s'i}$ antennas and one or more of the $N^f$ delays, and corresponds to all or a part of the $N^t$ antennas or the $N^t$ beams. $N^{s'i}$ is a quantity of antennas in the $i^{th}$ polarization direction in the $N^{s'}$ antennas.

When the first indication information is used to determine the auto-correlation information of the second channel, the first indication information includes one or more of the following: all elements of one or more of the at least one auto-correlation matrix #2, elements of an upper triangular part of one or more of the at least one auto-correlation matrix #2, or elements of a lower triangular part of one or more of the at least one auto-correlation matrix #2. The elements of the upper triangular part of the auto-correlation matrix #2 include elements on a diagonal of the auto-correlation matrix #2 and an element above the diagonal. The elements of the lower triangular part of the auto-correlation matrix #2 include elements on a diagonal of the auto-correlation matrix #2 and an element below the diagonal.

For example, when $N^{s'}=2$, one auto-correlation matrix #2 $\mathbf{B}_{SS}$ in the at least one auto-correlation matrix #2 is a 2*2 matrix:

$$\mathbf{B}_{SS} = \begin{bmatrix} b_{11} & b_{12} \\ b_{21} & b_{22} \end{bmatrix}.$$

The first indication information may include all elements in $\mathbf{B}_{SS}$, that is, include $b_{11}$, $b_{12}$, $b_{21}$, and $b_{22}$.

The first indication information may include elements of an upper triangular part in $\mathbf{B}_{SS}$, that is, include $b_{11}$, $b_{12}$, and $b_{22}$. Correspondingly, the network device may obtain a remaining element, that is, $b_{21}=b_{12}^H$, by using a conjugate symmetry feature of the auto-correlation matrix, that is, $\mathbf{B}_{SS}=\mathbf{B}_{SS}^H$.

The first indication information may include elements of a lower triangular part in $\mathbf{B}_{SS}$, that is, include $b_{11}$, $b_{21}$, and $b_{22}$. Correspondingly, the network device may obtain a remaining element, that is, $b_{12}=b_{21}^H$, by using a conjugate symmetry feature of the auto-correlation matrix, that is, $\mathbf{B}_{SS}=\mathbf{B}_{SS}^H$.

The following describes the cross-correlation information of the first channel and the second channel. The cross-correlation information of the first channel and the second channel includes at least one cross-correlation matrix.

Example A: One of the at least one cross-correlation matrix corresponds to one or more of the $N^t$ antennas of the network device, and corresponds to all or a part of $N^f$ frequency domain units or $N^f$ delays. It may be understood that each of the at least one cross-correlation matrix corresponds to a different antenna in the $N^t$ antennas. Each of the at least one cross-correlation matrix corresponds to a same frequency domain unit or a same delay. For example, each of the at least one cross-correlation matrix corresponds to the $N^f$ frequency domain units, or each of the at least one cross-correlation matrix corresponds to the $N^f$ delays, and each of the at least one cross-correlation matrix corresponds to $N^f/2$ frequency domain units in the $N^f$ frequency domain units.

A cross-correlation matrix corresponding to $N^{t'}$ antennas in the $N^t$ antennas of the network device and $N^{f'}$ frequency domain units in the $N^f$ frequency domain units is a cross-correlation matrix of a channel matrix #2 and a channel matrix #3. The channel matrix #2 is a channel matrix that corresponds to the $N^s$ antennas of the terminal device and the $N^{t'}$ antennas and that is on the $N^{f'}$ frequency domain units, and the channel matrix #3 is a channel matrix that corresponds to the $N^{s'}$ antennas of the terminal device and the $N^{t'}$ antennas and that is on the $N^{f'}$ frequency domain units. Similarly, a cross-correlation matrix corresponding to $N^{t'}$ antennas in the $N^t$ antennas of the network device and $N^{f'}$ frequency domain units in the $N^f$ delays is a cross-correlation matrix of a channel matrix #4 and a channel matrix #5. The channel matrix #4 is a channel matrix that corresponds to the $N^s$ antennas of the terminal device and the $N^{t'}$ antennas and that is on the $N^{f'}$ frequency domain units, and the channel matrix #5 is a channel matrix that corresponds to the $N^{s'}$ antennas of the terminal device and the $N^{t'}$ antennas and that is on the $N^{f'}$ frequency domain units.

For example, a quantity of the at least one cross-correlation matrix is $N^t$, and each of the $N^t$ cross-correlation matrices corresponds to one of the $N^t$ antennas, and corresponds to the $N^f$ frequency domain units. In this case, a dimension of each of the at least one cross-correlation matrix is $N^s*N^{s'}$ or $N^{s'}*N^s$.

For another example, a quantity of the at least one cross-correlation matrix is $N^t/2$, and each of the $N^t/2$ cross-correlation matrices corresponds to two of the $N^t$ antennas, and corresponds to the $N^f$ delays.

For another example, a quantity of the at least one cross-correlation matrix is $N^t/2$, $N^t/2$ cross-correlation matrices correspond to $N^t/2$ antennas in the $N^t$ antennas, and each of the $N^t/2$ cross-correlation matrices corresponds to one of the $N^t/2$ antennas, and corresponds to the $N^f$ delays.

Example B: One of the at least one cross-correlation matrix corresponds to one or more of the $N^t$ beams, and corresponds to all or a part of the $N^f$ frequency domain units or the $N^f$ delays. It may be understood that each of the at least one cross-correlation matrix corresponds to a different beam in the $N^t$ beams. Each of the at least one cross-correlation matrix corresponds to a same frequency domain unit or a same delay. For example, each of the at least one cross-correlation matrix corresponds to the $N^f$ frequency domain units, or each of the at least one cross-correlation matrix corresponds to the $N^f$ delays, and each of the at least one cross-correlation matrix corresponds to $N^f/2$ frequency domain units in the $N^f$ frequency domain units.

A cross-correlation matrix corresponding to $N^{t'}$ beams in the $N^t$ beams and $N^{f'}$ frequency domain units in the $N^f$ frequency domain units is a cross-correlation matrix of a channel matrix #6 and a channel matrix #7. The channel matrix #6 is a channel matrix that corresponds to the $N^s$ antennas of the terminal device and the $N^{t'}$ beams and that is on the $N^{f'}$ frequency domain units, and the channel matrix #7 is a channel matrix that corresponds to the $N^{s'}$ antennas of the terminal device and the $N^{t'}$ beams and that is on the $N^{f'}$ frequency domain units. Similarly, a cross-correlation matrix corresponding to $N^{t'}$ beams in the $N^t$ beams and $N^{f'}$ frequency domain units in the $N^f$ delays is a cross-correlation matrix of a channel matrix #8 and a channel matrix #9. The channel matrix #8 is a channel matrix that corresponds to the $N^s$ antennas of the terminal device and the $N^{t'}$ beams and that is on the $N^{f'}$ frequency domain units, and the channel matrix #9 is a channel matrix that corresponds to the $N^{s'}$ antennas of the terminal device and the $N^{t'}$ beams and that is on the $N^{f'}$ frequency domain units.

For example, a quantity of the at least one cross-correlation matrix is $N^t$, and each of the $N^t$ cross-correlation matrices corresponds to one of the $N^t$ beams, and corresponds to the $N^f$ frequency domain units. In this case, a dimension of each of the at least one cross-correlation matrix is $N^s*N^{s'}$ or $N^{s'}*N^s$.

For another example, a quantity of the at least one cross-correlation matrix is $N^t/2$, and each of the $N^t/2$ cross-correlation matrices corresponds to two of the $N^t$ beams, and corresponds to the $N^f$ delays.

For another example, a quantity of the at least one cross-correlation matrix is $N^t/2$, the $N^t/2$ cross-correlation matrices correspond to $N^t/2$ beams in the $N^t$ beams, and each of the $N^t/2$ cross-correlation matrices corresponds to one of the $N^t/2$ beams, and corresponds to the $N^f$ delays.

Example C: One of the at least one cross-correlation matrix corresponds to one or more of the $N^f$ frequency domain units, and corresponds to all or a part of the $N^t$ antennas or the $N^t$ beams. It may be understood that each of the at least one cross-correlation matrix corresponds to a different frequency domain unit. Each of the at least one cross-correlation matrix corresponds to a same beam or a same antenna. For example, each of the at least one cross-correlation matrix corresponds to the $N^t$ antennas, or each of the at least one cross-correlation matrix corresponds to the $N^t$ beams, and each of the at least one cross-correlation matrix corresponds to $N^t/2$ antennas in the $N^t$ antennas.

For example, a quantity of the at least one cross-correlation matrix is $N^f$, and each of the $N^f$ cross-correlation matrices #1 corresponds to one of the $N^f$ frequency domain units, and corresponds to the $N^t$ antennas. In this case, a dimension of each of the at least one cross-correlation matrix is Ns*Ns' or Ns'*Ns.

For another example, a quantity of the at least one cross-correlation matrix is $N^f/2$, and each of the $N^f/2$ cross-correlation matrices corresponds to two of the $N^f$ frequency domain units, and corresponds to the $N^t$ beams.

For another example, a quantity of the at least one cross-correlation matrix is $N^f/2$, the $N^f/2$ cross-correlation matrices correspond to $N^f/2$ frequency domain units in the $N^f$ frequency domain units, and each of the $N^f/2$ cross-correlation matrices corresponds to one of the $N^f/2$ frequency domain units, and corresponds to the $N^t$ beams.

Example D: One of the at least one cross-correlation matrix corresponds to one or more of the $N^f$ delays, and corresponds to all or a part of the $N^t$ antennas or the $N^t$ beams. It may be understood that each of the at least one cross-correlation matrix corresponds to a different delay. Each of the at least one cross-correlation matrix corresponds to a same antenna or a same beam. For example, each of the at least one cross-correlation matrix corresponds to the $N^t$ antennas, or each of the at least one cross-correlation matrix corresponds to the $N^t$ beams, and each of the at least one cross-correlation matrix corresponds to $N^t/2$ antennas in the $N^t$ antennas.

For example, a quantity of the at least one cross-correlation matrix is $N^f$, and each of the $N^f$ cross-correlation matrices corresponds to one of the $N^f$ delays, and corresponds to the $N^t$ antennas. In this case, a dimension of each of the at least one cross-correlation matrix is $N^s*N^{s'}$ or $N^{s'}*N^s$.

For another example, a quantity of the at least one cross-correlation matrix is $N^f/2$, and each of the $N^f/2$ cross-correlation matrices corresponds to two of the $N^f$ delays, and corresponds to the $N^t$ beams.

For another example, a quantity of the at least one cross-correlation matrix is $N^f/2$, the $N^f/2$ cross-correlation matrices correspond to $N^f/2$ delays in the $N^f$ delays, and each of the $N^f/2$ cross-correlation matrices corresponds to one of the $N^f/2$ delays, and corresponds to the $N^t$ beams.

Optionally, when the terminal device includes antennas in I polarization directions, the cross-correlation information of the first channel and the second channel includes related information corresponding to different polarization directions. An example in which an $i^{th}$ polarization direction corresponds to cross-correlation information is used. The cross-correlation information corresponding to the $i^{th}$ polarization direction includes at least one cross-correlation matrix #i, where one of the at least one cross-correlation matrix #i corresponds to $N^{s,i}$ antennas, $N^{s',i}$ antennas, and one or more of the $N^t$ antennas, and corresponds to all or a part of the $N^f$ frequency domain units or the $N^f$ delays; one of the at least one cross-correlation matrix #i corresponds to $N^{s,i}$ antennas, $N^{s',i}$ antennas, and one or more of the $N^t$ beams, and corresponds to all or a part of the $N^f$ frequency domain units or the $N^f$ delays; one of the at least one cross-correlation matrix #i corresponds to $N^{s,i}$ antennas, $N^{s',i}$ antennas, and one or more of the $N^f$ frequency domain units, and corresponds to all or a part of the $N^t$ antennas or the $N^t$ beams; or one of the at least one cross-correlation matrix #i corresponds to $N^{s,i}$ antennas, $N^{s',i}$ antennas, and one or more of the $N^f$ delays, and corresponds to all or a part of the $N^t$ antennas or the $N^t$ beams.

When the first indication information is used to determine the cross-correlation information of the first channel and the second channel, the first indication information includes all elements of one or more of the at least one cross-correlation matrix.

For example, when $N^{s'}=2$ and $N^s=2$, one cross-correlation matrix $\mathbf{C}_{SS}$ in the at least one cross-correlation matrix is a 2*2 matrix:

$$\mathbf{C}_{SS} = \begin{bmatrix} c_{11} & c_{12} \\ c_{21} & c_{22} \end{bmatrix}.$$

The first indication information may include all elements in $\mathbf{C}_{SS}$, that is, include $c_{11}$, $c_{12}$, $c_{21}$, and $c_{22}$.

In S230a, after receiving the first indication information from the terminal device, the network device may determine the first information based on the first indication information. Specifically, the network device determines the auto-correlation information of the first channel and the cross-correlation information of the first channel and the second channel based on the first indication information.

For example, if the first indication information includes a parameter used to determine the auto-correlation information of the first channel, the network device may directly determine the auto-correlation information of the first channel based on the first indication information. If the first indication information does not include a parameter used to determine the auto-correlation information of the first channel, the network device may determine the first channel based on the first reference signal resource set, and further determine the auto-correlation information of the first channel.

If the first indication information includes a parameter used to determine the cross-correlation information of the first channel and the second channel, the network device may directly determine the cross-correlation information of the first channel and the second channel based on the first indication information.

S230b1: The terminal device and the network device determine the second reference signal resource set.

The second reference signal resource set includes the $N^r$ reference signal ports, and the $N^r$ reference signal ports include the $N^s$ reference signal ports. That the second reference signal resource set includes the $N^r$ reference signal ports may also be understood as that reference signal resources included in the second reference signal resource set include the $N^r$ reference signal ports, and are used to transmit the reference signals of the $N^r$ reference signal ports. For example, the second reference signal resource set is a second SRS resource set, and the reference signal port is an SRS port.

The second reference signal resource set is used to determine the third channel. That the second reference signal resource set is used to determine the third channel may also be understood as that a second reference signal transmitted on the second reference signal resource set is used to determine the third channel. For example, the second reference signal is a second SRS.

For example, a sending periodicity of the second reference signal is greater than a sending periodicity of the first reference signal.

After determining the third reference signal resource set, the network device may determine the third channel based on the third reference signal resource set.

For example, a periodicity for determining the third reference signal resource set by the network device is greater than a periodicity for determining the first reference signal resource set. It is equivalent to describing that a periodicity for determining the third channel by the network device is greater than a periodicity for determining the first channel by the network device.

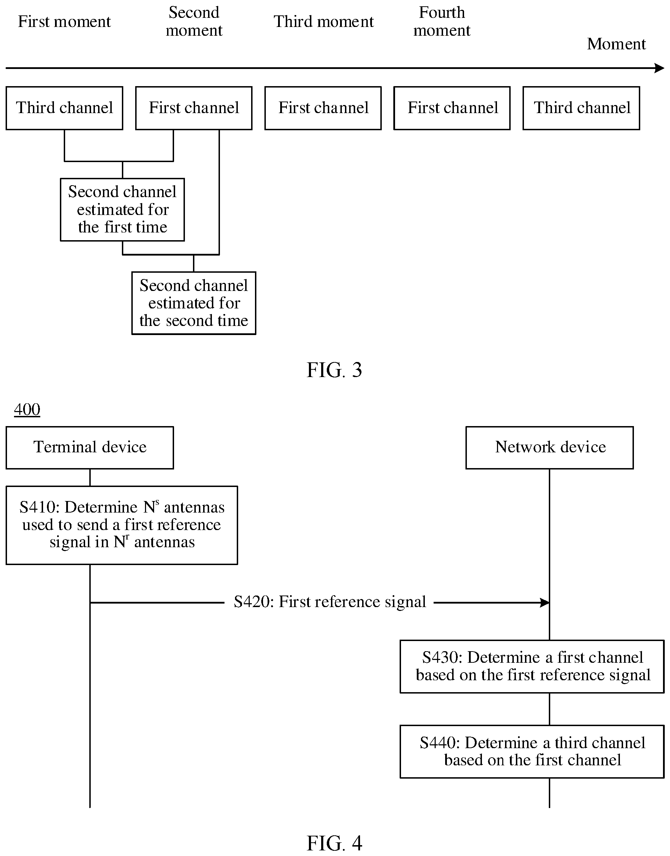

As shown in FIG. 3, the periodicity for determining the third channel by the network device is four times the periodicity for determining the first channel. To be specific, after determining the third channel for the first time, the terminal device determines the first channel for three times, and then determines the third channel for the second time.

S230b2: The network device determines a correspondence between the $N^s$ reference signal ports and the $N^r$ reference signal ports.

For ease of description, the correspondence between the $N^s$ reference signal ports and the $N^r$ reference signal ports is denoted as a correspondence #1 below.

In a possible implementation, the terminal device sends second indication information to the network device, where the second indication information indicates the correspondence #1. Correspondingly, the network device receives the second indication information from the terminal device, and determines the correspondence #1 based on the second indication information.

In another possible implementation, the network device determines the correspondence #1 in a protocol-predefined manner. The protocol-predefined manner includes one or more of the following: determining the correspondence #1 based on indexes of the $N^s$ reference signal ports and indexes of the $N^r$ reference signal ports; determining the correspondence #1 based on cyclic shifts of reference signals of the $N^s$ reference signal ports and cyclic shifts of reference signals of the $N^r$ reference signal ports; or determining the correspondence #1 based on a frequency domain resource used to carry reference signals of the $N^s$ reference signal ports and a frequency domain resource used to carry reference signals of the $N^r$ reference signal ports.

For example, the frequency domain resource used to carry the reference signals of the $N^r$ reference signal ports is an RB #1 to an RB #$N^f$, and the frequency domain resource used to carry the reference signals of the $N^s$ reference signal ports is the RB #1 to an RB #$N^f/2$. In this case, the network device may determine that the $N^s$ reference signal ports are the first $N^r/2$ reference signal ports in the $N^r$ reference signal ports.

For another example, the indexes of the $N^r$ reference signal ports are $p_0, p_1,..., p_{N^r-1}$, and the indexes of the $N^s$ reference signal ports are $p_0, p_1,..., p_{N^s-1}$. In this case, the network device may determine that the $N^s$ reference signal ports are the first $N^s$ reference signal ports in the $N^r$ reference signal ports.

It may be understood that the terminal device may also determine the correspondence #1 in the foregoing protocol-predefined manner.

After determining the correspondence #1, the network device may determine the first information based on the first channel and the correspondence #1. Specifically, the network device determines the auto-correlation information of the first channel based on the first channel, and determines the cross-correlation information of the first channel and the second channel based on the first channel and the correspondence #1.

With reference to FIG. 3, the following describes a manner in which the network device determines the cross-correlation information of the first channel and the second channel based on the first channel and the correspondence #1.

As shown in FIG. 3, it is assumed that the network device determines the third channel at a first moment based on the second reference signal resource set, and determines the first channel at a second moment based on the first reference signal resource set. Further, the network device may obtain, based on the third channel and the first channel, the second channel estimated for the first time. Further, the network device may obtain the cross-correlation information of the first channel and the second channel based on the first channel and the second channel that is estimated for the first time.

A manner in which the network device determines the cross-correlation information of the first channel and the second channel is described by using a cross-correlation matrix corresponding to an $(n^t)^{th}$ antenna in the $N^t$ antennas of the network device and the $N^f$ frequency domain units as an example. $n^t=1, 2, ..., N^t$.

The third channel determined by the network device at the first moment includes a channel matrix #a corresponding to the $N^r$ antennas, the $(n^t)^{th}$ antenna, and the $N^f$ frequency domain units, and a dimension of the channel matrix #a is $N^r*N^f$. Further, after removing, from the channel matrix #a based on the correspondence #1, $N^s$ rows corresponding to the $N^s$ reference channel ports, the network device obtains a channel matrix #b that is included in the second channel estimated for the first time and that corresponds to the $N^{s'}$ antennas, the $(n^t)^{th}$ antenna, and the $N^f$ frequency domain units, and a dimension of the channel matrix #b is $N^{s'}*N^f$. The first channel determined by the network device at the second moment includes a channel matrix #c corresponding to the $N^s$ antennas, the $(n^t)^{th}$ antenna, and the $N^f$ frequency domain units, and a dimension of the channel matrix #c is $N^s*N^f$. Further, the network device obtains, based on the channel matrix #c and the channel matrix #b, a cross-correlation matrix corresponding to the $(n^t)^{th}$ antenna and the $N^f$ frequency domain units at the second moment, and a dimension of the cross-correlation matrix is $N^s*N^{s'}$ or $N^{s'}*N^s$.

Similarly, the first channel determined by the network device at a third moment includes a channel matrix #d corresponding to the $N^s$ antennas, the $(n^t)^{th}$ antenna, and the $N^f$ frequency domain units, and a dimension of the channel matrix #d is $N^s*N^f$. Further, the network device obtains, based on the channel matrix #d and the channel matrix #b, a cross-correlation matrix corresponding to the $(n^t)^{th}$ antenna and the $N^f$ frequency domain units at the third moment, and a dimension of the cross-correlation matrix is $N^s*N^{s'}$ or $N^{s'}*N^s$.

Similarly, the network device may also determine, in the foregoing manner, a cross-correlation matrix corresponding to the $(n^t)^{th}$ antenna and the $N^f$ frequency domain units at a fourth moment.

S240: The network device determines the second channel based on the first channel.

After obtaining the first information, the network device may determine the second channel based on the first channel and the first information. Specifically, the network device determines the second channel based on the first channel, the auto-correlation information of the first channel, and the cross-correlation information of the first channel and the second channel.

The following describes a manner in which the network device determines the second channel.

It is assumed that the auto-correlation information of the first channel obtained by the network device includes $N^t$ auto-correlation matrices #1, and each of the $N^t$ auto-correlation matrices #1 corresponds to one of the $N^t$ antennas, and corresponds to the $N^f$ frequency domain units. The cross-correlation information of the first channel and the second channel obtained by the network device includes $N^t$ cross-correlation matrices, and each of the $N^t$ cross-correlation matrices corresponds to one of the $N^t$ antennas, and corresponds to the $N^f$ frequency domain units. Further, the network device may determine, based on an auto-correlation matrix #1 that corresponds to the $(n^t)^{th}$ antenna in the $N^t$ auto-correlation matrices #1 and a cross-correlation matrix that corresponds to the $(n^t)^{th}$ antenna in the $N^t$ cross-correlation matrices, a channel matrix that is included in the second channel and that corresponds to the $(n^t)^{th}$ antenna and the $N^f$ frequency domain units.

The auto-correlation matrix #1 corresponding to the $(n^t)^{th}$ antenna is denoted as $\rho_1$, and a dimension of $\rho_1$ is $N^s*N^s$. The cross-correlation matrix corresponding to the $(n^t)^{th}$ antenna is denoted as $\rho_2$, and a dimension of $\rho_2$ is $N^{s'}*N^s$. A channel matrix that is included in the first channel and that corresponds to the $(n^t)^{th}$ antenna and the $N^f$ frequency domain units is denoted as $\mathbf{H}_2^{nt}$, and a dimension of $\mathbf{H}_2^{nt}$ is $N^s*N^f$. Further, the network device obtains a minimum mean square error (minimum mean square error, MMSE) extrapolation matrix $\mathbf{G}_2^{nt}$ according to a formula $\mathbf{G}_2^{nt} = \rho_2 (\rho_1)^{-1}$, and a dimension of $\mathbf{G}_2^{nt}$ is $N^{s'}*N^s$. Further, the network device obtains, according to a formula $\mathbf{H}_3^{nt} = \mathbf{G}_2^{nt} * \mathbf{H}_2^{nt}$, the channel matrix $\mathbf{H}_3^{nt}$ that is included in the second channel and that corresponds to the $(n^t)^{th}$ antenna and the $N^f$ frequency domain units, and a dimension of $\mathbf{H}_3^{nt}$ is $N^{s'}*N^f$.

Similarly, in the foregoing manner, the network device may determine a channel matrix that is included in the second channel and that corresponds to each of the $N^t$ antennas, so that the network device may obtain the second channel whose dimension is $N^t*N^{s'}*N^f$.

For another example, it is assumed that the auto-correlation information of the first channel obtained by the network device includes $N^t$ auto-correlation matrices #1, and each of the $N^t$ auto-correlation matrices #1 corresponds to one of the $N^t$ beams, and corresponds to the $N^f$ frequency domain units. The cross-correlation information of the first channel and the second channel obtained by the network device includes $N^t$ cross-correlation matrices, and each of the $N^t$ cross-correlation matrices corresponds to one of the $N^t$ beams, and corresponds to the $N^f$ frequency domain units. Further, the network device may determine, based on an auto-correlation matrix #1 that corresponds to an $(n^t)^{th}$ beam in the $N^t$ auto-correlation matrices #1 and a cross-correlation matrix that corresponds to the $(n^t)^{th}$ beam in the $N^t$ cross-correlation matrices, a channel matrix that is included in the second channel and that corresponds to the $(n^t)^{th}$ beam and the $N^f$ frequency domain units.

The auto-correlation matrix #1 corresponding to the $(n^t)^{th}$ beam is denoted as $\rho_1$, and a dimension of $\rho_1$ is $N^s*N^s$. The cross-correlation matrix corresponding to the $(n^t)^{th}$ beam is denoted as $\rho_2$, and a dimension of $\rho_2$ is $N^{s'}*N^s$. A channel matrix that is included in the first channel and that corresponds to the $(n^t)^{th}$ beam and the $N^f$ frequency domain units is denoted as $\mathbf{H}_{2beam}^{nt}$, and a dimension of $\mathbf{H}_{2beam}^{nt}$ is $N^s*N^f$. Further, the network device obtains an MMSE extrapolation matrix $\mathbf{G}_2^{nt}$ according to a formula $\mathbf{G}_2^{nt} = \rho_2 (\rho_1)^{-1}$, and a dimension of $\mathbf{G}_2^{nt}$ is $N^{s'}*N^s$. Further, the network device obtains, according to a formula $\mathbf{H}_{3beam}^{nt} = \mathbf{G}_2^{nt} * \mathbf{H}_{2beam}^{nt}$, the channel matrix $\mathbf{H}_{3beam}^{nt}$ that is included in the second channel and that corresponds to the $(n^t)^{th}$ beam and the $N^f$ frequency domain units, and a dimension of $\mathbf{H}_{3beam}^{nt}$ is $N^{s'}*N^f$.

Similarly, in the foregoing manner, the network device may determine a channel matrix that is included in the second channel and that corresponds to each of the $N^t$ beams, so that the network device may obtain the second channel whose dimension is $N^t*N^{s'}*N^f$ by performing transformation from a beam domain to an antenna domain.

Optionally, if the terminal device includes antennas in I different polarization directions, the network device may determine channel matrices that are included in the second channel and that correspond to the different polarization directions.

It is assumed that the auto-correlation information of the first channel obtained by the network device is auto-correlation information corresponding to an $i^{th}$ polarization direction, the auto-correlation information corresponding to the $i^{th}$ polarization direction includes $N^t$ auto-correlation matrices #1i, and each of the $N^t$ auto-correlation matrices #1i corresponds to one of the $N^t$ antennas, and corresponds to the $N^f$ frequency domain units. The cross-correlation information of the first channel and the second channel obtained by the network device includes $N^t$ cross-correlation matrices #i, and each of the $N^t$ cross-correlation matrices #i corresponds to one of the $N^t$ antennas, and corresponds to the $N^f$ frequency domain units. Further, the network device may determine, based on an auto-correlation matrix #1i that corresponds to the $(n^t)^{th}$ antenna in the $N^t$ auto-correlation matrices #1i and a cross-correlation matrix #i that corresponds to the $(n^t)^{th}$ antenna in the $N^t$ cross-correlation matrices #i, a channel matrix that is included in the second channel and that corresponds to the $i^{th}$ polarization direction, the $(n^t)^{th}$ antenna, and the $N^f$ frequency domain units.

The auto-correlation matrix #1i corresponding to the $(n^t)^{th}$ antenna is denoted as $\rho_{1,i}$, and a dimension of $\rho_{1,i}$ is $N^{s,i}*N^{s,i}$. The cross-correlation matrix #i corresponding to the $(n^t)^{th}$ antenna is denoted as $\rho_{2,i}$, and a dimension of $\rho_{2,i}$ is $N^{s',i}*N^{s,i}$. A channel matrix that is included in the first channel and that corresponds to the $i^{th}$ polarization direction, the $(n^t)^{th}$ antenna, and the $N^f$ frequency domain units is denoted as $\mathbf{H}_{2,i}^{nt}$, and a dimension of $\mathbf{H}_{2,i}^{nt}$ is $N^{s,i}*N^f$. Further, the network device obtains an MMSE extrapolation matrix $\mathbf{G}_{2,i}^{nt}$ according to a formula $\mathbf{G}_{2,i}^{nt} = \boldsymbol{\rho}_{2,i}(\boldsymbol{\rho}_{1,i})^{-1}$, and a dimension of $\mathbf{G}_{2,i}^{nt}$ is $N^{s',i}*N^{s,i}$. Further, the network device obtains, according to a formula $\mathbf{H}_{3,i}^{nt} = \mathbf{G}_{2,i}^{nt} * \mathbf{H}_{2,i}^{nt}$, the channel matrix $\mathbf{H}_{3,i}^{nt}$ that is included in the second channel and that corresponds to the $i^{th}$ polarization direction, the $(n^t)^{th}$ antenna, and the $N^f$ frequency domain units, and a dimension of $\mathbf{H}_{3,i}^{nt}$ is $N^{s',i}*N^f$.

Similarly, in the foregoing manner, the network device may determine a channel matrix that is included in the second channel and that corresponds to the $i^{th}$ polarization direction and each of the $N^t$ antennas, so that the network device may obtain a second channel with a dimension of $N^{t}*N^{s',i}*N^f$ that is included in the second channel and that corresponds to the $i^{th}$ polarization direction.

After determining the second channel, the network device may determine the third channel based on the first channel and the second channel.

For example, as shown in FIG. 3, if the cross-correlation information of the first channel and the second channel obtained by the network device is determined based on the first channel and the second channel that is estimated for the first time, the second channel determined by the network device based on the first information and the first channel is a second channel that is estimated for the second time, that is, the second channel that is estimated at the second moment. Further, the network device may determine the third channel at the second moment based on the first channel at the second moment and the second channel that is estimated for the second time.

Optionally, after determining the third channel, the network device may determine a precoding matrix based on the third channel, and then send a downlink signal to the terminal device based on the precoding matrix.

In this embodiment of this application, the first reference signal resource set determined by the terminal device and the network device includes the $N^s$ reference signal ports. Compared with a reference signal resource set that includes the $N^r$ reference signal ports, the first reference signal resource set includes fewer reference signal resources. Therefore, resources used to transmit a reference signal can be reduced.

In addition, the first reference signal resource set is used to determine the first channel corresponding to the $N^s$ antennas of the terminal device, and the second channel corresponding to the $N^{s'}$ antennas of the terminal device may be further determined based on the first channel. When the second channel is determined, it is equivalent to describing that the channel corresponding to the $N^r$ antennas of the terminal device may be determined. In other words, according to the solution provided in this application, even if the reference signal is transmitted by using fewer reference signal resources, the channel corresponding to the $N^r$ antennas of the terminal device may also be determined.

FIG. 4 is a schematic flowchart of a reference signal transmission method according to another embodiment of this application. As shown in FIG. 4, the method 400 includes the following steps.

S410: A terminal device determines $N^s$ antennas used to send a first reference signal in $N^r$ antennas.

In a possible implementation, the terminal device determines the $N^s$ antennas based on a downlink reference signal from a network device. For a manner in which the terminal device determines the $N^s$ antennas based on the downlink reference signal, refer to the foregoing descriptions in S210. For brevity, details are not described herein again.

In another possible implementation, the terminal device determines the $N^s$ antennas based on a preset set.

The terminal device determines a horizontal direction index of an antenna in an $i^{th}$ polarization direction in the $N^s$ antennas based on a first preset set

$$\{c_{i,r_{i,1},n,1} = \log_{\alpha_{i,1}}(d_{i,r_{i,1},n,1} - 1) : d_{i,r_{i,1},n,1} \in C_{i,r_{i,1},1}^{S_{i,1},p_{i,1}-1}, d_{i,r_{i,1},n,1} \neq 1\}$$

.

$C_{i,r_{i,1},1}^{S_{i,1},p_{i,1}-1} = \{d_{i,r_{i,1},n,1} = \alpha_{i,1}^{r_{i,1}}\alpha_{i,1}^{S_{i,1}n} \bmod p_{i,1} : n = 1,2,...,K_{i,1}-1\}$ , $K_{i,1} = \lfloor(p_{i,1}-1)/S_{i,1}\rfloor$ , $\lfloor\rfloor$ represents a floor operation, $p_{i,1}$ is a minimum prime number greater than $N_{i,1}^r$, $N_{i,1}^r$ is a quantity of antennas in a horizontal direction in the $i^{th}$ polarization direction in the $N^r$ antennas, $\alpha_{i,1}$ is an original root of $p_{i,1}$, $S_{i,1}$ is a ratio of $N_{i,1}^s$ to $N_{i,1}^r$, $N_{i,1}^s$ is a quantity of antennas in the horizontal direction in the $i^{th}$ polarization direction in the $N^s$ antennas, $r_{i,1}$ is a positive integer, and $0 \le r_{i,1} < S_{i,1}$.

It can be learned from the foregoing that if $r_{i,1}$ have different values, the terminal device may determine different horizontal direction indexes based on the first preset set.

For example, the value of $r_{i,1}$ may be predefined in a protocol.

For another example, the value of $r_{i,1}$ may be determined by the terminal device. For example, when determining the horizontal direction index based on the first preset set for the first time, the terminal device determines the value of $r_{i,1}$ as 0; when determining the horizontal direction index based on the first preset set for the second time, determines the value of $r_{i,1}$ as 1; ...; and when determining the horizontal direction index based on the first preset set for the $S_{i,1}^{th}$ time, determines the value of $r_{i,1}$ as $S_{i,1}$-1. For another example, the terminal device may determine the value of $r_{i,1}$ based on a direction of arrival of the downlink reference signal.

For another example, the value of $r_{i,1}$ may be indicated by the network device to the terminal device. In this case, the method 400 further includes: The terminal device receives ninth indication information from the network device, where the ninth indication information indicates the value of $r_{i,1}$.

The terminal device determines a vertical direction index of the antenna in the $i^{th}$ polarization direction in the $N^s$ antennas based on a second preset set

$$\{c_{i,r_{i,2},n,2} = \log_{\alpha_{i,2}}(d_{i,r_{i,2},n,2} - 1) : d_{i,r_{i,2},n,2} \in C_{i,r_{i,2},2}^{S_{i,2},p_{i,2}-1}, d_{i,r_{i,2},n,2} \ne 1\}$$ .

$$C_{i,r_{i,2},2}^{S_{i,2},p_{i,1}2-1} = \{d_{i,r_{i,2},n,2} = \alpha_{i,2}^{r_{i,2}} \alpha_{i,2}^{S_{i,2} \cdot n} \bmod p_{i,2} : n = 1,2,...,K_{i,2}-1\}$$ , $K_{i,2} = \lfloor (p_{i,2}-1)/S_{i,2} \rfloor$ , $p_{i,2}$ is a minimum prime number greater than $N_{i,2}^r$, $N_{i,2}^r$ is a quantity of antennas in a vertical direction in the $i^{th}$ polarization direction in the $N^r$ antennas, $\alpha_{i,2}$ is an original root of $p_{i,2}$, $S_{i,2}$ is a ratio of $N_{i,2}^s$ to $N_{i,2}^r$, $N_{i,2}^s$ is a quantity of antennas in the vertical direction in the $i^{th}$ polarization direction in the $N^s$ transmit antennas, $r_{i,2}$ is a positive integer, and $0 \le r_{i,2} < S_{i,2}$.

It can be learned from the foregoing that if $r_{i,2}$ has different value, the terminal device may determine different vertical direction indexes based on the first preset set.

For example, the value of $r_{i,2}$ may be predefined in a protocol.

For another example, the value of $r_{i,2}$ may be determined by the terminal device. For example, when determining the horizontal direction index based on the first preset set for the first time, the terminal device determines the value of $r_{i,2}$ as 0; when determining the horizontal direction index based on the first preset set for the second time, determines the value of $r_{i,2}$ as 1; ...; and when determining the horizontal direction index based on the first preset set for the $S_{i,2}^{th}$ time, determines the value of $r_{i,1}$ as $S_{i,2}$ -1. For another example, the terminal device may determine the value of $r_{i,1}$ based on a direction of arrival of the downlink reference signal.

For another example, the value of $r_{i,2}$ may be indicated by the network device to the terminal device. In this case, the method 400 further includes: The terminal device receives ninth indication information from the network device, where the ninth indication information indicates the value of $r_{i,2}$.

It should be noted that in the $N^s$ antennas determined by the terminal device based on the preset set, indexes of antennas in different polarization directions are the same, or indexes of antennas in different polarization directions are different. This is not limited in this embodiment of this application.

In still another possible implementation, the terminal device determines the $N^s$ antennas based on an adaptive feature basis in an adaptive feature basis set, that is, the terminal device determines that the $N^s$ antennas are antennas corresponding to $N^s$ reference signal ports corresponding to first $N^s$ rows of each adaptive feature basis in the adaptive feature basis set.

The following describes the adaptive feature basis set.

For example, the adaptive feature basis set includes $N^t$ groups of adaptive feature bases that are in one-to-one correspondence with $N^t$ antennas of the network device. A group of adaptive feature bases corresponding to an $(n^t)^{th}$ antenna in the $N^t$ antennas is determined based on a channel matrix that corresponds to the $N^r$ antennas of the terminal device and the $(n^t)^{th}$ antenna and that is on $N^f$ frequency domain units or $N^f$ delays. Specifically, the channel matrix that corresponds to the $N^r$ antennas of the terminal device and the $(n^t)^{th}$ antenna and that is on the $N^f$ frequency domain units or the $N^f$ delays is denoted as $\mathbf{H}_4^{nt}$, and a dimension of $\mathbf{H}_4^{nt}$ is $N^r * N^f$. Further, SVD is performed on $\mathbf{H}_4^{nt}$ to obtain $\mathbf{H}_4^{nt} = \mathbf{U}_4^{nt} \sum_4^{nt} (\mathbf{V}_4^{nt})^T$, where $\mathbf{U}_4^{nt}$ is a left singular matrix whose dimension is $N^f * N^f$, $\sum_4^{nt}$ is a diagonal matrix whose dimension is $N^f*N^r$, and $\mathbf{V}_4^{nt}$ is a right singular matrix whose dimension is $N^r*N^r$. $N^r$ row vectors or $N^r$ column vectors of $\mathbf{V}_4^{nt}$ are a group of adaptive feature bases corresponding to the $(n^t)^{th}$ antenna in the $N^t$ antennas. $n^t=1, 2, ..., N^t$.

For another example, the adaptive feature basis set includes $N^f$ groups of adaptive feature bases that are in one-to-one correspondence with the $N^f$ frequency domain units. A group of adaptive feature bases corresponding to an $(n^f)^{th}$ frequency domain unit in the $N^f$ frequency domain units is determined based on a channel matrix that corresponds to the $N^r$ antennas of the terminal device and the $N^t$ antennas or $N^t$ beams of the network device and that is on the $(n^f)^{th}$ frequency domain unit. Specifically, the channel matrix that corresponds to the $N^r$ antennas of the terminal device and the $N^t$ antennas or the $N^t$ beams and that is on the $(n^f)^{th}$ frequency domain unit is denoted as $\mathbf{H}_5^{nf}$, and a dimension of $\mathbf{H}_5^{nf}$ is $N^r*N^t$. Further, SVD is performed on $\mathbf{H}_5^{nf}$ to obtain $\mathbf{H}_5^{nf} = \mathbf{U}_5^{nf} \sum_5^{nf} (\mathbf{V}_5^{nf})^T$, where $\mathbf{U}_5^{nf}$ is a left singular matrix whose dimension is $N^t*N^t$, $\sum_5^{nf}$ is a diagonal matrix whose dimension is $N^t*N^r$, and $\mathbf{V}_5^{nf}$ is a right singular matrix whose dimension is $N^r*N^r$. $N^r$ row vectors or $N^r$ column vectors of $\mathbf{V}_5^{nf}$ are a group of adaptive feature bases corresponding to the $(n^f)^{th}$ frequency domain unit in the $N^f$ frequency domain units. $n^f=1, 2, ..., N^f$.

For another example, the adaptive feature basis set includes $N^t$ groups of adaptive feature bases that are in one-to-one correspondence with the $N^t$ beams of the network device. A group of adaptive feature bases corresponding to an $(n^t)^{th}$ beam in the $N^t$ beams is determined based on a channel matrix that corresponds to the $N^r$ antennas of the terminal device and the $(n^t)^{th}$ beam and that is on the $N^f$ frequency domain units or the $N^f$ delays. Specifically, the channel matrix that corresponds to the $N^r$ antennas of the terminal device and the $(n^t)^{th}$ beam and that is on the $N^f$ frequency domain units or the $N^f$ delays is denoted as $\mathbf{H}_{4beam}^{nt}$, and a dimension of $\mathbf{H}_{4beam}^{nt}$ is $N^r*N^f$. Further, SVD is performed on $\mathbf{H}_{4beam}^{nt}$ to obtain

$$\mathbf{H}_{4beam}^{nt} = \mathbf{U}_{4beam}^{nt} \sum_{4beam}^{nt} (\mathbf{V}_{4beam}^{nt})^T$$

, where $\mathbf{U}_{4beam}^{nt}$ is a left singular matrix whose dimension is $N^f*N^f$, $\sum_{4beam}^{nt}$ is a diagonal matrix whose dimension is $N^f*N^r$, and $\mathbf{V}_{4beam}^{nt}$ is a right singular matrix whose dimension is $N^r*N^r$. $N^r$ row vectors or $N^r$ column vectors of $\mathbf{V}_{4beam}^{nt}$ are a group of adaptive feature bases corresponding to the $(n^t)^{th}$ beam in the $N^t$ beams. $n^t=1, 2, ..., N^t$.

For another example, the adaptive feature basis set includes $N^f$ groups of adaptive feature bases that are in one-to-one correspondence with the $N^f$ delays. A group of adaptive feature bases corresponding to an $(n^f)^{th}$ delay in the $N^f$ delays is determined based on a channel matrix that corresponds to the $N^r$ antennas of the terminal device and the $N^t$ antennas or the $N^t$ beams of the network device and that is on the $(n^f)^{th}$ delay. Specifically, the channel matrix that corresponds to the $N^r$ antennas of the terminal device and the $N^t$ antennas or the $N^t$ beams and that is on the $(n^f)^{th}$ delay is denoted as $\mathbf{H}_{5delay}^{nf}$, and a dimension of $\mathbf{H}_{5delay}^{nf}$ is $N^r*N^t$. Further, SVD is performed on $\mathbf{H}_{5delay}^{nf}$ to obtain

$$\mathbf{H}_{5delay}^{nf} = \mathbf{U}_{5delay}^{nf} \sum_{5delay}^{nf} (\mathbf{V}_{5delay}^{nf})^T$$

, where $\mathbf{U}_{5delay}^{nf}$ is a left singular matrix whose dimension is $N^t*N^t$, $\sum_{5delay}^{nf}$ is a diagonal matrix whose dimension is $N^t*N^r$, and $\mathbf{V}_{5delay}^{nf}$ is a right singular matrix whose dimension is $N^r*N^r$. $N^r$ row vectors or $N^r$ column vectors of $\mathbf{V}_{5delay}^{nf}$ are a group of adaptive feature bases corresponding to the $(n^f)^{th}$ delay in the $N^f$ delays. $n^f=1, 2, ..., N^f$.

Optionally, when the terminal device includes antennas in I different polarization directions, the adaptive feature basis set includes adaptive feature basis sets corresponding to the different polarization directions. For example, an adaptive feature basis set corresponding to the $i^{th}$ polarization direction includes $N^t$ groups of adaptive feature bases that are in one-to-one correspondence with the $N^t$ antennas, and a group of adaptive feature bases corresponding to the $(n^t)^{th}$ antenna in the $N^t$ antennas is determined based on a channel matrix that corresponds to $N^{r,i}$ antennas of the terminal device and the $(n^t)^{th}$ antenna and that is on the $N^f$ frequency domain units or the $N^f$ delays, where $N^{r,i}$ is a quantity of antennas in the $i^{th}$ polarization direction in the $N^r$ antennas. Alternatively, an adaptive feature basis set corresponding to the $i^{th}$ polarization direction includes $N^f$ groups of adaptive feature bases that are in one-to-one correspondence with the $N^f$ frequency domain units. A group of adaptive feature bases corresponding to the $(n^f)^{th}$ frequency domain unit in the $N^f$ frequency domain units is determined based on a channel matrix that corresponds to $N^{r,i}$ antennas of the terminal device and the $N^t$ antennas or the $N^t$ beams of the network device and that is on the $(n^f)^{th}$ frequency domain unit. Alternatively, an adaptive feature basis set corresponding to the $i^{th}$ polarization direction includes $N^t$ groups of adaptive feature bases that are in one-to-one correspondence with the $N^t$ beams, and a group of adaptive feature bases corresponding to the $(n^t)^{th}$

beam in the $N^t$ beams is determined based on a channel matrix that corresponds to the $N^{r,i}$ antennas of the terminal device and the $(n^t)^{th}$ beam and that is on the $N^f$ frequency domain units or the $N^f$ delays. Alternatively, an adaptive feature basis set corresponding to the $i^{th}$ polarization direction includes $N^f$ groups of adaptive feature bases that are in one-to-one correspondence with the $N^f$ delays. A group of adaptive feature bases corresponding to the $(n^f)^{th}$ delay in the $N^f$ delays is determined based on a channel matrix that corresponds to the $N^{r,i}$ antennas of the terminal device and the $N^t$ antennas or the $N^t$ beams of the network device and that is on the $(n^f)^{th}$ delay.

In yet another possible implementation, the terminal device determines the $N^s$ antennas based on tenth indication information from the network device. In other words, the method 400 further includes: The network device sends tenth indication information to the terminal device, where the tenth indication information indicates the $N^s$ reference signal ports. Correspondingly, the terminal device receives the tenth indication information from the network device, and determines the $N^s$ antennas based on the tenth indication information.

Optionally, when the terminal device determines the $N^s$ antennas based on the downlink reference signal, the method 400 may further include: The terminal device sends eleventh indication information to the network device based on the determined $N^s$ antennas, where the eleventh indication information indicates at least one of the following: indexes of the $N^s$ reference signal ports or a direction of arrival of the downlink reference signal. Correspondingly, after receiving the eleventh indication information from the terminal device, the network device may determine the $N^s$ reference signal ports based on the eleventh indication information.

Optionally, when the terminal device determines the $N^s$ antennas based on the preset set, the method 400 may further include: The terminal device sends eighth indication information to the network device, where the eighth indication information indicates at least one of the following: a value of $r_{i,1}$, a value of $r_{i,2}$, or indexes of $N^s$ reference signal ports. Correspondingly, after receiving the eighth indication information from the terminal device, the network device may determine the $N^s$ reference signal ports based on the eighth indication information. For example, if the eighth indication information indicates the value of $r_{i,1}$ and the value of $r_{i,2}$, the network device may determine the $N^s$ antennas based on the eighth indication information and the preset set, and determine the $N^s$ reference signal ports based on the $N^s$ antennas. For another example, if the eighth indication information indicates the indexes of the $N^s$ reference signal ports, the network device may directly determine the $N^s$ reference signal ports based on the eighth indication information.

Optionally, when the terminal device determines the $N^s$ antennas based on the downlink reference signal or the adaptive feature basis set, the method 400 may further include: The terminal device sends sixth indication information to the network device, where the sixth indication information indicates the adaptive feature basis set. Correspondingly, after receiving the sixth indication information, the network device may determine the adaptive feature basis set based on the sixth indication information.

Optionally, the method 400 further includes: The terminal device sends seventh indication information to the network device, where the seventh indication information indicates $N^s$ rows corresponding to the $N^s$ reference signal ports in each adaptive feature basis included in the adaptive feature basis set.

For example, the $N^s$ rows corresponding to the $N^s$ reference signal ports in each adaptive feature basis included in the adaptive feature basis set are first $N^s$ rows of each adaptive feature basis.

Optionally, the seventh indication information further indicates polarization directions of antennas corresponding to reference signal ports corresponding to different rows in the $N^s$ rows corresponding to the $N^s$ reference signal ports in the adaptive feature basis.

For example, in the $N^s$ rows corresponding to the $N^s$ reference signal ports in the adaptive feature basis, a row with a smaller row sequence number corresponds to a smaller number of a polarization direction of an antenna corresponding to a reference signal port. For example, when the terminal device includes antennas in two polarization directions, in the $N^s$ rows corresponding to the $N^s$ reference signal ports in the adaptive feature basis, an antenna corresponding to reference signal ports corresponding to first $N^s/2$ rows is a first polarization direction, and an antenna corresponding to reference signal ports corresponding to last $N^s/2$ rows is a second polarization direction.

For another example, in the $N^s$ rows corresponding to the $N^s$ reference signal ports in the adaptive feature basis, a row with a smaller row sequence number corresponds to a larger number of a polarization direction of an antenna corresponding to a reference signal port. For example, when the terminal device includes antennas in two polarization directions, in the $N^s$ rows corresponding to the $N^s$ reference signal ports in the adaptive feature basis, an antenna corresponding to reference signal ports corresponding to first $N^s/2$ rows is a second polarization direction, and an antenna corresponding to reference signal ports corresponding to last $N^s/2$ rows is a first polarization direction.

Optionally, the method 400 further includes: The terminal device sends twelfth indication information to the network device, where the twelfth indication information indicates received energy ratios of downlink reference signals received by the terminal device through antennas in different polarization directions.

S420: The terminal device sends the first reference signal to the network device. Correspondingly, the network device receives the first reference signals from the terminal device.

S430: The network device determines a first channel based on the first reference signal.

The first channel is a channel corresponding to the $N^s$ antennas of the terminal device. In other words, the first channel is a channel corresponding to the $N^s$ antennas of the terminal device and the $N^t$ antennas of the network device. The first channel determined by the network device may be represented as a channel matrix of the first channel, the channel matrix of the first channel is denoted as $H_2$, a dimension of $H_2$ is $N^t*N^s*N^f$, and $N^f$ represents a quantity of frequency domain units or delays corresponding to a reporting bandwidth.

For example, when the terminal device includes antennas in I polarization directions, the first channel determined by the network device may include channels corresponding to antennas in different polarization directions in the $N^s$ antennas of the terminal device. A channel corresponding to an antenna in an $i^{th}$ polarization direction in the $N^s$ antennas of the terminal device is denoted as $H_{2,i}$, a dimension of $H_{2,i}$ is $N^t*N^{s,i}*N^f$, and $N^{s,i}$ is a quantity of antennas in the $i^{th}$ polarization direction in the $N^s$ antennas. I is an integer greater than 1, and i=1, 2, ..., I.

S440: The network device determines a third channel based on the first channel.

In a possible implementation, the network device determines the third channel based on the first channel and a space-domain DFT basis. The third channel is a channel corresponding to the $N^r$ antennas of the terminal device. In other words, the third channel is a channel corresponding to the $N^r$ antennas of the terminal device and the $N^t$ antennas of the network device. The space-domain DFT basis includes $N^r$ row vectors whose dimension is $N^r*1$.

When the network device determines the third channel based on the first channel and the space-domain DFT basis, the network device first determines the $N^s$ reference signal ports. When the $N^s$ reference signal ports are determined, the network device may determine $N^s$ rows corresponding to the $N^s$ reference signal ports in the space-domain DFT basis.

For example, the network device determines the $N^s$ reference signal ports based on a second reference signal from the terminal device. The second reference signal is used to determine the third channel. The second reference signal is sent by the terminal device to the network device before the terminal device sends the first reference signal. For a manner in which the network device determines the $N^s$ reference signal ports based on the second reference signal, refer to the manner in which the network device determines the $N^s$ reference signal ports based on the third reference signal resource set in S210.

For another example, the network device determines the $N^s$ antennas based on the preset set, and then determines, based on the $N^s$ antennas, the $N^s$ reference signal ports corresponding to the $N^s$ antennas. For a manner in which the network device determines the $N^s$ antennas based on the preset set, refer to the manner in which the terminal device determines the $N^s$ antennas based on the preset set in S410.

For another example, the network device determines the $N^s$ reference signal ports based on the eighth indication information from the terminal device. For example, if the eighth indication information indicates the value of $r_{i,1}$ and the value of $r_{i,2}$, the network device may determine the $N^s$ antennas based on the eighth indication information and the preset set, and then determine, based on the $N^s$ antennas, the $N^s$ reference signal ports corresponding to the $N^s$ antennas. For another example, if the eighth indication information indicates the indexes of the $N^s$ reference signal ports, the network device may directly determine the $N^s$ reference signal ports based on the eighth indication information.

After determining the $N^s$ reference signal ports and determining the $N^s$ rows corresponding to the $N^s$ reference signal ports in the space-domain DFT basis, the network device may determine the third channel based on the first channel and the space-domain DFT basis.

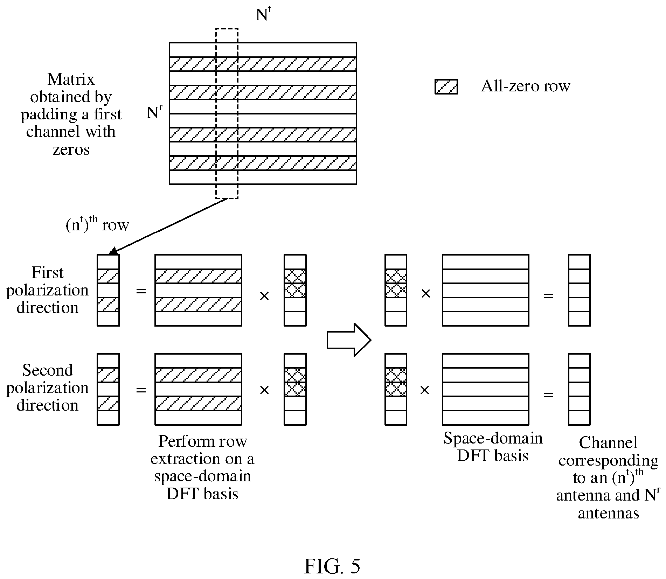

With reference to FIG. 5, the following describes a manner in which the network device determines the third channel based on the first channel and the space-domain DFT basis.

It is assumed that $N^r$=10, $N^s$=6, and the $N^s$ antennas include antennas in two polarization directions. A dimension of the channel matrix $H_2$ of the first channel determined by the network device is $N^t*6*N^f$. The following uses a channel matrix $\mathbf{H}_2^{nf}$ that is included in the first channel and that corresponds to the $(n^f)^{th}$ frequency domain unit in the $N^f$ frequency domain units as an example to describe a manner in which the network device determines a channel matrix $\mathbf{H}_6^{nf}$ that is included in the third channel and that corresponds to the $(n^f)^{th}$ frequency domain unit in the $N^f$ frequency domain units. A dimension of $\mathbf{H}_2^{nf}$ is $N^t*6$, and a dimension of $\mathbf{H}_6^{nf}$ is $N^t*10$.

As shown in FIG. 5, the network device pads $\mathbf{H}_2^{nf}$ with four all-zero rows to obtain a matrix $\mathbf{H}_7^{nf}$ whose dimension is $N^t*10$. A location of the all-zero row padded by the network device is determined based on a correspondence between the $N^s$ reference signal ports and the $N^s$ rows in the space-domain DFT basis. Specifically, the all-zero rows in $\mathbf{H}_7^{nf}$ correspond to rows other than the $N^s$ rows corresponding to the $N^s$ reference signal ports in the space-domain DFT basis. As shown in FIG. 5, when the $N^s$ reference signal ports correspond to a $1^{st}$ row, a $3^{rd}$ row, a $5^{th}$ row, a $6^{th}$ row, an $8^{th}$ row, and a $10^{th}$ row in the space-domain DFT basis, the all-zero rows in $\mathbf{H}_7^{nf}$ are a $2^{nd}$ row, a $4^{th}$ row, a $7^{th}$ row, and a $9^{th}$ row.

Further, the network device performs row extraction on the space-domain DFT basis, that is, the network device sets the rows other than the $N^s$ rows corresponding to the $N^s$ reference signal ports in the space-domain DFT basis to all-zero rows. The space-domain DFT basis is denoted as $\mathbf{H}_s$, and a matrix obtained by performing row extraction on the space-domain DFT basis is denoted as $\mathbf{H}_{s'}$. Dimensions of $\mathbf{H}_s$ and $\mathbf{H}_{s'}$ are 10*10.

Further, the network device extracts an $(n^t)^{th}$ column vector from $\mathbf{H}_7^{nf}$, and denotes the $(n^t)^{th}$ column vector in $\mathbf{H}_7^{nf}$ as $\mathbf{h}_7^{nf,nt}$, and a dimension of $\mathbf{h}_7^{nf,nt}$ is 1*10. The network device obtains $\mathbf{h}_8^{nf,nt}$ according to a formula $\mathbf{h}_7^{nf,nt} = \mathbf{H}_{s'} * \mathbf{h}_8^{nf,nt}$, and a dimension of $\mathbf{h}_8^{nf,nt}$ is 1*10. Then, the network device obtains $\mathbf{h}_6^{nf,nt}$ according to a formula $\mathbf{h}_6^{nf,nt} = \mathbf{h}_8^{nf,nt} * \mathbf{H}_s$, and $\mathbf{h}_6^{nf,nt}$ is an $(n^t)^{th}$ column vector in $\mathbf{H}_6^{nf}$.

Similarly, the network device may determine each column vector in $\mathbf{H}_6^{nf}$ in the foregoing manner, so that the network device may determine $\mathbf{H}_6^{nf}$.

In another possible implementation, the network device determines the third channel based on the first channel and the adaptive feature basis set.

When the network device determines the third channel based on the first channel and the adaptive feature basis set, the network device first determines the $N^s$ rows corresponding to the $N^s$ reference signal ports in each adaptive feature basis included in the adaptive feature basis set.

For example, the network device determines, in a predefined manner, that the $N^s$ rows corresponding to the $N^s$ reference signal ports in each adaptive feature basis are the first $N^s$ rows of the adaptive feature basis.

For another example, the network device determines, based on the seventh indication information from the terminal device, the $N^s$ rows corresponding to the $N^s$ reference signal ports in each adaptive feature basis.

After determining the $N^s$ rows corresponding to the $N^s$ reference signal ports in each adaptive feature basis, the network device may determine the third channel based on the first channel and the adaptive feature basis set.

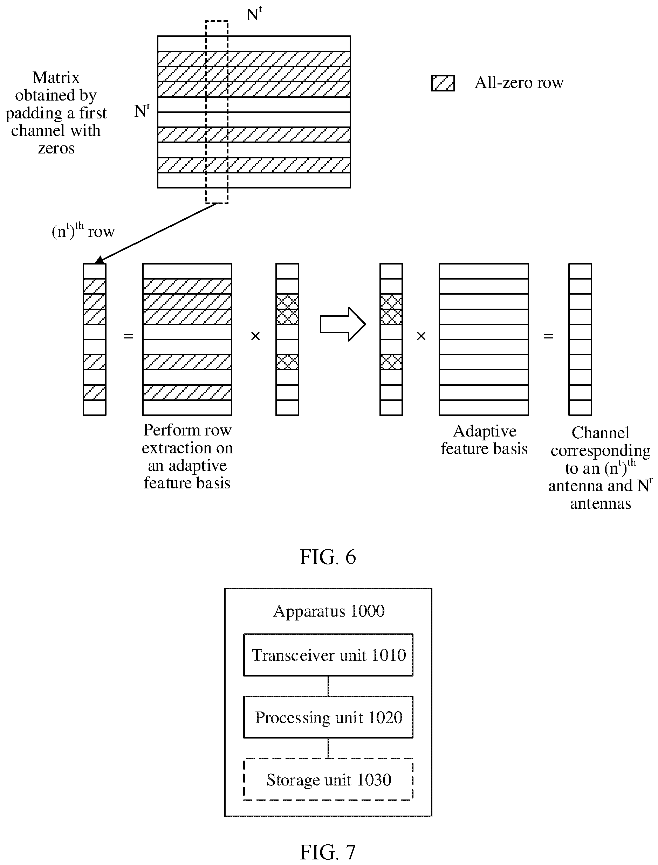

With reference to FIG. 6, the following describes a manner in which the network device determines the third channel based on the first channel and the adaptive feature basis set.

It is assumed that the adaptive feature basis set includes $N^t$ groups of adaptive feature bases that are in one-to-one correspondence with the $N^t$ antennas of the network device, $N^r$=10, and $N^s$=5. A dimension of the channel matrix $\mathbf{H}_2$ of the first channel determined by the network device is $N^t$*5*$N^f$. The following uses a channel matrix $\mathbf{H}_2^{nf}$ that is included in the first channel and that corresponds to the $(n^f)^{th}$ frequency domain unit in the $N^f$ frequency domain units as an example to describe a manner in which the network device determines a channel matrix $\mathbf{H}_6^{nf}$ that is included in the third channel and that corresponds to the $(n^f)^{th}$ frequency domain unit in the $N^f$ frequency domain units. A dimension of $\mathbf{H}_2^{nf}$ is $N^t$*5, and a dimension of $\mathbf{H}_6^{nf}$ is $N^t$*10.

As shown in FIG. 6, the network device pads $\mathbf{H}_2^{nf}$ with five all-zero rows to obtain a matrix $\mathbf{H}_7^{nf}$ whose dimension is $N^t$*10. A location of the all-zero row padded by the network device is determined based on a correspondence between the $N^s$ reference signal ports and the $N^s$ rows in the adaptive feature basis. Specifically, the all-zero rows in $\mathbf{H}_7^{nf}$ correspond to rows other than the $N^s$ rows corresponding to the $N^s$ reference signal ports in the adaptive feature basis. As shown in FIG. 6, when the $N^s$ reference signal ports correspond to a 1st row, a 5th row, a 6th row, an 8th row, and a 10th row in the adaptive feature basis, the all-zero rows in $\mathbf{H}_7^{nf}$ are a 2nd row, a 3rd row, a 4th row, a 7th row, and a 9th row.

Further, the network device sets an $(n^t)^{th}$ adaptive feature basis matrix, that is, the network device sets rows other than $N^s$ rows corresponding to the $N^s$ reference signal ports in the $(n^t)^{th}$ adaptive feature basis matrix to all-zero rows. The $(n^t)^{th}$ adaptive feature basis matrix is formed by an $(n^t)^{th}$ group of adaptive feature bases corresponding to the $(n^t)^{th}$ antenna. The $(n^t)^{th}$ adaptive feature basis matrix is denoted as $\mathbf{H}_8$, and a matrix obtained by performing row extraction on the $(n^t)^{th}$ adaptive feature basis matrix is denoted as $\mathbf{H}_{8'}$. Dimensions of $\mathbf{H}_8$ and $\mathbf{H}_{8'}$ are 10*10.

Further, the network device extracts an $(n^t)^{th}$ column vector from $\mathbf{H}_7^{nf}$, and denotes the $(n^t)^{th}$ column vector in $\mathbf{H}_7^{nf}$ as $\mathbf{h}_7^{nf,nt}$, and a dimension of $\mathbf{h}_7^{nf,nt}$ is 1*10. The network device obtains $\mathbf{h}_9^{nf,nt}$ according to a formula $\mathbf{h}_7^{nf,nt} = \mathbf{H}_{8'} * \mathbf{h}_8^{nf,nt}$, and a dimension of $\mathbf{h}_9^{nf,nt}$ is 1*10. Then, the network device obtains $\mathbf{h}_6^{nf,nt}$ according to a formula

$\mathbf{h}_6^{nf,nt} = \mathbf{h}_9^{nf,nt} * \mathbf{H}_8$ , and $\mathbf{h}_6^{nf,nt}$ is an $(nt)$th column vector in $\mathbf{H}_6^{nf}$ .

Similarly, the network device may determine each column vector in $\mathbf{H}_6^{nf}$ in the foregoing manner, so that the network device may determine $\mathbf{H}_6^{nf}$ .

In this embodiment of this application, the terminal device may send an uplink reference signal through the $N^s$ antennas in the $N^r$ antennas. Compared with sending the uplink reference signal through the $N^r$ antennas, sending the uplink reference signal through the $N^s$ antennas may use fewer reference signal resources, so that resources used for the reference signal can be reduced.

In addition, the first reference signal is used to determine the first channel corresponding to the $N^s$ antennas of the terminal device, and the third channel corresponding to the $N^r$ antennas of the terminal device may be further determined based on the first channel. In other words, according to the solution provided in this application, even if the reference signal is transmitted by using fewer reference signal resources, the channel corresponding to the $N^r$ antennas of the terminal device may also be determined.

The foregoing describes in detail the methods provided in embodiments of this application with reference to FIG. 2 to FIG. 6. The following describes in detail apparatuses provided in embodiments of this application with reference to FIG. 7 to FIG. 9. It should be understood that descriptions of apparatus embodiments correspond to the descriptions of the method embodiments. Therefore, for content that is not described in detail, refer to the method embodiments. For brevity, details are not described herein again.

FIG. 7 is a block diagram of an apparatus 1000 according to an embodiment of this application. As shown in the figure, the apparatus 1000 may include a transceiver unit 1010 and a processing unit 1020.

In a possible design, the apparatus 1000 may be the terminal device in the foregoing method embodiments, or may be a chip configured to implement functions of the terminal device in the foregoing method embodiments.

It should be understood that the apparatus 1000 may correspond to the terminal device in the method 200 or the method 400 according to embodiments of this application, and the apparatus 1000 may include units configured to perform a method performed by the terminal device in the method 200 in FIG. 2 or the method 400 in FIG. 4. In addition, the units in the apparatus 1000 and the foregoing other operations and/or functions are separately intended to implement corresponding procedures of the method 200 in FIG. 2 or the method 400 in FIG. 4. It should be understood that a specific process in which the units perform the foregoing corresponding steps is described in detail in the foregoing method embodiments. For brevity, details are not described herein.

In another possible design, the apparatus 1000 may be the network device in the foregoing method embodiments, or may be a chip configured to implement functions of the network device in the foregoing method embodiments.

It should be understood that the apparatus 1000 may correspond to the network device in the method 200 or the method 400 according to embodiments of this application, and the apparatus 1000 may include units configured to perform a method performed by the network device in the method 200 in FIG. 2 or the method 400 in FIG. 4. In addition, the units in the apparatus 1000 and the foregoing other operations and/or functions are separately intended to implement corresponding procedures of the method 200 in FIG. 2 or the method 400 in FIG. 4. It should be understood that a specific process in which the units perform the foregoing corresponding steps is described in detail in the foregoing method embodiments. For brevity, details are not described herein.

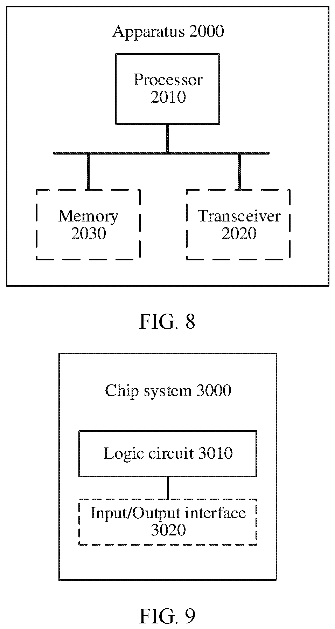

It should be further understood that the transceiver unit 1010 in the apparatus 1000 may correspond to a transceiver 2020 in an apparatus 2000 shown in FIG. 8, and the processing unit 1020 in the apparatus 1000 may correspond to a processor 2010 in the apparatus 2000 shown in FIG. 8.

It should be further understood that when the apparatus 1000 is a chip, the chip includes a transceiver unit and a processing unit. The transceiver unit may be an input/output circuit or a communication interface. The processing unit may be a processor integrated on the chip, a microprocessor, or an integrated circuit.

The transceiver unit 1010 is configured to implement a signal receiving and sending operation of the apparatus 1000, and the processing unit 1020 is configured to implement a signal processing operation of the apparatus 1000.

Optionally, the apparatus 1000 further includes a storage unit 1030. The storage unit 1030 is configured to store instructions.

FIG. 8 is a block diagram of an apparatus 2000 according to an embodiment of this application. As shown in FIG. 8, the apparatus 2000 includes at least one processor 2010. The processor 2010 is coupled to a memory, and is configured to execute instructions stored in the memory, to perform the method in FIG. 2 or FIG. 4. Optionally, the apparatus 2000 further includes a transceiver 2020. The processor 2010 is coupled to the memory, and is configured to execute the instructions stored in the memory, to control the transceiver 2020 to send a signal and/or receive a signal. For example, the processor 2010 may control the transceiver 2020 to send first indication information and/or receive first indication information. Optionally, the apparatus 2000 further includes the memory 2030, configured to store the instructions.

It should be understood that the processor 2010 and the memory 2030 may be integrated into one processing apparatus. The processor 2010 is configured to execute program code stored in the memory 2030, to implement the foregoing functions. During specific implementation, the memory 2030 may alternatively be integrated into the processor 2010, or may be independent of the processor 2010.

It should be further understood that the transceiver 2020 may include a receiver (which is also referred to as a receiver machine) and a transmitter (which is also referred to as a transmitter machine). The transceiver 2020 may further include an antenna. There may be one or more antennas. The transceiver 2020 may alternatively be a communication interface or an interface circuit.

When the apparatus 2000 is a chip, the chip includes a transceiver unit and a processing unit. The transceiver unit may be an input/output circuit or a communication interface. The processing unit may be a processor, a microprocessor, or an integrated circuit integrated on the chip.

FIG. 9 is a diagram of a chip system according to an embodiment of this application. The chip system herein may alternatively be a system including a circuit. The chip system 3000 shown in FIG. 9 includes a logic circuit 3010 and an input/output interface (input/output interface) 3020. The logic circuit is configured to be coupled to the input interface, and transmit data (for example, first information) through the input/output interface, to perform the method in FIG. 2 or FIG. 4.

An embodiment of this application further provides a processing apparatus, including a processor and an interface. The processor may be configured to perform the methods in the foregoing method embodiments.

It should be understood that the processing apparatus may be a chip. For example, the processing apparatus may be a field programmable gate array (field programmable gate array, FPGA), an application-specific integrated chip (application-specific integrated circuit, ASIC), a system on chip (system on chip, SoC), a central processing unit (central processing unit, CPU), a network processor (network processor, NP), a digital signal processing circuit (digital signal processor, DSP), a microcontroller (micro controller unit, MCU), a programmable controller (programmable logic device, PLD), or another integrated chip.

In an implementation process, steps in the foregoing methods may be implemented by a hardware integrated logic circuit in the processor, or by using instructions in a form of software. The steps of the method disclosed with reference to embodiments of this application may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments may be implemented by a hardware integrated logic circuit in the processor, or by using instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor may implement or perform the methods, the steps, and logical block diagrams that are disclosed in embodiments of this application. The general-purpose processor may be a microprocessor, or the processor may be any conventional processor or the like.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache.

According to the methods provided in embodiments of this application, this application further provides a computer program product. The computer program product includes computer program code. When the computer program code is run on a computer, the computer is enabled to perform the method in the embodiment shown in FIG. 2 or FIG. 4.

According to the methods provided in embodiments of this application, this application further provides a computer-readable medium. The computer-readable medium stores program code. When the program code is run on a computer, the computer is enabled to perform the method in the embodiment shown in FIG. 2 or FIG. 4.

According to the methods provided in embodiments of this application, this application further provides a system, including the terminal device and the network device described above.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer instructions are loaded and executed on a computer, all or a part of the procedures or functions according to embodiments of this application are generated. The computer instructions may be stored in a computer-readable storage medium, or transmitted from one computer-readable storage medium to another computer-readable storage medium. The computer-readable storage medium may be any usable medium accessible to the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid state disk (solid state disk, SSD)), or the like.

In the several embodiments provided in this application, it should be understood that the disclosed system, apparatus, and method may be implemented in other manners. For example, the described apparatus embodiments are merely examples. For example, division into the units is merely logical function division, and may be other division during actual implementation. For example, a plurality of units or components may be combined or may be integrated into another system, or some features may be ignored or not performed. In addition, the displayed or discussed mutual couplings or direct couplings or communication connections may be implemented through some interfaces. The indirect couplings or communication connections between the apparatuses or the units may be implemented in electrical, mechanical, or another form.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1.  A reference signal transmission method, comprising:
    determining, by a terminal device, a first reference signal resource set, wherein the first reference signal resource set comprises $N^s$ reference signal ports, the first reference signal resource set is used to determine a first channel, the first channel is used to determine a second channel, the first channel is a channel corresponding to $N^s$ antennas of the terminal device, the second channel is a channel corresponding to $N^{s'}$ antennas of the terminal device other than the $N^s$ antennas, and both $N^s$ and $N^{s'}$ are positive integers.

2.  The method according to claim 1, wherein the method further comprises:
    sending, by the terminal device, first indication information to a network device, wherein the first indication information is used to determine first information, the first information and the first channel are used to determine the second channel, and the first information comprises one or more of the following: auto-correlation information of the first channel, auto-correlation information of the second channel, or cross-correlation information of the first channel and the second channel.

3.  The method according to claim 2, wherein the auto-correlation information is at least one auto-correlation matrix, wherein

    one of the at least one auto-correlation matrix corresponds to one or more of $N^t$ antennas of the network device, and corresponds to all or a part of $N^f$ frequency domain units or $N^f$ delays, the $N^f$ frequency domain units or the $N^f$ delays correspond to a reporting bandwidth, and the reporting bandwidth is a reference signal bandwidth;
    one of the at least one auto-correlation matrix corresponds to one or more of $N^t$ beams, and corresponds to all or a part of the $N^f$ frequency domain units or the $N^f$ delays, and the $N^t$ beams correspond to the $N^t$ antennas;
    one of the at least one auto-correlation matrix corresponds to one or more of the $N^f$ frequency domain units, and corresponds to all or a part of the $N^t$ antennas or the $N^t$ beams; or
    one of the at least one auto-correlation matrix corresponds to one or more of the $N^f$ delays, and corresponds to all or a part of the $N^t$ antennas or the $N^t$ beams.

4.  The method according to claim 3, wherein
    the auto-correlation information of the first channel is at least one auto-correlation matrix whose size is $N^s*N^s$, and the auto-correlation information of the second channel is at least one auto-correlation matrix whose size is $N^{s'}*N^{s'}$.

5.  The method according to claim 3 or 4, wherein
    the first indication information comprises one or more of the following: all elements of one or more of the at least one auto-correlation matrix, elements of an upper triangular part of one or more of the at least one auto-correlation matrix, or elements of a lower triangular part of one or more of the at least one auto-correlation matrix.

6. The method according to claim 2, wherein the cross-correlation information is at least one cross-correlation matrix, wherein

one of the at least one cross-correlation matrix corresponds to one or more of $N^t$ antennas of the network device, and corresponds to all or a part of $N^f$ frequency domain units or $N^f$ delays, the $N^f$ frequency domain units or the $N^f$ delays correspond to a reporting bandwidth, and the reporting bandwidth is a reference signal bandwidth;
one of the at least one cross-correlation matrix corresponds to one or more of $N^t$ beams, and corresponds to all or a part of the $N^f$ frequency domain units or the $N^f$ delays, and the $N^t$ beams correspond to the $N^t$ antennas;
one of the at least one cross-correlation matrix corresponds to one or more of the $N^f$ frequency domain units, and corresponds to all or a part of the $N^t$ antennas or the $N^t$ beams; or
one of the at least one cross-correlation matrix corresponds to one or more of the $N^f$ delays, and corresponds to all or a part of the $N^t$ antennas or the $N^t$ beams.

7. The method according to claim 6, wherein

the cross-correlation information of the first channel and the second channel is at least one cross-correlation matrix whose size is $N^s * N^{s'}$; or
the cross-correlation information of the first channel and the second channel is at least one cross-correlation matrix whose size is $N^{s'} * N^s$.

8. The method according to claim 6 or 7, wherein the first indication information comprises all elements of the at least one cross-correlation matrix.

9. The method according to claim 1, wherein the method further comprises:

determining, by the terminal device, a second reference signal resource set, wherein the second reference signal resource set is used to determine a third channel, the third channel is a channel corresponding to $N^r$ antennas of the terminal device, the $N^r$ antennas comprise the $N^s$ antennas, the second reference signal resource set comprises $N^r$ reference signal ports, the $N^r$ reference signal ports comprise the $N^s$ reference signal ports, $N^r$ is a positive integer, and $N^r > N^s$; and
sending, by the terminal device, second indication information to a network device, wherein the second indication information indicates a correspondence between the $N^s$ reference signal ports and the $N^r$ reference signal ports.

10. The method according to claim 1, wherein the method further comprises:

determining, by the terminal device, a second reference signal resource set, wherein the second reference signal resource set is used to determine a third channel, the third channel is a channel corresponding to $N^r$ antennas of the terminal device, the $N^r$ antennas comprise the $N^s$ antennas, the second reference signal resource set comprises $N^r$ reference signal ports, the $N^r$ reference signal ports comprise the $N^s$ reference signal ports, $N^r$ is a positive integer, and $N^r > N^s$; and
determining, by the terminal device, a correspondence between the $N^s$ reference signal ports and the $N^r$ reference signal ports in a predefined manner, wherein the predefined manner comprises one or more of the following:

determining the correspondence based on indexes of the $N^s$ reference signal ports and indexes of the $N^r$ reference signal ports;
determining the correspondence based on cyclic shifts of reference signals of the $N^s$ reference signal ports and cyclic shifts of reference signals of the $N^r$ reference signal ports; or
determining the correspondence based on a frequency domain resource used to carry reference signals of the $N^s$ reference signal ports and a frequency domain resource used to carry reference signals of the $N^r$ reference signal ports.

11. The method according to claim 9 or 10, wherein the first channel and the correspondence between the $N^s$ reference signal ports and the $N^r$ reference signal ports are used to determine the second channel.

12. The method according to any one of claims 1 to 11, wherein the method further comprises:
sending, by the terminal device, third indication information to the network device, wherein the third indication information indicates one or more of the following information:

a quantity of reference signal resources comprised in the first reference signal resource set; or
a quantity of reference signal ports comprised in each reference signal resource in the first reference signal resource set.

13. The method according to claim 12, wherein $N^s=4$, the terminal device is a 4T8R device, and the third indication information indicates one or more of the following information:

a quantity M of reference signal resources comprised in the first reference signal resource set is equal to 1;
a reference signal resource in the first reference signal resource set comprises four reference signal ports;
a quantity M of reference signal resources comprised in the first reference signal resource set is equal to 2;
two reference signal resources in the first reference signal resource set respectively comprise three reference signal ports and one reference signal port;
two reference signal resources in the first reference signal resource set respectively comprise two reference signal ports and two reference signal ports; or
two reference signal resources in the first reference signal resource set respectively comprise one reference signal port and three reference signal ports.

14. The method according to any one of claims 1 to 13, wherein the method further comprises:

determining, by the terminal device, a third reference signal resource set, wherein the third reference signal resource set is used to determine the channel corresponding to the $N^r$ antennas of the terminal device, the $N^r$ antennas comprise the $N^s$ antennas, $N^r$ is a positive integer, and $N^r>N^s$;
receiving, by the terminal device, fourth indication information from the network device, wherein the fourth indication information indicates the reference signal ports corresponding to the $N^s$ antennas, and the fourth indication information is determined based on the third reference signal resource set; and
determining, by the terminal device, the $N^s$ antennas based on the fourth indication information.

15. The method according to any one of claims 1 to 14, wherein the method further comprises:
sending, by the terminal device, fifth indication information to the network device, wherein the fifth indication information indicates one or more of the following information:

virtual terminal devices respectively corresponding to the $N^s$ reference signal ports comprised in the first reference signal resource set;
virtual terminal devices respectively corresponding to $N^{s'}$ reference signal ports other than the $N^s$ reference signal ports comprised in the first reference signal resource set; or
virtual terminal devices respectively corresponding to the $N^r$ reference signal ports comprised in the second reference signal resource set, wherein the second reference signal resource set is used to determine the third channel, and the third channel is the channel corresponding to the $N^r$ antennas of the terminal device.

16. A reference signal transmission method, comprising:

determining, by a network device, a first reference signal resource set, wherein the first reference signal resource set comprises $N^s$ reference signal ports;
determining, by the network device, a first channel based on the first reference signal resource set, wherein the first channel is a channel corresponding to $N^s$ antennas of a terminal device; and
determining, by the network device, a second channel based on the first channel, wherein the second channel is a channel corresponding to $N^{s'}$ antennas of the terminal device other than the $N^s$ antennas, and both $N^s$ and $N^{s'}$ are positive integers.

17. The method according to claim 16, wherein the method further comprises:

receiving, by the network device, first indication information from the terminal device, wherein the first indication information is used to determine first information, and the first information comprises one or more of the following: auto-correlation information of the first channel, an auto-correlation channel of the second channel, or cross-correlation information of the first channel and the second channel; and
determining, by the network device, the second channel based on the first channel comprises:
determining, by the network device, the second channel based on the first information and the first channel.

18. The method according to claim 17, wherein the auto-correlation information is at least one auto-correlation matrix, wherein

one of the at least one auto-correlation matrix corresponds to one or more of $N^t$ antennas of the network device, and corresponds to all or a part of $N^f$ frequency domain units or $N^f$ delays, the $N^f$ frequency domain units or the $N^f$ delays correspond to a reporting bandwidth, and the reporting bandwidth is a reference signal bandwidth;
one of the at least one auto-correlation matrix corresponds to one or more of $N^t$ beams, and corresponds to all or a part of the $N^f$ frequency domain units or the $N^f$ delays, and the $N^t$ beams correspond to the $N^t$ antennas;
one of the at least one auto-correlation matrix corresponds to one or more of the $N^f$ frequency domain units, and corresponds to all or a part of the $N^t$ antennas or the $N^t$ beams; or
one of the at least one auto-correlation matrix corresponds to one or more of the $N^f$ delays, and corresponds to all or a part of the $N^t$ antennas or the $N^t$ beams.

19. The method according to claim 18, wherein
the auto-correlation information of the first channel is at least one auto-correlation matrix whose size is $N^s * N^s$, and the auto-correlation information of the second channel is at least one auto-correlation matrix whose size is $N^{s'} * N^{s'}$.

20. The method according to claim 18 or 19, wherein
the first indication information comprises one or more of the following: all elements of one or more of the at least one auto-correlation matrix, elements of an upper triangular part of one or more of the at least one auto-correlation matrix, or elements of a lower triangular part of one or more of the at least one auto-correlation matrix.

21. The method according to claim 17, wherein the cross-correlation information is at least one cross-correlation matrix, wherein

one of the at least one cross-correlation matrix corresponds to one or more of $N^t$ antennas of the network device, and corresponds to all or a part of $N^f$ frequency domain units or $N^f$ delays, and the $N^f$ frequency domain units or the $N^f$ delays correspond to a reporting bandwidth;
one of the at least one cross-correlation matrix corresponds to one or more of $N^t$ beams, and corresponds to all or a part of the $N^f$ frequency domain units or the $N^f$ delays, and the $N^t$ beams correspond to the $N^t$ antennas;
one of the at least one cross-correlation matrix corresponds to one or more of the $N^f$ frequency domain units, and corresponds to all or a part of the $N^t$ antennas or the $N^t$ beams; or
one of the at least one cross-correlation matrix corresponds to one or more of the $N^f$ delays, and corresponds to all or a part of the $N^t$ antennas or the $N^t$ beams.

22. The method according to claim 21, wherein

the cross-correlation information of the first channel and the second channel is at least one cross-correlation matrix whose size is $N^s * N^{s'}$; or
the cross-correlation information of the first channel and the second channel is at least one cross-correlation matrix whose size is $N^{s'} * N^s$.

23. The method according to claim 21 or 22, wherein the first indication information comprises all elements of the at least one cross-correlation matrix.

24. The method according to claim 16, wherein the method further comprises:

determining, by the network device, a second reference signal resource set;
determining, by the network device, a third channel based on the second reference signal resource set, wherein the third channel is a channel corresponding to $N^r$ antennas of the terminal device, the $N^r$ antennas comprise the $N^s$ antennas, the second reference signal resource set comprises $N^r$ reference signal ports, the $N^r$ reference signal ports comprise the $N^s$ reference signal ports, $N^r$ is a positive integer, and $N^r > N^s$; and
determining, by the network device, a correspondence between the $N^r$ reference signal ports and the $N^s$ reference signal ports; and
determining, by the network device, the second channel based on the first channel comprises:
determining, by the network device, the second channel based on the first information and the correspondence.

25. The method according to claim 24, wherein determining, by the network device, the correspondence between the $N^r$

reference signal ports and the $N^s$ reference signal ports comprises:

receiving, by the network device, second indication information from the terminal device, wherein the second indication information indicates the correspondence between the $N^r$ reference signal ports and the $N^s$ reference signal ports.

26. The method according to claim 24, wherein determining, by the network device, the correspondence between the $N^r$ reference signal ports and the $N^s$ reference signal ports comprises:

determining, by the network device, the correspondence in a protocol-predefined manner, wherein the protocol-predefined manner comprises one or more of the following:

determining the correspondence based on indexes of the $N^s$ reference signal ports and indexes of the $N^r$ reference signal ports;
determining the correspondence based on cyclic shifts of reference signals of the $N^s$ reference signal ports and cyclic shifts of reference signals of the $N^r$ reference signal ports; or
determining the correspondence based on a frequency domain resource used to carry reference signals of the $N^s$ reference signal ports and a frequency domain resource used to carry reference signals of the $N^r$ reference signal ports.

27. The method according to any one of claims 16 to 26, wherein the method further comprises:

receiving, by the network device, third indication information from the terminal device, wherein the third indication information indicates one or more of the following information:

a quantity of reference signal resources comprised in the first reference signal resource set; or
a quantity of reference signal ports comprised in each reference signal resource in the first reference signal resource set.

28. The method according to claim 27, wherein $N^s=4$, the terminal device is a 4T8R device, and the third indication information indicates one or more of the following information:

a quantity M of reference signal resources comprised in the first reference signal resource set is equal to 1;
a reference signal resource in the first reference signal resource set comprises four reference signal ports;
a quantity M of reference signal resources comprised in the first reference signal resource set is equal to 2;
two reference signal resources in the first reference signal resource set respectively comprise three reference signal ports and one reference signal port;
two reference signal resources in the first reference signal resource set respectively comprise two reference signal ports and two reference signal ports; or
two reference signal resources in the first reference signal resource set respectively comprise one reference signal port and three reference signal ports.

29. The method according to any one of claims 16 to 28, wherein the method further comprises:

determining, by the network device, a third reference signal resource set, wherein the third reference signal resource set is used to determine the channel corresponding to the $N^r$ antennas of the terminal device, the $N^r$ antennas comprise the $N^s$ antennas, $N^r$ is a positive integer, and $N^r > N^s$;
determining, by the network device based on the third reference signal resource set, the reference signal ports corresponding to the $N^s$ antennas; and
sending, by the network device, fourth indication information to the terminal device, wherein the fourth indication information indicates the reference signal ports corresponding to the $N^s$ antennas.

30. The method according to any one of claims 16 to 29, wherein the method further comprises:

receiving, by the network device, fifth indication information from the terminal device, wherein the fifth indication information indicates one or more of the following information:

virtual terminal devices respectively corresponding to the $N^s$ reference signal ports comprised in the first reference signal resource set;
virtual terminal devices respectively corresponding to $N^{s'}$ reference signal ports other than the $N^s$ reference signal ports comprised in the first reference signal resource set; or
virtual terminal devices respectively corresponding to the $N^r$ reference signal ports comprised in the second reference signal resource set, wherein the second reference signal resource set is used to determine the third channel, and the third channel is the channel corresponding to the $N^r$ antennas of the terminal device.

31. A reference signal transmission method, comprising:

determining, by a terminal device, $N^s$ antennas used to send a first reference signal in $N^r$ antennas, wherein the first reference signal is used to determine a first channel, the first channel is used to determine a third channel, the first channel is a channel corresponding to the $N^s$ antennas and a network device, the third channel is a channel corresponding to the $N^r$ antennas and the network device, both $N^r$ and $N^s$ are positive integers, and $N^s < N^r$; and
sending, by the terminal device, the first reference signal through the $N^s$ antennas.

32. The method according to claim 31, wherein the third channel is determined based on the first channel and a space-domain discrete Fourier transform DFT basis.

33. The method according to claim 31, wherein the third channel is determined based on the first channel and an adaptive feature basis set, the adaptive feature basis set comprises $N^t$ groups of adaptive feature bases that are in one-to-one correspondence with $N^t$ antennas of the network device, or the adaptive feature basis set comprises $N^f$ groups of adaptive feature bases that are in one-to-one correspondence with $N^f$ frequency domain units, the $N^f$ frequency domain units correspond to a reporting bandwidth, a group of adaptive feature bases corresponding to an $(n^t)^{th}$ antenna in the $N^t$ antennas is obtained by the terminal device based on a channel that corresponds to the $(n^t)^{th}$ antenna and the terminal device and that is on the $N^f$ frequency domain units, a group of adaptive feature bases corresponding to an $(n^f)^{th}$ frequency domain unit in the $N^f$ frequency domain units is obtained by the terminal device based on a channel that corresponds to the network device and the terminal device and that is on the $(n^f)^{th}$ frequency domain unit, N, $N^f$, $n^t$, and $n^f$ are all positive integers, $1 \leq n^t \leq N^t$, and $1 \leq n^f \leq N^f$; and
the method further comprises:
sending, by the terminal device, sixth indication information to the network device, wherein the sixth indication information indicates the adaptive feature basis set.

34. The method according to claim 33, wherein the method further comprises:
sending, by the terminal device, seventh indication information to the network device, wherein the seventh indication information indicates $N^s$ rows corresponding to $N^s$ reference signal ports in each adaptive feature basis comprised in the adaptive feature basis set.

35. The method according to claim 34, wherein the $N^s$ rows corresponding to the $N^s$ reference signal ports in each adaptive feature basis comprised in the adaptive feature basis set are first $N^s$ rows of each adaptive feature basis.

36. The method according to claim 34 or 35, wherein the seventh indication information further indicates polarization directions of antennas corresponding to reference signal ports corresponding to different rows in the $N^s$ rows corresponding to the $N^s$ reference signal ports in each adaptive feature basis.

37. The method according to claim 32, wherein determining, by the terminal device, the $N^s$ antennas used to send the first reference signal in the $N^r$ antennas comprises:

determining, by the terminal device, a horizontal direction index of an antenna in an $i^{th}$ polarization direction in the $N^s$ antennas based on a first preset set $\{c_{i,r_{i,1},n,1} = \log_{\alpha_{i,1}} (d_{i,r_{i,1},n,1} - 1) : d_{i,r_{i,1},n,1} \in C_{i,r_{i,1},1}^{S_{i,1},p_{i,1}-1}, d_{i,r_{i,1},n,1} \neq 1\}$, wherein

$C_{i,r_{i,1},1}^{S_{i,1},p_{i,1}-1} = \{d_{i,r_{i,1},n,1} = \alpha_{i,1}^{r_{i,1}} \alpha_{i,1}^{S_{i,1} \cdot n} \bmod p_{i,1} : n = 1, 2, ..., K_{i,1} - 1\}$, $K_{i,1} = \lfloor (p_{i,1} - 1) / S_{i,1} \rfloor$, $\lfloor \ \rfloor$ represents a floor operation, $p_{i,1}$ is a minimum prime number greater than $N_{i,1}^r$, $N_{i,1}^r$ is a quantity of antennas in a horizontal direction in the $i^{th}$ polarization direction in the $N^r$ antennas, $\alpha_{i,1}$ is an original root of $p_{i,1}$, $S_{i,1}$ is a ratio of $N_{i,1}^s$ to $N_{i,1}^r$, $N_{i,1}^s$ is a quantity of antennas in the horizontal direction in the $i^{th}$ polarization direction in the $N^s$ antennas, $r_{i,1}$ is a positive integer, and $0 \leq r_{i,1} < S_{i,1}$; and
determining, by the terminal device, a vertical direction index of the antenna in the $i^{th}$ polarization direction in the $N^s$ antennas based on a second preset set $\{c_{i,r_{i,2},n,2} = \log_{\alpha_{i,2}} (d_{i,r_{i,2},n,2} - 1) : d_{i,r_{i,2},n,2} \in C_{i,r_{i,2},2}^{S_{i,2},p_{i,2}-1}, d_{i,r_{i,2},n,2} \neq 1\}$, wherein

$$C_{i,r_{i,2},2}^{S_{i,2},p_{i,1}2-1} = \{d_{i,r_{i,2},n,2} = \alpha_{i,2}^{r_{i,2}}\alpha_{i,2}^{S_{i,2}\cdot n} \bmod p_{i,2} : n = 1,2,...,K_{i,2}-1\} \quad, \quad K_{i,2} = \lfloor (p_{i,2}-1)/S_{i,2} \rfloor, \, p_{i,2}$$

is a minimum prime number greater than $N_{i,2}^r$, $N_{i,2}^r$ is a quantity of antennas in a vertical direction in the $i$th polarization direction in the N$^r$ antennas, $\alpha_{i,2}$ is an original root of $p_{i,2}$, $S_{i,2}$ is a ratio of $N_{i,2}^s$ to $N_{i,2}^r$, $N_{i,2}^s$ is a quantity of antennas in the vertical direction in the $i$th polarization direction in the N$^s$ antennas, $r_{i,2}$ is a positive integer, and $0 \leq r_{i,2} < S_{i,2}$.

38. The method according to claim 37, wherein the method further comprises:
sending, by the terminal device, eighth indication information to the network device, wherein the eighth indication information indicates at least one of the following: a value of $r_{i,1}$, a value of $r_{i,2}$, or indexes of N$^s$ reference signal ports.

39. The method according to claim 37, wherein the method further comprises:
receiving, by the terminal device, ninth indication information from the network device, wherein the ninth indication information indicates at least one of the following: a value of $r_{i,1}$ or a value of $r_{i,2}$.

40. The method according to any one of claims 32 to 36, wherein the method further comprises:

receiving, by the terminal device, tenth indication information from the network device, wherein the tenth indication information indicates the N$^s$ reference signal ports; and
determining, by the terminal device, the N$^s$ antennas used to send the first reference signal in the N$^r$ antennas comprises:
determining, by the terminal device, the N$^s$ antennas based on the tenth indication information.

41. The method according to any one of claims 32 to 36, wherein determining, by the terminal device, the N$^s$ antennas used to send the first reference signal in the N$^r$ antennas comprises:

receiving, by the terminal device, a downlink reference signal from the network device; and
determining, by the terminal device based on the downlink reference signal, the N$^s$ antennas used to send the first reference signal in the N$^r$ antennas.

42. The method according to claim 41, wherein the method further comprises:
sending, by the terminal device, eleventh indication information to the network device, wherein the eleventh indication information indicates at least one of the following: indexes of the N$^s$ reference signal ports or a direction of arrival.

43. The method according to any one of claims 33 to 36, wherein determining, by the terminal device, the N$^s$ antennas used to send the first reference signal in the N$^r$ antennas comprises:
determining, by the terminal device, that the N$^s$ antennas are antennas corresponding to the N$^s$ reference signal ports corresponding to the first N$^s$ rows of each adaptive feature basis in the adaptive feature basis set.

44. The method according to any one of claims 31 to 43, wherein the method further comprises:
sending, by the terminal device, twelfth indication information to the network device, wherein the twelfth indication information indicates received energy ratios of downlink reference signals received by the terminal device through receive antennas in different polarization directions.

45. A reference signal transmission method, comprising:

receiving, by a network device, a first reference signal from a terminal device, wherein the first reference signal is sent by the terminal device through N$^s$ antennas in N$^r$ antennas;
determining, by the network device, a first channel based on the first reference signal, wherein the first channel is a channel corresponding to the N$^s$ antennas and the network device; and
determining, by the network device, a third channel based on the first channel, wherein the third channel is a channel corresponding to the N$^r$ antennas and the network device, both N$^r$ and N$^s$ are positive integers, and N$^s$<N$^r$.

46. The method according to claim 45, wherein determining, by the network device, the third channel based on the first channel comprises:
determining, by the network device, the third channel based on the first channel and a space-domain discrete Fourier transform DFT basis.

47. The method according to claim 45, wherein the method further comprises:

receiving, by the network device, sixth indication information from the terminal device, wherein the sixth indication information indicates an adaptive feature basis set, the adaptive feature basis set comprises $N^t$ groups of adaptive feature bases that are in one-to-one correspondence with $N^t$ antennas of the network device, or the adaptive feature basis set comprises $N^f$ groups of adaptive feature bases that are in one-to-one correspondence with $N^f$ frequency domain units, the $N^f$ frequency domain units correspond to a reporting bandwidth, a group of adaptive feature bases corresponding to an $(n^t)^{th}$ antenna in the $N^t$ antennas is obtained by the terminal device based on a channel that corresponds to the $(n^t)^{th}$ antenna and the terminal device and that is on the $N^f$ frequency domain units, a group of adaptive feature bases corresponding to an $(n^f)^{th}$ frequency domain unit in the $N^f$ frequency domain units is obtained by the terminal device based on a channel that corresponds to the network device and the terminal device and that is on the $(n^f)^{th}$ frequency domain unit, $N^t$, $N^f$, $n^t$, and $n^f$ are all positive integers, $1 \le n^t \le N^t$, and $1 \le n^f \le N^f$; and
determining, by the network device, the third channel based on the first channel comprises:
determining, by the network device, the third channel based on the first channel and the adaptive feature basis set.

48. The method according to claim 47, wherein the method further comprises:
receiving, by the network device, seventh indication information from the terminal device, wherein the seventh indication information indicates $N^s$ rows corresponding to $N^s$ reference signal ports in each adaptive feature basis comprised in the adaptive feature basis set.

49. The method according to claim 48, wherein the $N^s$ rows corresponding to the $N^s$ reference signal ports in each adaptive feature basis comprised in the adaptive feature basis set are first $N^s$ rows of each adaptive feature basis.

50. The method according to claim 48 or 49, wherein the seventh indication information further indicates polarization directions of antennas corresponding to reference signal ports corresponding to different rows in the $N^s$ rows corresponding to the $N^s$ reference signal ports in each adaptive feature basis.

51. The method according to claim 46, wherein the method further comprises:

determining, by the network device, a horizontal direction index of an antenna in an $i^{th}$ polarization direction in the $N^s$ antennas based on a first preset set $\{c_{i,r_{i,1},n,1} = \log_{\alpha_{i,1}}(d_{i,r_{i,1},n,1} - 1) : d_{i,r_{i,1},n,1} \in C_{i,r_{i,1},1}^{S_{i,1},p_{i,1}-1}, d_{i,r_{i,1},n,1} \ne 1\}$,

wherein $C_{i,r_{i,1},1}^{S_{i,1},p_{i,1}-1} = \{d_{i,r_{i,1},n,1} = \alpha_{i,1}^{r_{i,1}} \alpha_{i,1}^{S_{i,1} \cdot n} \bmod p_{i,1} : n = 1,2,...,K_{i,1}-1\}$, $K_{i,1} = \lfloor (p_{i,1}-1)/S_{i,1} \rfloor$, $\lfloor \, \rfloor$

represents a floor operation, $p_{i,1}$ is a minimum prime number greater than $N_{i,1}^r$, $N_{i,1}^r$ is a quantity of antennas in a horizontal direction in the $i^{th}$ polarization direction in the $N^r$ antennas, $\alpha_{i,1}$ is an original root of $p_{i,1}$, $S_{i,1}$ is a ratio of $N_{i,1}^s$ to $N_{i,1}^r$, $N_{i,1}^s$ is a quantity of antennas in the horizontal direction in the $i^{th}$ polarization direction in the $N^s$ antennas, $r_{i,1}$ is a positive integer, and $0 \le r_{i,1} < S_{i,1}$; and
determining, by the network device, a vertical direction index of the antenna in the $i^{th}$ polarization direction in the $N^s$ antennas based on a second preset set

$$\{c_{i,r_{i,2},n,2} = \log_{\alpha_{i,2}}(d_{i,r_{i,2},n,2} - 1) : d_{i,r_{i,2},n,2} \in C_{i,r_{i,2},2}^{S_{i,2},p_{i,2}-1}, d_{i,r_{i,2},n,2} \ne 1\}, \quad \text{wherein}$$

$$C_{i,r_{i,2},2}^{S_{i,2},p_{i,1}2-1} = \{d_{i,r_{i,2},n,2} = \alpha_{i,2}^{r_{i,2}} \alpha_{i,2}^{S_{i,2} \cdot n} \bmod p_{i,2} : n = 1,2,...,K_{i,2}-1\}, \quad K_{i,2} = \lfloor (p_{i,2}-1)/S_{i,2} \rfloor, \quad p_{i,2}$$

is a minimum prime number greater than $N_{i,2}^r$, $N_{i,2}^r$ is a quantity of antennas in a vertical direction in the $i^{th}$ polarization direction in the $N^r$ antennas, $\alpha_{i,2}$ is an original root of $p_{i,2}$, $S_{i,2}$ is a ratio of $N_{i,2}^s$ to $N_{i,2}^r$, $N_{i,2}^s$ is a quantity of antennas in the vertical direction in the $i^{th}$ polarization direction in the $N^s$ antennas, $r_{i,2}$ is a positive integer, and $0 \le r_{i,2} < S_{i,2}$; and
determining, by the network device, the third channel based on the first channel and the space-domain discrete Fourier transform DFT basis comprises:
determining, by the network device, the third channel based on indexes of the $N^s$ antennas, the first channel, and the space-domain DFT basis.

52. The method according to claim 51, wherein the method further comprises:
receiving, by the network device, eighth indication information sent by the terminal device, wherein the eighth indication information indicates at least one of the following: a value of $r_{i,1}$, a value of $r_{i,2}$, or $N^s$ reference signal ports.

53. The method according to claim 51, wherein the method further comprises:
sending, by the network device, ninth indication information to the terminal device, wherein the ninth indication information indicates at least one of the following: a value of $r_{i,1}$ or a value of $r_{i,2}$.

54. The method according to claim 51, wherein the method further comprises:
sending, by the network device, tenth indication information to the terminal device, wherein the tenth indication information indicates $N^s$ reference signal ports.

55. The method according to claim 46, wherein the method further comprises:

sending, by the network device, a downlink reference signal to the terminal device, wherein the downlink reference signal is used to determine the $N^s$ antennas used to send an uplink reference signal in the $N^r$ antennas;
receiving, by the network device, eleventh indication information from the terminal device, wherein the eleventh indication information indicates at least one of the following: indexes of $N^s$ reference signal ports or the direction of arrival; and
determining, by the network device, the indexes of the $N^s$ reference signal ports based on the eleventh indication information; and
determining, by the network device, the third channel based on the first channel and the space-domain discrete Fourier transform DFT basis comprises:
determining, by the network device, the third channel based on the indexes of the $N^s$ reference signal ports, the first channel, and the space-domain DFT basis.

56. The method according to any one of claims 47 to 50, wherein the method further comprises:
sending, by the network device, a downlink reference signal to the terminal device, wherein the downlink reference signal is used to determine the $N^s$ antennas used to send an uplink reference signal in the $N^r$ antennas.

57. The method according to any one of claims 43 to 56, wherein the method further comprises:

receiving, by the network device, twelfth indication information sent by the terminal device, wherein the twelfth indication information indicates received energy ratios of downlink reference signals received by the terminal device through receive antennas in different polarization directions; and
determining, by the network device, the third channel based on the first channel comprises:
determining, by the network device, the third channel based on the first channel and the received energy ratio.

58. A communication apparatus, comprising a unit or a module configured to perform the method according to any one of claims 1 to 15.

59. A communication apparatus, comprising a unit or a module configured to perform the method according to any one of claims 16 to 30.

60. A communication apparatus, comprising a unit or a module configured to perform the method according to any one of claims 31 to 44.

61. A communication apparatus, comprising a unit or a module configured to perform the method according to any one of claims 45 to 57.

62. A communication system, comprising the communication apparatus according to claim 58 and/or the communication apparatus according to claim 59; or
comprising the communication apparatus according to claim 60 and/or the communication apparatus according to claim 61.

63. A communication apparatus, wherein the communication apparatus comprises a processor and a storage medium, the storage medium stores instructions, and when the instructions are run by the processor, the method according to any one of claims 1 to 15 is implemented, the method according to any one of claims 16 to 30 is implemented, the method according to any one of claims 31 to 44 is implemented, or the method according to any one of claims 45 to 57 is implemented.

64. A computer-readable storage medium, wherein the computer-readable storage medium comprises instructions, and when the instructions are run by a processor, the method according to any one of claims 1 to 15 is implemented, the method according to any one of claims 16 to 30 is implemented, the method according to any one of claims 31 to 44 is implemented, or the method according to any one of claims 45 to 57 is implemented.

65. A computer program product, wherein the computer program product comprises instructions, and when the instructions are run by a processor, the method according to any one of claims 1 to 15 is implemented, the method according to any one of claims 16 to 30 is implemented, the method according to any one of claims 31 to 44 is implemented, or the method according to any one of claims 45 to 57 is implemented.

66. A chip, comprising one or more processing circuits, wherein the one or more processing circuits are configured to implement the method according to any one of claims 1 to 15, the method according to any one of claims 16 to 30, the method according to any one of claims 31 to 44, or the method according to any one of claims 45 to 57.

FIG. 1

200

| Terminal device | | Network device |
|---|---|---|

S210: Determine a first reference signal resource set

S220: Determine a first channel based on the first reference signal resource set

S230a: First indication information

S230b1: Determine a second reference signal resource set

S230b2: Determine a correspondence between $N^s$ reference signal ports and $N^r$ reference signal ports

S240: Determine a second channel based on the first channel

FIG. 2

| First moment | Second moment | Third moment | Fourth moment | Moment |
|---|---|---|---|---|

| Third channel | First channel | First channel | First channel | Third channel |
|---|---|---|---|---|

Second channel estimated for the first time

Second channel estimated for the second time

FIG. 3

400

| Terminal device | | Network device |
|---|---|---|

S410: Determine $N^s$ antennas used to send a first reference signal in $N^r$ antennas

S420: First reference signal

S430: Determine a first channel based on the first reference signal

S440: Determine a third channel based on the first channel

FIG. 4

FIG. 5

Matrix obtained by padding a first channel with zeros

$N^t$

$N^r$

All-zero row

$(n^t)^{th}$ row

Perform row extraction on an adaptive feature basis

Adaptive feature basis

Channel corresponding to an $(n^t)^{th}$ antenna and $N^r$ antennas

FIG. 6

Apparatus 1000

Transceiver unit 1010

Processing unit 1020

Storage unit 1030

FIG. 7

Apparatus 2000

Processor
2010

Memory
2030

Transceiver
2020

FIG. 8

Chip system 3000

Logic circuit 3010

Input/Output interface
3020

FIG. 9

## INTERNATIONAL SEARCH REPORT

| | International application No. |
|---|---|
| | **PCT/CN2023/135132** |

**A. CLASSIFICATION OF SUBJECT MATTER**

H04L 5/00(2006.01)i

According to International Patent Classification (IPC) or to both national classification and IPC

**B. FIELDS SEARCHED**

Minimum documentation searched (classification system followed by classification symbols)

IPC:H04L H04W

Documentation searched other than minimum documentation to the extent that such documents are included in the fields searched

Electronic data base consulted during the international search (name of data base and, where practicable, search terms used)

CNTXT; CNKI; VEN; ENTXT; IEEE; 3GPP: 参考, 信号, 资源, 端口, 集合, 天线, 矩阵, 传输, 传送, 相关, 波束, 指示, 信息, 消息, 符号, RS, reference, signal, resource, configuration, channel, information, port, antenna, transmission, SRS, CSI, TDD, PRB

**C. DOCUMENTS CONSIDERED TO BE RELEVANT**

| Category* | Citation of document, with indication, where appropriate, of the relevant passages | Relevant to claim No. |
|---|---|---|
| X | WO 2020010506 A1 (HUAWEI TECHNOLOGIES CO., LTD.) 16 January 2020 (2020-01-16) description, page 2, line 1 to page 38, line 16, and figures 1-7 | 1-66 |
| A | CN 109150467 A (HUAWEI TECHNOLOGIES CO., LTD.) 04 January 2019 (2019-01-04) entire document | 1-66 |
| A | CN 112703753 A (GUANGDONG OPPO MOBILE TELECOMMUNICATIONS CORP., LTD.) 23 April 2021 (2021-04-23) entire document | 1-66 |
| A | CN 113810090 A (HUAWEI TECHNOLOGIES CO., LTD.) 17 December 2021 (2021-12-17) entire document | 1-66 |
| A | CN 115023917 A (GUANGDONG OPPO MOBILE TELECOMMUNICATIONS CORP., LTD.) 06 September 2022 (2022-09-06) entire document | 1-66 |
| A | WO 2022007967 A1 (HUAWEI TECHNOLOGIES CO., LTD.) 13 January 2022 (2022-01-13) entire document | 1-66 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **05 February 2024** | **28 February 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| International application No. |
| --- |
| **PCT/CN2023/135132** |

| Patent document cited in search report | | | Publication date (day/month/year) | Patent family member(s) | | | Publication date (day/month/year) |
| --- | --- | --- | --- | --- | --- | --- | --- |
| WO | 2020010506 | A1 | 16 January 2020 | None | | | |
| CN | 109150467 | A | 04 January 2019 | WO | 2018228563 | A1 | 20 December 2018 |
| | | | | US | 2019373602 | A1 | 05 December 2019 |
| | | | | US | 11445484 | B2 | 13 September 2022 |
| | | | | EP | 3565170 | A1 | 06 November 2019 |
| | | | | EP | 3565170 | A4 | 08 April 2020 |
| | | | | EP | 3565170 | B1 | 16 February 2022 |
| CN | 112703753 | A | 23 April 2021 | None | | | |
| CN | 113810090 | A | 17 December 2021 | None | | | |
| CN | 115023917 | A | 06 September 2022 | None | | | |
| WO | 2022007967 | A1 | 13 January 2022 | None | | | |

Form PCT/ISA/210 (patent family annex) (July 2022)

**EP 4 629 543 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211729877